# EUROPEAN PATENT SPECIFICATION

(11) **EP 4 066 190 B1**
(45) Date of publication and mention of the grant of the patent: **16.04.2025**
(21) Application number: 20958998.5
(22) Date of filing: 27.10.2020
(51) Int. Cl.: H04L 9/32, H04L 9/40, H04L 9/00

(54) **BLOCKCHAIN SYSTEM HAVING EFFICIENT WORLD STATE DATA STRUCTURES**
BLOCKCHAIN-SYSTEM MIT EFFIZIENTEN WELTZUSTANDSDATENSTRUKTUREN
SYSTÈME DE CHAÎNE DE BLOCS DOTÉ DE STRUCTURES DE DONNÉES D'ÉTATS EN COURS EFFICACES

(43) Date of publication of application: 05.10.2022
(73) Proprietor: Alipay (Hangzhou) Information Technology Co., Ltd., Hangzhou, Zhejiang 310000 (CN)
(72) Inventor: ZHUO, Haizhen, Hangzhou, Zhejiang 310000 (CN)
(74) Representative: Fish & Richardson P.C.
(86) International application number: PCT/CN2020/124066
(87) International publication number: WO 2022/087834

(56) References cited:
- EP-A1- 3 678 346
- WO-A2-2019/120327
- WO-A2-2020/143852
- CN-A- 111 324 613
- US-A1- 2020 202 356
- US-A1- 2020 220 728
- MIZRAHI AVI ET AL: "State Sharding with Space-aware Representations", 2020 IEEE INTERNATIONAL CONFERENCE ON BLOCKCHAIN AND CRYPTOCURRENCY (ICBC), IEEE, 2 May 2020 (2020-05-02), pages 1 - 9, XP033812121, DOI: 10.1109/ICBC48266.2020.9169402

## Description

### TECHNICAL FIELD

This specification relates to blockchain systems having efficient world state data structures.

### BACKGROUND

Distributed ledger systems (DLSs), which can also be referred to as consensus networks, and/or blockchain networks, enable participating entities to securely, and immutably store data. Examples of types of blockchain networks can include public blockchain networks, private blockchain networks, and consortium blockchain networks. A consortium blockchain network is provided for a select group of entities, which control the consensus process, and includes an access control layer.

Blockchain-based programs can be executed by a distributed computing platform. For example, the distributed computing platform can include a virtual machine that provides the runtime environment for executing smart contracts. A blockchain computing platform can be viewed as a transaction-based state machine. State data in the platform can be assembled to a global shared-state referred to as a world state. The world state includes a mapping between account addresses and account states. The world state can be stored in content-addressed tree structures such as the Merkle Patricia tree (MPT).

Content-addressed state trees are incremental in nature. That is, changes of account states are reflected by adding new tree structures instead of updating values of the existing state tree. Therefore, the content-addressed state trees can grow very large in size as new transactions continuously enter into the blockchain. In some DLSs, every node stores an entire copy of the world state, which can take up a large amount of storage space because all block data and state data are stored going back to the first transaction recorded to the blockchain, even if some state data associated with historical blocks are rarely accessed.

Because each blockchain node is responsible for processing the entire blockchain network's transactional load, for a blockchain network with a large amount of nodes, the computational and storage burden of each blockchain node can be very high.

It would be desirable to improve processing of Merkle trees to be faster and more efficient without affecting system performance and data integrity. In accordance with described embodiment, processing of Merkle trees can be improved based on an efficient data structure for processing world states and Merkle trees. Mizrahi et al., "State Sharding with Space-aware Representations", 2 May 2020, describes traffic-aware sharding that can be described in memory-efficient mappings. Existing mapping schemes in common blockchains are surveyed. A tradeoff between the size of the mapping of data to shards and the required transaction processing time is indicated and algorithms for finding memory-light sharding of low cross-shard rate are suggested. The efficiency of the solutions and the required frequency of sharding recomputation based on real transaction information of the Ethereum network are examined. WO 2019/120327 A2 describes methods, systems, and apparatus, including computer programs encoded on computer storage media, for processing blockchain data under a trusted execution environment (TEE). One of the methods includes receiving, by a blockchain node, a request to execute one or more software instructions in a TEE executing on the blockchain node; determining, by a virtual machine in the TEE, data associated with one or more blockchain accounts to execute the one or more software instructions based on the request; traversing, by the virtual machine, a global state of a blockchain stored in the TEE to locate the data; and executing, by the virtual machine, the one or more software instructions based on the data.

### SUMMARY

The invention is defined by the appended claims. Described embodiments of the subject matter can include one or more features, alone or in combination. For example, in one embodiment, a method for processing world state information associated with a blockchain is provided. The method includes providing a plurality of smart contracts associated with a plurality of user accounts, in which each smart contract is associated with a corresponding blockchain managed by a corresponding blockchain network, and blockchain data are stored on the blockchain through consensus of blockchain nodes of the blockchain network. The method includes providing a plurality of digital trees to maintain one or more world states that are associated with the smart contracts and the user accounts, in which each world state stores state data associated with at least one of a user account or a smart contract. A first smart contract among the plurality of smart contracts includes first code that identifies first state data and a first digital tree among the plurality of digital trees for storing the first state data. The method further includes providing a virtual machine associated with the blockchain corresponding to the first smart contract, in which the virtual machine is configured to execute the first smart contract to cause the first state data to be stored in the first digital tree.

**In** some embodiments, the virtual machine can include a smart contract compiler configured to compile the first smart contract into first bytecode that can be executed by the virtual machine, in which the compiler is configured to recognize and compile the first code such that the first bytecode when executed by the virtual machine causes the first state data to be stored in the first digital tree.

In some embodiments, the method can include providing a smart contract compiler configured to compile the first smart contract into first bytecode that can be executed by the virtual machine, in which the compiler is configured to recognize and compile the first code such that the first bytecode when executed by the virtual machine causes the first state data to be stored in the first digital tree.

In some embodiments, the state data identified by the first code can include at least one of (i) data about a state of a user account associated with the first smart contract, or (ii) data about a state of the first smart contract.

In some embodiments, the first smart contract can include second code that identifies second state data and a second digital tree among the plurality of digital trees for storing the second state data. The compiler can be configured to recognize and compile the first code and the second code such that the first bytecode when executed by the virtual machine causes the first state data to be stored in the first digital tree and the second state data to be stored in the second digital tree.

In some embodiments, the first and second digital trees in combination can maintain a world state that is associated with user accounts associated with the first smart contract.

In some embodiments, the first code can specify that state data associated with accounts of users in a first geographical region are to be stored in the first digital tree, and the second code can specify that state data associated with accounts of users in a second geographical region are to be stored in the second digital tree.

In some embodiments, the first smart contract can include third code that identifies third state data and a third digital tree among the plurality of digital trees for storing the third state data. The first, second, and third digital trees in combination can maintain the world state that is associated with user accounts associated with the first smart contract. The compiler can be configured to recognize and compile the first code, the second code, and the third code such that the first bytecode when executed by the virtual machine causes the first state data to be stored in the first digital tree, the second state data to be stored in the second digital tree, and the third state data to be stored in the third digital tree.

In some embodiments, the first, second, and third digital trees in combination can maintain a world state that is associated with user accounts associated with the first smart contract.

In some embodiments, the first code can specify that state data associated with accounts of users in a first geographical region are to be stored in the first digital tree, the second code can specify that state data associated with accounts of users in a second geographical region are to be stored in the second digital tree, and the third code can specify that state data associated with accounts of users in a third geographical region are to be stored in the third digital tree.

In some embodiments, a second smart contract among the plurality of smart contracts can include fourth code that identifies fourth state data and a fourth digital tree among the plurality of digital trees for storing the fourth state data. The first and second smart contracts can be associated with a same blockchain, and the first and fourth digital trees in combination can maintain a world state that stores state data of user accounts associated with the first and second smart contracts. The compiler can be configured to compile the second smart contract into second bytecode. The compiler can be configured to recognize and compile the fourth code such that the second bytecode when executed by the virtual machine causes the fourth state data to be stored in the fourth digital tree.

In some embodiments, the first code can include a first address of the first digital tree, and the compiler can be configured to compile the first smart contract into the first bytecode such that the first bytecode when executed by the virtual machine causes the first state data to be stored in the first digital tree having the first address.

In some embodiments, the first address can be represented by a constant value.

In some embodiments, the first address can be determined by a Boolean function.

In some embodiments, the first address can be determined by a mathematical function.

In some embodiments, the first address can be determined by a rule set that includes one or more rules.

In some embodiments, the first address can be determined at a first time period when the first smart contract is compiled.

In some embodiments, the first address can be determined at a second time period when the first bytecode is executed.

In some embodiments, the second code can include a second address of the second digital tree, and the compiler can be configured to compile the first smart contract into the first bytecode such that the first bytecode when executed by the virtual machine causes the second state data to be stored in the second digital tree having the second address.

In some embodiments, the second address can be represented by a constant value.

In some embodiments, the second address can be determined by a Boolean function.

In some embodiments, the second address can be determined by a mathematical function.

In some embodiments, the second address can be determined by a rule set that includes one or more rules.

In some embodiments, the second address can be determined at a first time period when the second smart contract is compiled.

In some embodiments, the second address can be determined at a second time period when the second bytecode is executed.

In some embodiments, third code can include a third address of the third digital tree, and the compiler can be configured to compile the first smart contract into the first bytecode such that the first bytecode when executed by the virtual machine causes the third state data to be stored in the third digital tree having the third address.

In some embodiments, the fourth code can include a fourth address of the fourth digital tree, and the compiler can be configured to compile the second smart contract into the second bytecode such that the second bytecode when executed by the virtual machine causes the fourth state data to be stored in the fourth digital tree having the fourth address.

In some embodiments, the method can include executing the compiler to generate at least one of the first bytecode or the second bytecode.

In some embodiments, the method can include executing the virtual machine and performing at least one of storing the first state data in the first digital tree, storing the second state data in the second digital tree, storing the third state data in the third digital tree, or storing the fourth state data in the fourth digital tree.

In some embodiments, the method can include: determining a first root hash value of the first digital tree, determining a second root hash value of the second digital tree, and determining a world state root hash value based on the first root hash value and the second root hash value.

In some embodiments, the method can include: determining a third root hash value of the third digital tree, and determining the world state root hash value based on the first root hash value, the second root hash value, and the third root hash value.

In some embodiments, the world state root hash value can represent a digital fingerprint of the state or states of the user accounts, smart contract, or smart contracts associated with the world state.

In some embodiments, the first smart contract can specify that the first digital tree be stored at a first storage device, and the second digital tree be stored at a second storage device.

In some embodiments, the first smart contract can specify that both the first digital tree and the second digital tree be stored at a first storage device.

In some embodiments, the method can include generating an index of the data stored in the first storage device, and storing the index in the first and second digital trees.

In some embodiments, each digital tree can include, e.g., a Merkle tree, a Patricia tree, a Merkle Patricia tree, a modified Merkle Patricia tree, or a Bucket tree.

In another embodiment, a method for processing world state information associated with a blockchain is provided. The method includes: providing a first smart contract that is associated with a blockchain managed by a blockchain network in which blockchain data are stored on the blockchain through consensus of blockchain nodes of the blockchain network; and providing a first Merkle tree and a second Merkle tree to maintain a first world state that is associated with a first set of user accounts, in which the first world state stores data about current states of the first set of user accounts and current states of the first smart contract. The first smart contract includes: first code that specifies first data to be stored in the first Merkle tree, and second code that specifies second data to be stored in the second Merkle tree.

In some embodiments, the first code can specify that data associated with accounts of users in a first geographical region are to be stored in the first Merkle tree, and the second code can specify that data associated with accounts of users in a second geographical region are to be stored in the second Merkle tree.

In some embodiments, the method can include providing a third Merkle tree, in which the first Merkle tree, the second Merkle tree, and the third Merkle tree in combination maintain a world state that is associated with the user accounts. The first smart contract can include: the first code that specifies first data to be stored in the first Merkle tree, the second code that specifies second data to be stored in the second Merkle tree, and third code that specifies third data to be stored in the third Merkle tree.

In some embodiments, the first Merkle tree can have a first address, the second Merkle tree can have a second address, the first code can specify the first data to be stored in a Merkle tree having the first address, and the second code can specify the second data to be stored in a Merkle tree having the second address.

In some embodiments, the method can include providing a virtual machine configured to execute the first smart contract to cause the first data to be stored in the first Merkle tree, and the second data to be stored in the second Merkle tree.

In some embodiments, the method can include providing a compiler configured to compile the first smart contract into bytecodes that can be executed by the virtual machine.

In some embodiments, the compiler can be part of the virtual machine.

In some embodiments, the first smart contract can specify that the first Merkle tree be stored at a first storage device, and the second Merkle tree be stored at a second storage device.

In some embodiments, the first smart contract can specify that both the first Merkle tree and the second Merkle tree be stored at a first storage device.

In some embodiments, the method can include generating an index of the data stored in the first storage device, and storing the index in the first and second Merkle trees.

In some embodiments, the method can include providing a second smart contract that is also associated with the blockchain, in which the second smart contract includes third code that specifies third data to be stored in the first Merkle tree.

In some embodiments, the first Merkle tree cam store state information of user accounts based in a first geographical region, and the second Merkle tree can store state information of user accounts based in a second geographical region.

In some embodiments, the method can include providing a second smart contract that is associated with the blockchain, providing a third Merkle tree to maintain a second world state that stores data about current states of the second smart contract, and determining a world state root hash value based on a first root hash value of the first Merkle tree and a second root hash value of the second Merkle tree.

In another embodiment, a computer-implemented method of processing one or more smart contracts associated with a blockchain is provided. The method includes: receiving a smart contract that is associated with a blockchain managed by a blockchain network in which blockchain data are stored on the blockchain through consensus of blockchain nodes of the blockchain network; identifying first code in the smart contract that specifies first data and a first Merkle tree; identifying second code in the smart contract that specifies second data and a second Merkle tree; storing the first data in the first Merkle tree; and storing the second data in the second Merkle tree.

In some embodiments, the first code can specify that data associated with accounts of users in a first geographical region are to be stored in the first Merkle tree, and the second code can specify that data associated with accounts of users in a second geographical region are to be stored in the second Merkle tree.

In some embodiments, the method can include executing a virtual machine to execute the smart contract to cause the first data to be stored in the first Merkle tree, and the second data to be stored in the second Merkle tree.

In another embodiment, a method for processing world state information associated with a blockchain is provided. The method includes: providing a smart contract that is associated with a blockchain managed by a blockchain network, in which blockchain data are stored on the blockchain through consensus of blockchain nodes of the blockchain network; and providing a plurality of Merkle trees to maintain a world state that is associated with a set of user accounts, in which the world state stores data about current states of the user accounts and current states of the smart contract. The smart contract includes first code that specifies which Merkle tree among the plurality of Merkle trees is used to store a piece of data.

In some embodiments, the first code can include a modifier that includes an identifier of a Merkle tree that is configured to store the piece of data.

In some embodiments, the identifier of the Merkle tree can includes an address of the Merkle tree.

In some embodiments, the identifier of the Merkle tree can includes a variable.

In some embodiments, the identifier can be determined based on a mathematical function.

In some embodiments, the identifier can be determined based on one or more rules.

In some embodiments, the method can include providing a compiler configured to recognize the modifier and compiling the smart contract into bytecode that can be executed by a virtual machine associated with the blockchain.

In some embodiments, the compiler can be part of the virtual machine.

In another embodiment, a system includes: one or more processors; and one or more computer-readable memories coupled to the one or more processors and having instructions stored thereon that are executable by the one or more processors to perform any of the methods described above.

In another embodiment, an apparatus includes a plurality of modules for performing any of the methods described above.

In another embodiment, a system for processing world state information associated with a blockchain is provided. The system includes: a blockchain database configured to store a blockchain that is managed by a blockchain network, in which blockchain data are stored on the blockchain through consensus of blockchain nodes of the blockchain network, and the blockchain includes one or more blocks that store transaction data associated with user accounts associated with the blockchain. The system includes a world state database configured to store a world state data structure comprising a first Merkle tree and a second Merkle tree, in which the world state stores information about states of the user accounts. The system includes a smart contract compiler configured to: receive a smart contract that is associated with the blockchain and the world state data structure, identify first code in the smart contract that specifies first data and the first Merkle tree, identify second code in the smart contract that specifies second data and the second Merkle tree, and compile the smart contract into bytecode. The system includes a virtual machine that is configured to execute the bytecode to cause the virtual machine to store the first data in the first Merkle tree, and store the second data in the second Merkle tree.

In some embodiments, the compiler can be configured to: recognize code in a smart contract, in which the code identifies a piece of data and a Merkle tree from a plurality of Merkle trees; and compile the smart contract code into bytecode such that when the bytecode is executed by the virtual machine causes the virtual machine to store the piece of data in the Merkle tree.

In some embodiments, the compiler can be configured to recognize a constant value in the code of the smart contract, and the constant value represents an address of, or a pointer to, the Merkle tree.

In some embodiments, the compiler can be configured to recognize a variable in the code in the smart contract, and the variable represents an address of, or a pointer to, the Merkle tree.

In some embodiments, the compiler can be configured to recognize the code in the smart contract, and the code includes a function for identifying the Merkle tree.

In some embodiments, the compiler can be configured to recognize the code in the smart contract, and the code includes a rule set for identifying the Merkle tree.

In some embodiments, the first Merkle tree can store state information of user accounts based in a first geographical region, and the second Merkle tree can store state information of user accounts based in a second geographical region.

In some embodiments, the compiler can be part of the virtual machine.

In another embodiment, a system for processing world state information associated with a blockchain is provided. The system includes: a blockchain database configured to store a blockchain that is managed by a blockchain network, in which blockchain data are stored on the blockchain through consensus of blockchain nodes of the blockchain network, and the blockchain includes one or more blocks that store transaction data associated with user accounts associated with the blockchain. The system includes a world state database configured to store a world state data structure comprising a plurality of digital trees, in which the world state stores information about states of the user accounts. The system includes a smart contract database storing a plurality of smart contracts associated with the blockchain, in which a first smart contract among the plurality of smart contracts comprises first code that identifies first state data and a first digital tree among the plurality of digital trees for storing the first state data. The system includes a virtual machine associated with the blockchain corresponding to the first smart contract, in which the virtual machine is configured to execute the first smart contract to causes the first state data to be stored in the first digital tree.

In some embodiments, the virtual machine can include a smart contract compiler configured to compile the first smart contract into first bytecode that can be executed by the virtual machine, in which the compiler is configured to recognize and compile the first code such that the first bytecode when executed by the virtual machine causes the first state data to be stored in the first digital tree.

In some embodiments, the system can include a smart contract compiler configured to compile the first smart contract into first bytecode that can be executed by the virtual machine, in which the compiler is configured to recognize and compile the first code such that the first bytecode when executed by the virtual machine causes the first state data to be stored in the first digital tree.

In some embodiments, the state data identified by the first code can include at least one of (i) data about a state of a user account associated with the first smart contract, or (ii) data about a state of the first smart contract.

In some embodiments, the first smart contract can include second code that identifies second state data and a second digital tree among the plurality of digital trees for storing the second state data. The compiler can be configured to recognize and compile the first code and the second code such that the first bytecode when executed by the virtual machine causes the first state data to be stored in the first digital tree and the second state data to be stored in the second digital tree.

In some embodiments, the first and second digital trees in combination can maintain a world state that is associated with user accounts associated with the first smart contract.

In some embodiments, the first code can specify that state data associated with accounts of users in a first geographical region are to be stored in the first digital tree, and the second code can specify that state data associated with accounts of users in a second geographical region are to be stored in the second digital tree.

In some embodiments, the first smart contract can include third code that identifies third state data and a third digital tree among the plurality of digital trees for storing the third state data. The first, second, and third digital trees in combination can maintain the world state that is associated with user accounts associated with the first smart contract. The compiler can be configured to recognize and compile the first code, the second code, and the third code such that the first bytecode when executed by the virtual machine causes the first state data to be stored in the first digital tree, the second state data to be stored in the second digital tree, and the third state data to be stored in the third digital tree.

In some embodiments, the first, second, and third digital trees in combination can maintain a world state that is associated with user accounts associated with the first smart contract.

In some embodiments, the first code can specify that state data associated with accounts of users in a first geographical region are to be stored in the first digital tree, the second code can specify that state data associated with accounts of users in a second geographical region are to be stored in the second digital tree, and the third code can specify that state data associated with accounts of users in a third geographical region are to be stored in the third digital tree.

In some embodiments, a second smart contract among the plurality of smart contracts can include: fourth code that identifies fourth state data and a fourth digital tree among the plurality of digital trees for storing the fourth state data. The first and second smart contracts can be associated with a same blockchain, and the first and fourth digital trees in combination can maintain a world state that stores state data of user accounts associated with the first and second smart contracts. The compiler can be configured to compile the second smart contract into second bytecode. The compiler can be configured to recognize and compile the fourth code such that the second bytecode when executed by the virtual machine causes the fourth state data to be stored in the fourth digital tree.

In some embodiments, the first code can include a first address of the first digital tree, and the compiler can be configured to compile the first smart contract into the first bytecode such that the first bytecode when executed by the virtual machine causes the first state data to be stored in the first digital tree having the first address.

In some embodiments, the first address can be represented by a constant value.

In some embodiments, the first address can be determined by at least one of a Boolean function or a mathematical function.

In some embodiments, the first address can be determined by a rule set that includes one or more rules.

In some embodiments, the first address can be determined at a first time period when the first smart contract is compiled, or at a second time period when the first bytecode is executed.

In some embodiments, the second code can include a second address of the second digital tree, and the compiler can be configured to compile the first smart contract into the first bytecode such that the first bytecode when executed by the virtual machine causes the second state data to be stored in the second digital tree having the second address.

In some embodiments, the second address can be represented by a constant value.

In some embodiments, the second address can be determined by a Boolean function.

In some embodiments, the second address can be determined by a mathematical function.

In some embodiments, the second address can be determined by a rule set including one or more rules.

In some embodiments, the second address can be determined at a first time period when the second smart contract is compiled.

In some embodiments, the second address can be determined at a second time period when the second bytecode is executed.

In some embodiments, the third code can include a third address of the third digital tree, and the compiler can be configured to compile the first smart contract into the first bytecode such that the first bytecode when executed by the virtual machine causes the third state data to be stored in the third digital tree having the third address.

In some embodiments, the fourth code can include a fourth address of the fourth digital tree, and the compiler can be configured to compile the second smart contract into the second bytecode such that the second bytecode when executed by the virtual machine causes the fourth state data to be stored in the fourth digital tree having the fourth address.

In some embodiments, the system can include one or more computers in one or more locations and configured to: determine a first root hash value of the first digital tree; determine a second root hash value of the second digital tree; and determine a world state root hash value based on the first root hash value and the second root hash value.

In some embodiments, the one or more computers can be configured to: determine a third root hash value of the third digital tree; and determine the world state root hash value based on the first root hash value, the second root hash value, and the third root hash value.

In some embodiments, the world state root hash value can represent a digital fingerprint of the state or states of the user accounts, smart contract, or smart contracts associated with the world state.

In some embodiments, the first smart contract can specify that the first digital tree is stored at a first storage device, and the second digital tree is stored at a second storage device.

In some embodiments, the first smart contract can specify that both the first digital tree and the second digital tree are stored at a first storage device.

In some embodiments, the system includes one or more computers in one or more locations and configured to generate an index of the data stored in the first storage device, and store the index in the first and second digital trees.

In some embodiments, each digital tree can include at least one of a Merkle tree, a Patricia tree, a Merkle Patricia tree, a modified Merkle Patricia tree, or a Bucket tree.

In another embodiment, a computer-implemented method for processing world state information associated with one or more blockchains is provided. The method includes: providing a group world state that includes a plurality of shards, in which each shard includes one or more world states, each world state stores information about states of user accounts associated with the world state, and each shard is associated with a blockchain that includes one or more blocks that store transaction data associated with the user accounts associated with the blockchain. The method includes dynamically modifying a number of shards in the group world state based on one or more criteria, including at least one of (i) partitioning one of the shards into two or more shards, (ii) merging two or more shards into one shard, (iii) adding one or more new shards to the group world state, or (iv) removing one or more shards from the group world state. The method includes generating a root hash value of the group world state, in which the root hash value represents a digital fingerprint of the states of the user accounts associated with the world states in the shards in the group world state.

In some embodiments, these general and specific aspects may be implemented using a system, a method, or a computer program, or any combination of systems, methods, and computer programs. The foregoing and other described embodiments can each, optionally, include one or more of the following aspects:

In some embodiments, dynamically modifying a number of shards in the group world state based on one or more criteria includes partitioning a first shard into a second shard and a third shard, the second shard includes a second subset of world states of the first shard, and the third shard includes a third subset of world states of the first shard.

In some embodiments, dynamically modifying a number of shards in the group world state based on one or more criteria includes merging a second shard and a third shard to generate a first shard, in which the first shard includes one or more world states of the second shard and one or more world states of the third shard.

In some embodiments, dynamically modifying a number of shards in the group world state based on one or more criteria includes adding one or more new shards to the group world state, in which the one or more new shards include one or more world states that were previously not included in the group world state.

In some embodiments, dynamically modifying a number of shards in the group world state based on one or more criteria includes removing one or more shards from the group world state, including removing one or more world states in the removed one or more shards from the group world state.

In some embodiments, the method includes at a system including one or more computers in one or more locations, evaluating the one or more criteria, and partitioning one of the shards into two or more shards upon determining that the one or more criteria are met.

In some embodiments, the method includes at a system including one or more computers in one or more locations, evaluating the one or more criteria, and merging two or more shards into one shard upon determining that the one or more criteria are met.

In some embodiments, the method includes dynamically modifying resources allocated to the group world state based on the number of shards in the group world state.

In some embodiments, the method includes allocating more resources to the group worlds state in response to an increase in the number of shards in the group world state.

In some embodiments, the method includes allocating fewer resources to the group world state in response to a decrease in the number of shards in the group world state.

In some embodiments, the resources include at least one of computation power, memory, data storage capacity, or data bandwidth.

In some embodiments, the one or more criteria include at least one of quality of service measure, computation power requirement, memory requirement, data storage requirement, or data bandwidth requirement.

In some embodiments, the method includes determining at least one of (i) the quality of service measure is below a threshold, (ii) the computation power requirement is not met, (iii) the memory capacity requirement is not met, (iv) the data storage capacity requirement is not met, or (v) the data bandwidth requirement is not met. The method includes, in response to the determination, partitioning one of the shards into two or more shards, and allocating more resources to a combination of the two or more shards, as compared to the resources allocated to the one of the shards, in which the resources include at least one of computation power, memory capacity, data storage capacity, or data bandwidth.

In some embodiments, the method includes determining that at least one of (i) the quality of service measure is above a threshold, (ii) idle or excess computation power is above a threshold, (iii) available memory capacity is above a threshold, (iv) available data storage capacity is above a threshold, or (v) available data bandwidth is above a threshold. The method includes, in response to the determination, merging two or more shards into a single shard, and allocating fewer resources to the single shard after the merging, as compared to the resources allocated to the two or more shards before the merging, in which the resources include at least one of computation power, memory capacity, data storage capacity, or data bandwidth.

In some embodiments, each world state is maintained using a tree-like structure, or a digital tree, which can be, e.g., a Merkle tree, a Patricia tree, a Merkle Patricia tree, a modified Merkle Patricia tree, or a Bucket tree.

In some embodiments, partitioning one of the shards into two or more shards includes partitioning a first shard into a second shard and a third shard, the first shard including a first world state database that includes a first set of world states. The partitioning of the first shard into the second shard and the third shard includes: generating a first snapshot of the first shard, in which the first snapshot includes a snapshot of a first world state database; and trimming the first shard to generate the second shard, including removing one or more world states in the first world state database to generate a second world state database that includes a second subset of one or more world states in the first shard. The method includes trimming the first snapshot of the first shard to generate the third shard, including removing one or more world states in the first world state database to generate a third world state database that includes a third subset of one or more world states in the first shard, in which the third subset of one or more world states is different from the second subset of one or more world states.

In some embodiments, partitioning one of the shards into two or more shards includes partitioning one of the shards into three or more shards.

In some embodiments, merging two or more shards into one shard includes merging a second shard and a third shard into a first shard. The second shard includes a second world state database that includes a second set of world states that store state information associated with a second set of user accounts. The third shard includes a third world state database that includes a third set of world states that store state information associated with a third set of user accounts. The first shard includes a first world state database that includes a first set of world states that includes the second set of world states and the third set of world states, in which the first set of world states stores state information associated with a first set of user accounts that includes the second set of user accounts and the third set of user accounts.

In some embodiments, partitioning one of the shards into two or more shards includes partitioning a first shard into a second shard and a third shard. The first shard is associated with a first set of user accounts, the second shard is associated with a second set of user accounts, and the third shard is associated with a third set of user accounts. The second set of user accounts is a second subset of the first set of user accounts, the third set of user accounts is a third subset of the first set of user accounts, and the third subset of user accounts is different from the second subset of user accounts.

In some embodiments, the method includes associating user accounts with the world states based on a characteristic of the user accounts, in which each user account is associated with only one of the world states.

In some embodiments, the user accounts are associated with the world states based on characteristics of user account identifiers.

In some embodiments, the user accounts are associated with the world states based on predetermined bytes or byte words of the user account identifiers.

In some embodiments, the group world state supports a maximum of 2ⁿ world states, and a user account whose user account identifier has the predetermined bytes or byte words equal to m is associated with the m-th world state, 1 ≤ m ≤ 2ⁿ.

In some embodiments, the group world state supports a maximum of 2¹⁶ = 65,536 world states, and a user account whose user account identifier has the first two byte words equal to m is associated with the m-th world state, 1 ≤ m ≤ 65,536.

In some embodiments, the user accounts are associated with the world states based on priority levels of user accounts.

In some embodiments, the method includes providing a first set of one or more rules that specify one or more conditions for which a number of shards in the group world state is to be increased.

In some embodiments, the method includes providing a second set of one or more rules that specify one or more conditions for which a number of shards in the group world state is to be decreased.

In another embodiment, a computer-implemented method of processing world state information associated with one or more blockchains is provided. The method includes providing a first shard that is associated with a first set of user accounts, in which the first shard includes a first blockchain database and a first world state database. The first blockchain database includes a first blockchain managed by a first blockchain network in which blockchain data are stored on the first blockchain through consensus of blockchain nodes of the first blockchain network. The first world state database includes a plurality of world states, each world state is associated with a plurality of user accounts, and each world state stores current states of the user accounts associated with the world state. The method includes partitioning the first shard into a second shard and a third shard. The partitioning includes generating a first snapshot of the first shard, in which the first snapshot includes a snapshot of the first blockchain database and a snapshot of the first world state database. The partitioning includes trimming the first shard to generate the second shard, including removing one or more world states in the first world state database of the first shard to generate a second world state database that includes a second subset of one or more world states in the first shard. The partitioning includes trimming the first snapshot of the first shard to generate the third shard, including removing one or more world states in the first world state database in the first snapshot to generate a third world state database that includes a third subset of one or more world states in the first shard, in which the third subset of one or more world states is different from the second subset of one or more world states.

In some embodiments, the method includes allocating more resources to a combination of the second shard and the third shard as compared to the resources allocated to the first shard after the partitioning of the first shard into the second shard and the third shard.

In some embodiments, the first world state database is associated with a first set of user accounts, the second world state database is associated with a second set of user accounts, the third world state database is associated with a third set of user accounts, and the first set of user accounts includes a sum of the second set of user accounts and the third set of user accounts.

In some embodiments, the first world state database is associated with a first set of user accounts, the second world state database is associated with a second set of user accounts, the third world state database is associated with a third set of user accounts, and the second set of user accounts does not overlap the third set of user accounts.

In some embodiments, allocating more resources includes allocating more of at least one of computation power, memory, data storage capacity, or data bandwidth.

In some embodiments, generating the snapshot of the first shard includes using a virtual machine associated with the first shard to generate the snapshot of the first shard.

In some embodiments, the consensus blockchain network includes validating peer nodes that participate in a consensus process for determining whether to write data on the blockchain and non-validating peer nodes that do not participate in the consensus process. Generating the snapshot of the first shard includes using the non-validating peer nodes to generate the snapshot.

In some embodiments, the consensus blockchain network includes validating peer nodes that participate in a consensus process for determining whether to write data on the blockchain and non-validating peer nodes that do not participate in the consensus process. Generating the snapshot of the first shard includes increasing a number of validating peer nodes, and using the validating peer nodes to generate the snapshot.

In some embodiments, each world state in the plurality of world states of the first world state database includes a root node. The first blockchain of the first blockchain database includes a first block, the first block includes a block header and a block body, the block header stores a first hash value derived from a hash of hash values of the root nodes of the plurality of world states of the first world state database, and the first hash value represents a digital fingerprint of the current states of the user accounts associated with the plurality of world states of the first world state database.

In some embodiments, each world state in the plurality of world states of the first world state database includes a root node, the first blockchain of the first blockchain database includes a first block, the first block includes a block header and a block body, and the block header stores hash values of the root nodes of the world states in the first world state database.

In some embodiments, the second shard includes a second blockchain database that includes a second blockchain that stores transaction data associated with user accounts that are associated with the second shard. The second blockchain includes a first block, and the first block includes a block body that stores information about transactions. Trimming the first shard includes removing information about transactions associated with user accounts that are not associated with the second subset of the one or more world states in the second world state database.

In some embodiments, the third shard includes a third blockchain database that includes a third blockchain that stores transaction data associated with user accounts that are associated with the third shard. The third blockchain includes a first block, and the first block includes a block body that stores information about transactions. Trimming the first snapshot of the first shard includes removing information about transactions associated with user accounts that are not associated with the third subset of one or more world states in the third world state database.

In some embodiments, the third shard includes a third blockchain database that includes a third blockchain that stores transaction data associated with user accounts that are associated with the third shard. The method includes partitioning the third shard into a fourth shard and a fifth shard. The partitioning includes: generating a second snapshot of the third shard, in which the second snapshot includes a snapshot of the third blockchain database and a snapshot of the third world state database. The partitioning includes trimming the third shard to generate the fourth shard, including removing one or more world states in the third world state database of the third shard to generate a fourth world state database that includes a fourth subset of one or more world states in the third shard. The partitioning includes trimming the second snapshot of the third shard to generate the fifth shard, including removing one or more world states in the third world state database in the second snapshot to generate a fifth world state database that includes a fifth subset of one or more world states in the third shard, in which the fifth subset of the one or more world states is different from the fourth subset of the one or more world states.

In some embodiments, the method includes allocating more resources to a combination of the fourth shard and the fifth shard as compared to the resources allocated to the third shard.

In some embodiments, each world state is maintained using a digital tree including at least one of a Merkle tree, a Patricia tree, a Merkle Patricia tree, a modified Merkle Patricia tree, or a Bucket tree.

In some embodiments, the method includes generating a group world state hash value representing the world states of the first and second shards based on hash values of root nodes of the digital trees maintaining the world states of the first and second shards.

In some embodiments, the method includes generating a simplified payment verification proof of a transaction associated with a user account by generating a first proof based on a path from a root node of a group world state to a root node of a sharding world state, generating a second proof based on a path from the root node of the sharding world state to a root node of a world state associated with the user account, and generating a third proof based on a path from the root node of the world state to a node representing the user account.

In another embodiment, a computer-implemented method of processing world state information associated with one or more blockchains is provided. The method includes: providing a first shard of a blockchain ledger in which the first shard includes a first blockchain database and a first world state database, the first world state database includes a plurality of world states, and each world state stores current states of the user accounts associated with the world state. The method includes generating a first copy of the first shard including a copy of the first blockchain database and a copy of the first world state database. The method includes generating a second shard by removing one or more world states in the first world state database of the first shard, in which a second subset of one or more world states in the first shard remains in the second shard. The method includes generating a third shard by removing one or more world states in the first world state database in the first copy of the first shard, in which a third subset of one or more world states in the first shard remains in the third shard, and the third subset of one or more world states is different from the second subset of one or more world states.

In some embodiments, the method includes allocating more resources to a combination of the second shard and the third shard as compared to the resources allocated to the first shard.

In another embodiment, a computer-implemented method of processing world state information associated with one or more blockchains is provided. The method includes: partitioning a plurality of user accounts into at least a first set of user accounts and a second set of user accounts; and associating a first blockchain database and a first world state database with the first set of user accounts. The first blockchain database includes a first blockchain managed by a first blockchain network in which blockchain data are stored on the first blockchain through consensus of blockchain nodes of the first blockchain network. The first world state database includes a plurality of world states, each world state is associated with a subset of the first set of user accounts, and each world state stores current states of the user accounts associated with the world state. The method includes associating a second blockchain database and a second world state database with the second set of user accounts. The second blockchain database includes a second blockchain managed by a second blockchain network in which blockchain data are stored on the second blockchain through consensus of blockchain nodes of the second blockchain network. The second world state database includes a plurality of world states, each world state is associated with a subset of the second set of user accounts, and each world state stores current states of the user accounts associated with the world state. The method includes generating a first hash value representing a digital fingerprint of the world states of the first world state database, in which the first hash value is generated based on the root hash values of each world state in the first world state database. The method includes generating a second hash value representing a digital fingerprint of the world states of the second world state database, in which the second hash value is generated based on the root hash values of each world state in the second world state database. The method includes at a block header of a first block of the first blockchain, storing the first hash value; at a block header of a first block of the second blockchain, storing the second hash value; and generating a group world state root hash value representing a digital fingerprint of the world states of the first and second world state databases, in which the group world state root hash value is generated based on the first hash value and the second hash value.

In another embodiment, a computer-implemented method of processing world state information associated with one or more blockchains is provided. The method includes: partitioning a plurality of user accounts into at least a first set of user accounts and a second set of user accounts. The method includes associating the first set of user accounts with a first blockchain database and a first world state database, in which the first blockchain database stores transaction data associated with the first set of user accounts, the first world state database includes a plurality of world states, and each world state is associated with a subset of the first set of user accounts. The method includes associating a second set of user accounts with a second blockchain database and a second world state database, in which the second blockchain database stores transaction data associated with the second set of user accounts, the second world state database includes a plurality of world states, and each world state is associated with a subset of the second set of user accounts. The method includes at a block header of a first block of the first blockchain, storing a first hash value that represents a digital fingerprint of the world states in the first world state database. The method includes at a block header of a first block of the second blockchain, storing a second hash value that represents a digital fingerprint of the world states in the second world state database. The method includes generating a group world state root hash value that represents a digital fingerprint of the world states in the first and second world state databases based on the first hash value and the second hash value.

In some embodiments, a computer-implemented method of processing world state information associated with one or more blockchains is provided. The method includes: providing a group world state that includes a plurality of shards, in which each shard includes a world state database. The world state database includes a plurality of world states, each world state stores information about states of user accounts associated with the world state, each shard is associated with a blockchain database that includes a blockchain that includes one or more blocks that store transaction data associated with the user accounts associated with the blockchain. A first shard of the plurality of shards includes a first world state database that includes a first set of world states that store state information about a first set of user accounts. A second shard of the plurality of shards includes a second world state database that includes a second set of world states that store state information about a second set of user accounts. The method includes merging the first shard and the second shard to generate a third shard, including merging the first world state database and the second world state database to generate a third world state database that includes a third set of world states that includes the first set of world states and the second set of world states, in which the third set of world states store state information about the first set of user accounts and the second set of user accounts.

In some embodiments, each world state is maintained using a digital tree, the first set of world states is maintained using a first set of digital trees, the second set of world states is maintained using a second set of digital trees, and the third set of world states is maintained using a third set of digital trees that includes the first set of digital trees and the second set of digital trees.

In some embodiments, each digital tree includes at least one of a Merkle tree, a Patricia tree, a Merkle Patricia tree, a modified Merkle Patricia tree, or a Bucket tree.

In some embodiments, the method includes determining that the first shard was generated by a partition process that includes generating a snapshot of a fourth shard, trimming the fourth shard or the snapshot of the fourth shard to generate the first shard, and waiting for the trimming of the fourth shard or the snapshot of the fourth shard to be completed before merging the first shard and the second shard.

In some embodiments, the method includes allocating fewer resources to the third shard as compared to the resources allocated to a combination of the first shard and the second shard.

In some embodiments, the resources include at least one of computation power, memory, data storage capacity, or data bandwidth.

In some embodiments, the first shard is associated with a first blockchain database that includes a first blockchain that stores transaction data associated with the first set of user accounts, and the second shard is associated with a second blockchain database that includes a second blockchain that stores transaction data associated with the second set of user accounts. The method includes merging the first blockchain database and the second blockchain database to generate a third blockchain database that includes a third blockchain that stores transaction data associated with the first set of user accounts and the second set of user accounts.

In some embodiments, the third blockchain includes a first block that stores information indicating that the third blockchain is generated by merging at least two blockchains.

In some embodiments, the first blockchain database includes a first data structure to facilitate searching of data in the first blockchain, the second blockchain database includes a second data structure to facilitate searching of data in the second blockchain, and the third blockchain database includes the first data structure and the second data structure to facilitate searching of data in the third blockchain database.

In some embodiments, the first blockchain database stores a first root hash value for the first set of world states, the second blockchain database stores a second root hash value for the second set of world states, and the third blockchain database stores a third root hash for the third set of world states.

In another embodiment, a computer-implemented method of processing world state information associated with one or more blockchains is provided. The method includes providing a group world state that includes a plurality of shards, in which each shard includes a world state database. The world state database includes a plurality of world states, each world state stores information about states of user accounts associated with the world state, and each shard is associated with a blockchain database that includes a blockchain that includes one or more blocks that store transaction data associated with the user accounts associated with the blockchain. A first shard of the plurality of shards of the group world state includes a first world state database. The method includes generating an intermediate shard by generating a snapshot of the first shard; removing one or more world states in the first shard to generate a second shard that includes a second subset of one or more world states in the first shard; and removing one or more world states in the intermediate shard to generate a third shard that includes a third subset of one or more world states in the first shard, in which the third subset of one or more world states is different from the second subset of one or more world states.

In some embodiments, the method includes allocating more resources to a combination of the second shard and the third shard as compared to the resources allocated to the first shard.

In another embodiment, a computer-implemented method of processing world state information associated with one or more blockchains is provided. The method includes: providing a group world state that includes a plurality of shards, in which each shard includes one or more world states, each world state stores information about states of user accounts associated with the world state, and each shard is associated with a blockchain that includes one or more blocks that store transaction data associated with the user accounts associated with the blockchain. The method includes dynamically modifying a number of shards in the group world state based on a result of a comparison of consensus processing at a first consensus node and consensus processing at one or more other consensus nodes; and generating a root hash value of the group world state, in which the root hash value represents a digital fingerprint of the states of the user accounts associated with the world states in the shards in the group world state.

In some embodiments, dynamically modifying a number of shards in the group world state includes at least one of (i) partitioning one of the shards into two or more shards, (ii) merging two or more shards into one shard, (iii) adding one or more new shards to the group world state, or (iv) removing one or more shards from the group world state.

In some embodiments, dynamically modifying a number of shards in the group world state includes increasing the number of shards in the group world state if the consensus processing at the first consensus node is slower than the consensus processing at one or more other consensus nodes by a first threshold.

In some embodiments, dynamically modifying a number of shards in the group world state includes decreasing the number of shards in the group world state if the consensus processing at the first consensus node is faster than the consensus processing at one or more other consensus nodes by a second threshold.

In some embodiments, the method includes providing a first set of one or more rules that specify one or more conditions for which the number of shards in the group world state is to be increased.

In some embodiments, the method includes providing a second set of one or more rules that specify one or more conditions for which the number of shards in the group world state is to be decreased.

In some embodiments, the method includes determining a first speed of consensus processing at the first consensus node, and determining a second speed of consensus processing at one or more other consensus nodes. The method includes comparing the first speed of consensus processing at the first consensus node and the second speed of consensus processing at the one or more other consensus nodes; and generating the result of the comparison of the consensus processing at the first consensus node and the consensus processing at the one or more other consensus nodes.

In another embodiment, a system includes: one or more processors; and one or more computer-readable memories coupled to the one or more processors and having instructions stored thereon that are executable by the one or more processors to perform any of the methods described above.

In another embodiment, an apparatus including a plurality of modules for performing any of the methods described above.

In another embodiment, a system for processing world state information associated with one or more blockchains is provided. The system includes: a blockchain-based application module configured to provide a service to users associated with user accounts; and a blockchain ledger including at least one blockchain and a group world state that includes a plurality of shards, in which each shard includes a world state database, the world state database includes a plurality of world states, each world state is configured to store information about states of user accounts associated with the world state, each shard is associated with a blockchain database that includes a blockchain that includes one or more blocks that store transaction data associated with the user accounts associated with the blockchain. The system includes a blockchain ledger modification module configured to dynamically modify a number of shards in the group world state based on one or more criteria, including at least one of (i) partition one of the shards into two or more shards, (ii) merge two or more shards into one shard, (iii) add one or more new shards to the group world state, or (iv) remove one or more shards from the group world state.

In some embodiments, the system includes a root hash generation module configured to generate a root hash value of the group world state based on root hash values of the world states in the group world state.

In some embodiments, the system includes a rule set database including a first set of one or more rules that specify one or more conditions for which a number of shards in the group world state is to be increased.

In some embodiments, the system includes a rule set database including a second set of one or more rules that specify one or more conditions for which a number of shards in the group world state is to be decreased.

In another embodiment, a system for processing world state information associated with one or more blockchains is provided. The system includes: a blockchain-based application module configured to provide a service to users associated with user accounts. The system includes a blockchain ledger including at least one blockchain and a group world state that includes a plurality of shards, in which each shard includes a world state database. The world state database includes a plurality of world states, each world state is configured to store information about states of user accounts associated with the world state, and each shard is associated with a blockchain database that includes a blockchain that includes one or more blocks that store transaction data associated with the user accounts associated with the blockchain. The system includes a blockchain ledger modification module configured to dynamically modify a number of shards in the group world state based on a result of a comparison of consensus processing at the system and consensus processing at one or more other consensus nodes.

In some embodiments, the blockchain ledger modification module is configured to dynamically modify a number of shards in the group world state, including at least one of (i) partitioning one of the shards into two or more shards, (ii) merging two or more shards into one shard, (iii) adding one or more new shards to the group world state, or (iv) removing one or more shards from the group world state.

In some embodiments, the system includes a rule set database including a first set of one or more rules that specify one or more conditions for which a number of shards in the group world state is to be increased.

In some embodiments, the system includes a rule set database including a second set of one or more rules that specify one or more conditions for which a number of shards in the group world state is to be decreased.

It is appreciated that methods in accordance with this specification may include any combination of the aspects and features described herein. That is, methods in accordance with this specification are not limited to the combinations of aspects and features specifically described herein, but also include any combination of the aspects and features provided.

The details of one or more embodiments of this specification are set forth in the accompanying drawings and the description below. Other features and advantages of this specification will be apparent from the description and drawings, and from the claims.

### BRIEF DESCRIPTION OF THE DRAWINGS

FIG. 1 is a diagram illustrating an example of an environment that can be used to execute embodiments of this specification.
FIG. 2 is a diagram illustrating an example of an architecture in accordance with embodiments of this specification.
FIG. 3 is a diagram of a system for providing services to users and storing relevant transaction data and state information in blockchains and world states.
FIG. 4 is a diagram of a group world state design.
FIGS. 5 and 6 are diagrams of examples of sharding expansion processes.
FIGS. 7 and 8 are diagrams of examples of sharding reduction processes.
FIG. 9 is a diagram showing an example of a world state that stores state data for user accounts and smart contracts.
FIG. 10 is a diagram of an example of a smart contract.
FIG. 11 is a diagram of an example of associations of smart contracts and Merkle trees.
FIGS. 12 and 13 are diagrams of examples of smart contracts.
FIG. 14 is a diagram of an example of associations of smart contracts and Merkle trees.
FIGS. 15 to 26 are examples of processes that can be executed in accordance with embodiments of this specification.
FIGS. 27 to 37 are examples of modules of apparatuses in accordance with embodiments of this specification.
FIG. 38 is an example of a process that can be executed in accordance with embodiments of this specification.
FIG. 39 is an example of modules of an apparatus in accordance with embodiments of this specification.
FIG. 40 is a diagram of a system for providing services to users and storing relevant transaction data and state information in a blockchain and a world state.
FIG. 41 is an example of a process that can be executed in accordance with embodiments of this specification.
FIG. 42 is an example of modules of an apparatus in accordance with embodiments of this specification.

Like reference numbers and designations in the various drawings indicate like elements.

### DETAILED DESCRIPTION

This specification describes technologies for implementing a group world state for storing state information of user accounts associated with one or more blockchains that are used to store transactions associated with services provided to users. The group world state includes multiple shards or partitions each storing state information of a subset of the total user accounts. The number of shards or partitions in the group world state can be dynamically increased or decreased according to the computation resources needed to provide high quality service to the users. In some implementations, a consensus node in a blockchain network can dynamically adjust the number of shards or partitions in the group world state to modify the speed of consensus processing based on the current speed of consensus processing relative to other consensus nodes. The adjustments to the shards or partitions of the group world state can be implemented with a short downtime so as to reduce the interruption of the services provided to the users.

For example, the group world state can be used for any blockchain system or application in which the number of users and the number of transactions among the users are large. Examples of such blockchain systems or applications include, and are not limited to, online payment systems, online shopping systems, business-to-business systems, logistics systems, warehouse inventory systems, financial systems, stock exchange systems, systems for implementing distributed identifiers (described in PCT application PCT/CN2020/075272, filed on February 14, 2020), platforms for providing blockchain-based judicial services (described in U.S. application 16/714,455, filed on December 13, 2019), systems for providing blockchain-based standby letter of credit services (described in PCT application PCT/CN2020/074242, filed on February 3, 2020), systems for providing blockchain-based customs clearance services (described in PCT application PCT/CN2020/094951, filed on June 8, 2020), healthcare record systems, import/export processing systems, online education systems, online gaming systems, online travel processing systems, music streaming systems, video streaming systems, online media systems, social media systems, online food ordering systems, ride hailing systems, online transportation processing systems, and cryptocurrency systems.

For example, an online payment system can have hundreds of millions or billions of user accounts, in which billions or trillions of transactions occur each year. The transaction records and user account state information are stored in blockchains and world states. The world state describes the state of the ledger at a given point in time. The world state stores values representing the current state of the user accounts, e.g., how many tokens are available to the user account. As the online payment system grows, the system can add millions of new user accounts each year, and the data stored in the blockchains and world states also grows. For example, the online payment system can initially have a single blockchain and a single world state to store transaction data and user account state information, and a computer server is allocated to support the blockchain and the world state associated with user accounts based in Shanghai, China.

As the number of users in Shanghai grows, the online payment system can partition the blockchain and the world state into two shards. In some examples, an operator can evaluate the computing resources and determine whether to partition the blockchain and world state into two shards. In some examples, the system includes an evaluation module that automatically evaluates the usage of computing resources and determines whether to partition the blockchain and world state into two shards. A first shard of blockchain and world state can store transaction data and user account state information associated with user accounts based in Pudong, and a second shard of blockchain and world state can store transaction data and user account state information associated with user accounts based in Puxi. For example, the system allocates a first computer server to support the first shard of blockchain and world state, and a second computer server to support the second shard of blockchain and world state.

For example, a first group 334 of users may be based on Pudong, and a second group 336 of users may be based on Puxi. The first shard of blockchain and world state can store transaction data and user account state information of the first group 334 of users, and the second shard of blockchain and world state can store transaction data and user account state information of the second group 336 of users.

As the number of user in Shanghai further grows, the online payment system can further partition the blockchain and world state into a number of shards equal to, e.g., the number of districts in Shanghai, in which each shard of blockchain and world state can store transaction data and user account state information associated with user accounts based in a corresponding district in Shanghai. For example, the online payment system allocates multiple computer servers to support the multiple shards of blockchain and world state, in which each computer server supports a respective one of the shards. The computer servers can be physical servers or virtual servers, such as those in a cloud computing system. As the number of user accounts and transactions grow, various computing resources needed by the online payment system also grow. The computing resources may include, e.g., computation power, memory capacity, data storage capacity, and data bandwidth.

For example, an Internet shopping platform can provide services to buyers and sellers located in various countries around the world. Initially, the shopping platform may have users in China, and computer servers located in China can be allocated to support blockchains and world states that store transaction data and user account state information associated with users based in China. The shopping platform may expand to provide services to users based in United States, Japan, and Germany. The shopping platform may partition the blockchains and world states into four shards. A first shard of blockchains and world states is used to store transaction data and user account state information associated with users based in China. A second shard of blockchains and world states is used to store transaction data and user account state information associated with users based in the U.S. A third shard of blockchains and world states is used to store transaction data and user account state information associated with users based in Japan. A first fourth of blockchains and world states is used to store transaction data and user account state information associated with users based in Germany. The shopping platform may allocate computer servers located in China to support the first shard, allocate computer servers located in the U.S. to support the first shard, allocate computer servers located in Japan to support the third shard, and allocate computer servers located in Germany to support the fourth shard.

This specification describes techniques to assist and/or modify blockchain-based systems, such as the online payment system and the online shopping system, to manage the growth in size and complexity of the data structures of the blockchains and world states for storing transaction data and user account state information while maintaining high quality services to the users.

For example, the specification describes techniques to enable dynamic blockchain network data capacity expansion or reduction when blockchain nodes are added or deleted. Sharding, which is a blockchain partitioning technique, can be used for dividing a single logical dataset and storing them in multiple databases. Multiple shardings can be used to horizontally expand the data storage capacity of the blockchain network. A group world state scheme is provided in which a world state tree is generated for each sharding. This design provides low computational complexity and storage space consumption, while maintaining a stable root hash that adapts to the expansion or reduction of blockchain network storage capacity.

For example, the specification describes a new Merkle tree design that does not rely on a one-to-one relationship between a Merkle tree and a smart contract. A smart contract can correspond to multiple Merkle trees, and each smart contract can store a mapping table that records multiple Merkle trees the smart contract can access. The multiple Merkle trees associated with the same smart contract can correspond to the same storage instance, and each Merkle tree can correspond to a unique address. When writing the program code of a smart contract, a modifier can be added before each variable to indicate that the variable is to be stored in a Merkle tree specified by the modifier. The modifier can indicate the unique address of the Merkle tree, which in turn indicates the Merkle tree instance stored in the data storage. Under this tree structure, the programming of the smart contract can be more flexible and the data of the world state can be more efficiently traversed.

The techniques described in this specification produce several technical effects. A blockchain system or application using the group world state technology can have a high quality of service and reliability while using computing resources efficiently. Computing resources (e.g., computation power, memory capacity, data storage capacity, data bandwidth) allocated to the blockchain system or application can be dynamically adjusted (e.g., increased or decreased) depending on the needs of the blockchain system or application. Adjustment of the computing resources can be performed with no, or only a small amount of, interruption to the services provided to the users. A consensus node can dynamically adjust the usage of computing resources to increase or decrease the speed of consensus processing in order to approximately match the consensus processing speeds of the other consensus nodes, thereby using the computing resources more efficiently. The processing speed of smart contracts can be increased. Computing resources allocated to executing smart contracts can be used more efficiently.

The techniques described in this specification can produce further technical effects. For example, a smart contract is not fixedly tied to a single Merkle tree. Rather, a smart contract can be associated with multiple Merkle trees, allowing storage of a larger amount of state data associated with the smart contract. This also enables the storage of the data associated with the smart contract to be more flexible, allowing different types of data having different priority levels to be stored in different Merkle trees, which can have different quality of service levels, allowing the system to provide higher quality service to handling data having higher priority levels. The association between a smart contract and the Merkle trees can be dynamically adjusted.

To provide further context for embodiments of this specification, and as introduced above, distributed ledger systems (DLSs), which can also be referred to as consensus networks (e.g., made up of peer-to-peer nodes), and blockchain networks, enable participating entities to securely, and immutably conduct transactions, and store data. Although the term blockchain is generally associated with particular networks, and/or use cases, blockchain is used herein to generally refer to a DLS without reference to any particular use case.

A blockchain is a data structure that stores transactions in a way that the transactions are immutable. Thus, transactions recorded on a blockchain are reliable and trustworthy. A blockchain includes one or more blocks. Each block in the chain is linked to a previous block immediately before it in the chain by including a cryptographic hash of the previous block. Each block also includes a timestamp, its own cryptographic hash, and one or more transactions. The transactions, which have already been verified by the nodes of the blockchain network, are hashed and encoded into a tree-like data structure, or a digital tree, which can be, e.g., a Merkle tree. A Merkle tree is a data structure in which data at the leaf nodes of the tree is hashed, and all hashes in each branch of the tree are concatenated at the root of the branch. This process continues up the tree to the root of the entire tree, which stores a hash that is representative of all data in the tree. A hash purporting to be of a transaction stored in the tree can be quickly verified by determining whether it is consistent with the structure of the tree.

Whereas a blockchain is a decentralized or at least partially decentralized data structure for storing transactions, a blockchain network is a network of computing nodes that manage, update, and maintain one or more blockchains by broadcasting, verifying and validating transactions, etc. As introduced above, a blockchain network can be provided as a public blockchain network, a private blockchain network, or a consortium blockchain network. Embodiments of this specification are described in further detail herein with reference to a consortium blockchain network. It is contemplated, however, that embodiments of this specification can be realized in any appropriate type of blockchain network.

In general, a consortium blockchain network is private among the participating entities. In a consortium blockchain network, the consensus process is controlled by an authorized set of nodes, which can be referred to as consensus nodes, one or more consensus nodes being operated by a respective entity (e.g., a financial institution, insurance company). For example, a consortium of ten (10) entities (e.g., financial institutions, insurance companies) can operate a consortium blockchain network, each of which operates at least one node in the consortium blockchain network.

In some examples, within a consortium blockchain network, a global blockchain is provided as a blockchain that is replicated across all nodes. That is, all consensus nodes are in perfect state consensus with respect to the global blockchain. To achieve consensus (e.g., agreement to the addition of a block to a blockchain), a consensus protocol is implemented within the consortium blockchain network. For example, the consortium blockchain network can implement a practical Byzantine fault tolerance (PBFT) consensus, described in further detail below.

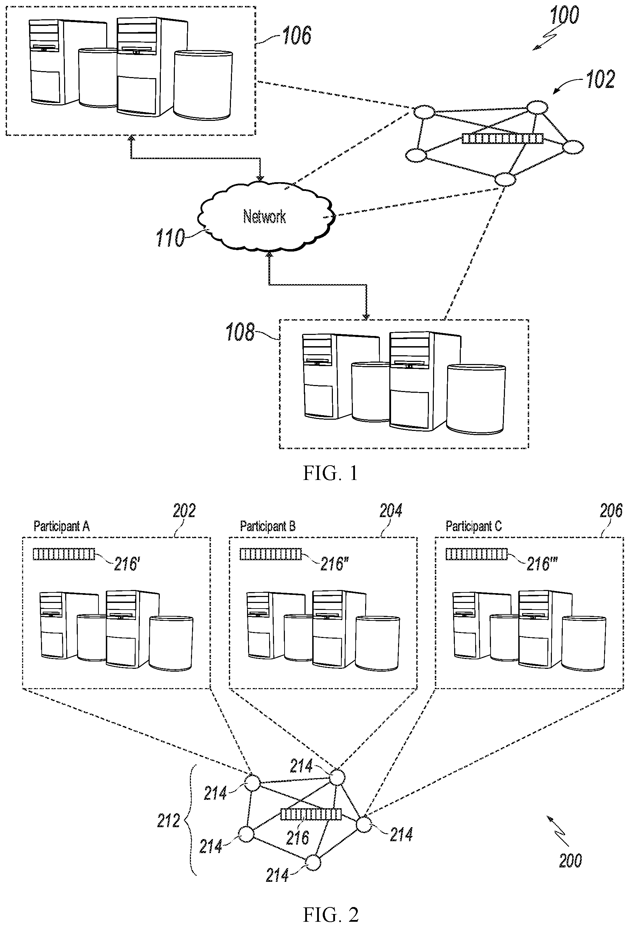

FIG. 1 is a diagram illustrating an example of an environment 100 that can be used to execute embodiments of this specification. In some examples, the environment 100 enables entities to participate in a consortium blockchain network 102. The environment 100 includes computing systems 106, 108, and a network 110. In some examples, the network 110 includes a local area network (LAN), wide area network (WAN), the Internet, or a combination thereof, and connects web sites, user devices (e.g., computing devices), and back-end systems. In some examples, the network 110 can be accessed over a wired and/or a wireless communications link. In some examples, the network 110 enables communication with, and within the consortium blockchain network 102. In general the network 110 represents one or more communication networks. In some cases, the computing systems 106, 108 can be nodes of a cloud computing system (not shown), or each of the computing systems 106, 108 can be a separate cloud computing system including a number of computers interconnected by a network and functioning as a distributed processing system.

In the depicted example, the computing systems 106, 108 can each include any appropriate computing device that enables participation as a node in the consortium blockchain network 102. Examples of computing devices include, without limitation, a server, a desktop computer, a laptop computer, a tablet computing device, and a smartphone. In some examples, the computing systems 106, 108 host one or more computer-implemented services for interacting with the consortium blockchain network 102. For example, the computing system 106 can host computer-implemented services of a first entity (e.g., user A), such as a transaction management system that the first entity uses to manage its transactions with one or more other entities (e.g., other users). The computing system 108 can host computer-implemented services of a second entity (e.g., user B), such as a transaction management system that the second entity uses to manage its transactions with one or more other entities (e.g., other users). In the example of FIG. 1, the consortium blockchain network 102 is represented as a peer-to-peer network of nodes, and the computing systems 106, 108 provide nodes of the first entity, and second entity respectively, which participate in the consortium blockchain network 102.

FIG. 2 depicts an example of an architecture 200 in accordance with embodiments of this specification. The example conceptual architecture 200 includes participant systems 202, 204, 206 that correspond to Participant A, Participant B, and Participant C, respectively. Each participant (e.g., user, enterprise) participates in a blockchain network 212 provided as a peer-to-peer network including a plurality of nodes 214, at least some of which immutably record information in a blockchain 216. Although a single blockchain 216 is schematically depicted within the blockchain network 212, multiple copies of the blockchain 216 are provided, and are maintained across the blockchain network 212, as described in further detail herein.

In the depicted example, each participant system 202, 204, 206 is provided by, or on behalf of Participant A, Participant B, and Participant C, respectively, and functions as a respective node 214 within the blockchain network. As used herein, a node generally refers to an individual system (e.g., computer, server) that is connected to the blockchain network 212, and enables a respective participant to participate in the blockchain network. In the example of FIG. 2, a participant corresponds to each node 214. It is contemplated, however, that a participant can operate multiple nodes 214 within the blockchain network 212, and/or multiple participants can share a node 214. In some examples, the participant systems 202, 204, 206 communicate with, or through the blockchain network 212 using a protocol (e.g., hypertext transfer protocol secure (HTTPS)), and/or using remote procedure calls (RPCs).

Nodes 214 can have varying degrees of participation within the blockchain network 212. For example, some nodes 214 can participate in the consensus process (e.g., as miner nodes that add blocks to the blockchain 216), while other nodes 214 do not participate in the consensus process. As another example, some nodes 214 store a complete copy of the blockchain 216, while other nodes 214 only store copies of portions of the blockchain 216. For example, data access privileges can limit the blockchain data that a respective participant stores within its respective system. In the example of FIG. 2, the participant systems 202, 204, and 206 store respective, complete copies 216', 216'', and 216‴ of the blockchain 216.

A blockchain (e.g., the blockchain 216 of FIG. 2) is made up of a chain of blocks, each block storing data. Examples of data include transaction data representative of a transaction between two or more participants. While transactions are used herein by way of non-limiting example, it is contemplated that any appropriate data can be stored in a blockchain (e.g., documents, images, videos, audio). Examples of a transaction can include, without limitation, exchanges of something of value (e.g., assets, products, services, currency). The transaction data is immutably stored within the blockchain. That is, the transaction data cannot be changed.

Before storing in a block, the transaction data is hashed. Hashing is a process of transforming the transaction data (provided as string data) into a fixed-length hash value (also provided as string data). It is not possible to un-hash the hash value to obtain the transaction data. Hashing ensures that even a slight change in the transaction data results in a completely different hash value. Further, and as noted above, the hash value is of fixed length. That is, no matter the size of the transaction data the length of the hash value is fixed. Hashing includes processing the transaction data through a hash function to generate the hash value. An example of a hash function includes, without limitation, the secure hash algorithm (SHA)-256, which outputs 256-bit hash values.

Transaction data of multiple transactions are hashed and stored in a block. For example, hash values of two transactions are provided, and are themselves hashed to provide another hash. This process is repeated until, for all transactions to be stored in a block, a single hash value is provided. This hash value is referred to as a Merkle root hash, and is stored in a header of the block. A change in any of the transactions will result in change in its hash value, and ultimately, a change in the Merkle root hash.

Blocks are added to the blockchain through a consensus protocol. Multiple nodes within the blockchain network participate in the consensus protocol, and perform work to have a block added to the blockchain. Such nodes are referred to as consensus nodes. PBFT, introduced above, is used as a non-limiting example of a consensus protocol. The consensus nodes execute the consensus protocol to add transactions to the blockchain, and update the overall state of the blockchain network.

In further detail, the consensus node generates a block header, hashes all of the transactions in the block, and combines the hash value in pairs to generate further hash values until a single hash value is provided for all transactions in the block (the Merkle root hash). This hash is added to the block header. The consensus node also determines the hash value of the most recent block in the blockchain (i.e., the last block added to the blockchain). The consensus node also adds a nonce value, and a timestamp to the block header.

In general, PBFT provides a practical Byzantine state machine replication that tolerates Byzantine faults (e.g., malfunctioning nodes, malicious nodes). This is achieved in PBFT by assuming that faults will occur (e.g., assuming the existence of independent node failures, and/or manipulated messages sent by consensus nodes). In PBFT, the consensus nodes are provided in a sequence that includes a primary consensus node, and backup consensus nodes. The primary consensus node is periodically changed. Transactions are added to the blockchain by all consensus nodes within the blockchain network reaching an agreement as to the world state of the blockchain network. In this process, messages are transmitted between consensus nodes, and each consensus nodes proves that a message is received from a specified peer node, and verifies that the message was not modified during transmission.

In PBFT, the consensus protocol is provided in multiple phases with all consensus nodes beginning in the same state. To begin, a client sends a request to the primary consensus node to invoke a service operation (e.g., execute a transaction within the blockchain network). In response to receiving the request, the primary consensus node multicasts the request to the backup consensus nodes. The backup consensus nodes execute the request, and each sends a reply to the client. The client waits until a threshold number of replies are received. In some examples, the client waits for f+1 replies to be received, where f is the maximum number of faulty consensus nodes that can be tolerated within the blockchain network. The final result is that a sufficient number of consensus nodes come to an agreement on the order of the record that is to be added to the blockchain, and the record is either accepted, or rejected.

In some blockchain networks, cryptography is implemented to maintain privacy of transactions. For example, if two nodes want to keep a transaction private, such that other nodes in the blockchain network cannot discern details of the transaction, the nodes can encrypt the transaction data. An example of cryptography includes, without limitation, symmetric encryption, and asymmetric encryption. Symmetric encryption refers to an encryption process that uses a single key for both encryption (generating ciphertext from plaintext), and decryption (generating plaintext from ciphertext). In symmetric encryption, the same key is available to multiple nodes, so each node can en-/de-crypt transaction data.

Asymmetric encryption uses keys pairs that each include a private key, and a public key, the private key being known only to a respective node, and the public key being known to any or all other nodes in the blockchain network. A node can use the public key of another node to encrypt data, and the encrypted data can be decrypted using other node's private key. For example, and referring again to FIG. 2, Participant A can use Participant B's public key to encrypt data, and send the encrypted data to Participant B. Participant B can use its private key to decrypt the encrypted data (ciphertext) and extract the original data (plaintext). Messages encrypted with a node's public key can only be decrypted using the node's private key.

Asymmetric encryption is used to provide digital signatures, which enables participants in a transaction to confirm other participants in the transaction, as well as the validity of the transaction. For example, a node can digitally sign a message, and another node can confirm that the message was sent by the node based on the digital signature of Participant A. Digital signatures can also be used to ensure that messages are not tampered with in transit. For example, and again referencing FIG. 2, Participant A is to send a message to Participant B. Participant A generates a hash of the message, and then, using its private key, encrypts the hash to provide a digital signature as the encrypted hash. Participant A appends the digital signature to the message, and sends the message with digital signature to Participant B. Participant B decrypts the digital signature using the public key of Participant A, and extracts the hash. Participant B hashes the message and compares the hashes. If the hashes are same, Participant B can confirm that the message was indeed from Participant A, and was not tampered with.

Some blockchains systems enable blockchain contracts (also referred to as smart contracts) to be executed through blockchain transactions. Blockchain transactions can be, e.g., signed messages that originate from blockchain accounts, transmitted by the blockchain network, and recorded in the blockchain. The blockchain contracts can be written to achieve various functions, such as adding data to blockchain accounts, and/or changing data in the blockchain. A smart contract is not necessarily related to the classical concept of a contract, but can be any kind of computer program. The blockchain can be maintained and updated by executing various blockchain transactions. In some implementations, when a blockchain transaction involves a blockchain contract, the blockchain nodes can execute the blockchain contract locally in respective virtual machines (VMs). To handle the blockchain contracts, each blockchain node of the blockchain network can execute a corresponding virtual machine and execute the same instructions in the blockchain contract. A virtual machine is a software emulation of a computer system based on computer architectures and provide functionality of a physical computer. Virtual machines in the blockchain context can be understood as a system designed to operate as a runtime environment for blockchain contracts.

A certain blockchain node that successfully mines a proposed new block of blockchain transactions in accordance with consensus rules can pack the new block into its local copy of the blockchain and multicast the results to other blockchain nodes. The certain blockchain node can be a blockchain node that has first successfully completed the verification, obtained a verification privilege, or been chosen based on another consensus rule. The other blockchain nodes can follow the same order of execution performed by the certain blockchain node to locally execute the blockchain transactions in the new block, verify the execution results with one another (e.g., by performing hash calculations), and synchronize their copies of the blockchain with that of the certain blockchain node. By updating their local copies of the blockchain, the other blockchain nodes can similarly write such information in the blockchain transaction into respective local memories. A blockchain contract can be deployed on the blockchain using the method described above.

The deployed blockchain contract can have an address, according to which the deployed contract can be accessed. A blockchain node can invoke the deployed blockchain contract by inputting certain parameters to the blockchain contract. In some embodiments, a user terminal can request to invoke the deployed blockchain contract to perform various operations. For example, data stored in the deployed blockchain contract can be retrieved, data can be added to the deployed blockchain contract, and/or a financial transaction specified in the deployed blockchain contract can be executed.

The invention described in this specification relates to a group world state for storing state data of user accounts associated with one or more blockchains that are used to store transactions associated with services provided to users. The group world state includes one or more shards or partitions, and the system is configured to dynamically adjust the number of shards or partitions to enable efficient use of resources to maintain a high quality of service to the users.

In some implementations, a data structure, such as a modified Merkle Patricia tree, is used to maintain the world state of the user accounts. As the number of users grows, the data structure grows larger, the number of nodes, branches, and paths increases. Processing data stored in the data structure becomes slower, the system becomes less responsive to user requests, and the quality of service decreases. The invention provides a solution to the problem by enabling resources to be dynamically allocated to the data structure or data structures used to maintain the world state or world states for storing state data of the user accounts.

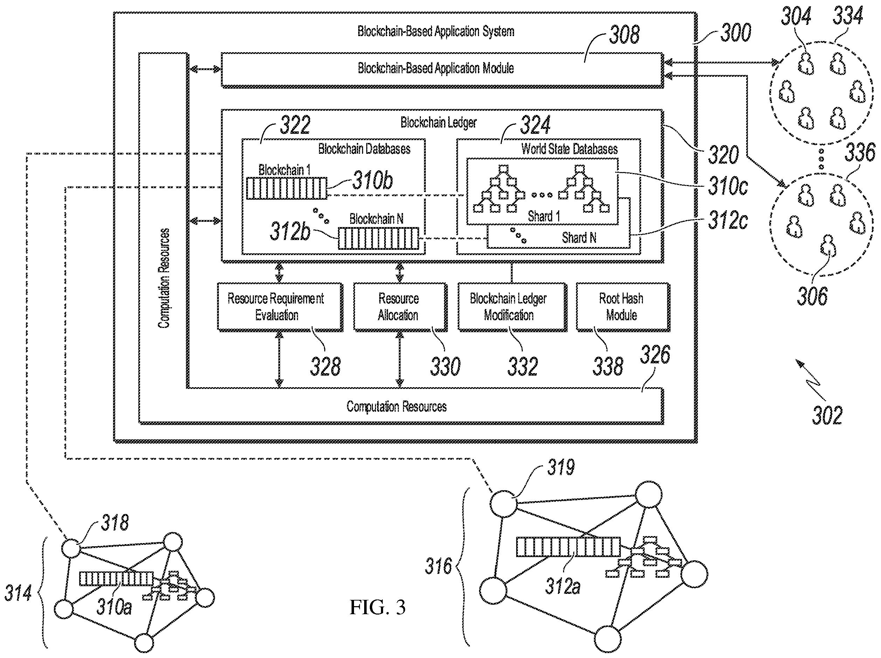

The following describes a technology for implementing a blockchain-based system 300 to allow efficient management of computation resources used to maintain a group world state for storing state information of user accounts associated with one or more blockchains. FIG. 3 shows an example of an environment 302 in which users (e.g., 304 and 306) access services provided by the system 300 through a blockchain-based application module 308. The application module 308 can provide services such as, e.g., online payment services, online shopping services, business-to-business services, logistics services, warehouse inventory services, financial services, stock exchange services, distributed identifiers support services (described in PCT application PCT/CN2020/075272, filed on February 14, 2020), blockchain-based judicial services (described in U.S. application 16/714,455, filed on December 13, 2019), blockchain-based standby letter of credit services (described in PCT application PCT/CN2020/074242, filed on February 3, 2020), blockchain-based customs clearance services (described in PCT application PCT/CN2020/094951, filed on June 8, 2020), healthcare record services, import/export processing services, online education services, online gaming services, online travel processing services, music streaming services, video streaming services, online media services, social media services, online food ordering services, ride hailing services, online transportation processing services, and cryptocurrency services.

The system 300 stores transaction records and user account state information in a distributed blockchain ledger. In general, the blockchain ledger includes two parts. The first part includes the world state, which stores the latest user account state information in the ledger in, e.g., key-value pairs. The second part includes a blockchain record of all the transactions. The blockchain ledger is maintained by a blockchain network, which can be, e.g., a consensus blockchain network described above. The consensus nodes of the blockchain network receive state updates in the form of new blocks, use the blocks and the world state to confirm (or commit) transactions, and upon reaching consensus update the world state and add the log of transactions on the blockchain.

In some implementations, the blockchain ledger is maintained by one or more blockchain networks, e.g., 314, 316. The operations of the blockchain networks are described above in connection with FIGS. 1 and 2. In FIGS. 1 and 2, although the world states are not explicitly shown in the figures, it is understood that the blockchain networks maintain both the blockchains and the corresponding world states.

The system 300 includes a local copy of a blockchain ledger 320 that includes blockchain databases 322 and world state databases 324. There are many ways to implement the blockchain databases and the world state databases. In the example below, we assume that each shard includes one blockchain database and one world state database. Each blockchain database stores one blockchain, and each world state database can store one or more world states. For example, the blockchain databases 322 store local copies of the blockchains maintained by the blockchain networks. The world state databases 324 store local copies of the world states maintained by the blockchain networks.

In general, as the users (e.g., 304 and 306) use the services provided by the blockchain-based application system 300 to conduct transactions, the system 300 generates data, e.g., transaction records and user account state information, that are stored in the distributed blockchain ledger 320. For purpose of illustration, in FIG. 3, the blockchain ledger 320 is shown as having separate blockchain databases 322 and world state databases 324. In some implementations, one or more blockchains and one or more world states can belong to the same databases. One or more blockchains can be associated with one or more world states, and the blockchain networks that maintain the blockchain ledgers update both the blockchains and the corresponding world states.

As described in more detail below, for a given application (e.g., an online payment application or an online shopping application), the transaction data can be stored in one or more blockchains, and state information can be stored in one or more world states. One blockchain can be associated with one or more world states, and one world state can be associated with one or more blockchains. This specification describes novel techniques for partitioning a world state into multiple shards or partitions of world states, and merging multiple shards or partitions of world states into one world state.

In this specification, the term "group world state" is used to refer to a group of world states that in combination store user account state information related to a group of users that use services provided by the blockchain-based system 300. The root hash value of the group world state provides a fingerprint of the most current state values of all the user accounts associated with the group of users.

The system 300 includes computation resources 326, such as computation power (e.g., processor cores, processing threads, CPU run time), memory, non-volatile storage, and/or data bandwidth that support the blockchain-based application module 308. The system 300 includes a resource requirement evaluation module 328 that determines whether the resources allocated to the blockchain-based application module 308 are sufficient to adequately support the processing of the group world state. For example, the evaluation module 328 can determine whether the allocated resources are sufficient based on one or more criteria, such as percentage of total available resource is being used, and/or a quality of service measure. Examples of quality of service measures can include transaction response time, and/or the amount of service outage or downtime. The system 300 includes a resource allocation module 330 that allocates the resources to the application module 308.

For example, initially the system 300 may allocate a certain amount of resource (e.g., memory, non-volatile data storage, and data bandwidth) for supporting the application module 308. Overtime, as the number of users and transactions increase, the evaluation module 328 may determine that the usage percentage of certain resources is above a threshold such that the performance of the application module 308 may be adversely affected if the amount of resources is not increased soon.

The system 300 is configured to partition the blockchain and world state associated with the application module 308 into multiple shards or partitions, and allocate more resources for supporting the blockchains and the world states as the number of shards or partitions increases. Conversely, if the blockchain and world state require fewer resources, such as when some users migrate to other platforms, the system 300 is configured to reduce the number of shards or partitions and allocate fewer resources for supporting the blockchains and world states.

For example, the operator of the system 300 can set up a rule set that includes one or more rules regarding whether to increase or decrease the number of shards or partitions in the group world state. For example, a rule can specify that the number of shards or partitions in the group world state should be increased if the CPU usage reaches *X*1% (e.g., 95%) for more than *Y*1% (e.g., 5%) of the time. For example, a rule can specify that the number of shards or partitions in the group world state should be increased if the storage reaches *Z*1% (e.g., 80%) capacity. For example, a rule can specify that the number of shards or partitions in the group world state should be decreased if the CPU usage consistently remains below *X*2% (e.g., 20%), and the storage is more than *Z*2% (e.g., 50%) empty. In the examples above, *X*1, *X2, Y1, Z*1*,* and *Z*2 are positive real numbers. The rules above are merely examples, other rules can also be used to determine whether to increase or decrease the number of shards or partitions in the group world state. The rule set can be stored in, e.g., a rule set database.

In some implementations, the system 300 includes a blockchain ledger modification module 332 that is configured to modify the blockchain databases 322 and the world state databases 324 by modifying the number of shards or partitions in the blockchains and the world states. The system includes a resource allocation module 330 that allocates the computation resources 326 according to the number of shards or partitions in the blockchains and the world states.

In some implementations, when the number of shards or partitions in the group world states increases, the computation resources 326 allocated to facilitate the processing of the blockchains and the world states can increase, enabling the consensus process to be performed faster. Thus, a consensus node can decide whether to increase or decrease the number of shards or partitions in the group world state based on whether it is advantageous to speed up or slow down the performance of consensus processing. The consensus process can be based on a consensus algorithm, e.g., proof of work (PoW) based consensus algorithm, proof of stake (PoS) based consensus algorithm, delegated Byzantine Fault Tolerant (dBFT) consensus algorithm, or practical Byzantine fault tolerance (pBFT) consensus algorithm.

For example, if a first consensus node (e.g., 318) determines that its consensus processing is consistently slower than the other consensus nodes, the first consensus node can increase the number of shards or partitions in the group world state to increase performance (i.e., increase the speed of consensus processing). Conversely, if the first consensus node determines that it performs consensus processing consistently much faster than the other consensus nodes, the first consensus node can reduce the number of shards or partitions in the group world state to conserve the computation resources (e.g., 326). If the first consensus node determines that it performs consensus processing at approximately the same speed as the other consensus nodes, the number of shards or partitions in the group world state can remain unchanged.

There can be a number of ways for the first consensus node to determine whether its consensus processing is faster or slower than the other consensus nodes. For example, each consensus node can announce the blocks that it has processed. If a first consensus node often receives notices from other consensus nodes indicating that processing of certain blocks have been completed, and the first consensus node has not completed the processing of those blocks, the first consensus node can determine that its consensus processing is performed at a slower speed than the other consensus nodes. For example, each consensus node can announce the highest block number or block height that the consensus node has processed to the other consensus nodes. This way, each of the consensus nodes can know its relative speed of consensus processing by comparing its own highest block number with the highest block numbers of the other consensus nodes. For example, the blockchain system can provide an application programming interface that allows individual consensus nodes to determine the statuses of consensus processing by other consensus nodes. The first consensus node can compare its highest block number with the highest block numbers of the other consensus nodes to determine whether the first consensus node is faster or slower than the other consensus nodes in consensus processing. For example, the blockchain system can continuously monitor the consensus processing by the consensus nodes and provide an application programming interface that allows individual consensus nodes to determine a ranking of the speed of consensus processing among the consensus nodes.

The first consensus node can decide to increase or decrease the number of shards or partitions in the group world state based on a number of criteria, including, e.g., any combination of the following:
- Whether the consensus processing at the first consensus node is ahead of or lagging the average consensus processing of the other consensus nodes.
- Whether the consensus processing at the first consensus node is ahead of or lagging the average consensus processing of the fastest *N*1% of the other consensus nodes, with *N*1 being a positive real number. For example, *N*1% can be 10%, 20%, 50%, or 80%, or any other number,
- Whether the consensus processing at the first consensus node is ahead of or lagging the average consensus processing of the other consensus nodes by more than a time threshold *T*1, with *T*1 being a positive real number. For example, *T*1 can be an hour, a day, a week, a month, or any other time duration.
- Whether the consensus processing at the first consensus node is ahead of or lagging the average consensus processing of the other consensus nodes for a predetermined period of time *T*2 (e.g., a day, a week, or a month) for more than *N2* cycles, with *T*2 being a positive real number, *N*2 being a positive integer. For example, the first consensus node evaluates whether its consensus processing is ahead of or lagging the other consensus nodes each day, week, or month, and determines whether the being ahead or lagging is occurring for more than 10 consecutive days, weeks, or months.
- Whether the consensus processing at the first consensus node is ahead of or lagging the other consensus nodes for more than a threshold number *N*3 of transactions for a predetermined period of time *T*3, with *N*3 being a positive integer and *T*3 being a positive real number.

The operator of the first consensus node can set up a rule set that includes one or more rules regarding whether to increase or decrease the number of shards or partitions in the group world state. For example, a first rule can specify that the number of shards or partitions in the group world state should be increased if the consensus processing at the first consensus node is slower than the consensus processing at one or more other consensus nodes by a first threshold. For example, a second rule can specify that the number of shards or partitions in the group world state should be decreased if the consensus processing at the first consensus node is faster than the consensus processing at one or more other consensus nodes by a second threshold. For example, a third rule can specify that the number of shards or partitions in the group world state should be increased if the consensus processing at the first consensus node lags the average consensus processing of the fastest P1% (e.g., 10%) of the other consensus nodes by more than *T*4 (e.g., 1) minute for more than Q1% (e.g., 50%) of the transactions per unit time *T*5 (e.g., week) for consecutive N4 (e.g., four) units of time *T*5 (e.g., weeks), with *P*1, *T*4*, Q*1, and *T*5 being positive real numbers, and *N*4 being a positive integer. For example, a fourth rule can specify that the number of shards or partitions in the group world state should be increased if the consensus processing at the first consensus node lags the average consensus processing of the average of the other consensus nodes by more than a predetermined period of time T6 (e.g., 1 hour) for more than Q2% (e.g., 50%) of the transactions during a period of time T7 (e.g., one week), with T6, Q2, and T7 being positive real numbers. The above rules are merely examples, other rules, or other combination of rules, can also be used to determine whether to maintain the same, increase, or decrease the number of shards or partitions in the group world state. The rule set can be stored in, e.g., a rule set database.

The blockchains and world states (e.g., 310a and 312a) are maintained by blockchain networks (e.g., 314, 316). The system 300 functions as a node (e.g., 318, 319) among the nodes of the blockchain networks and maintains local copies of the blockchains and world states (e.g., 310b, 312b, 310c, 312c), which are stored in the blockchain databases 322 and the world state databases 324. The blockchain networks 314, 316 can be similar to the blockchain network 212 of FIG. 2. Some of the nodes of the blockchain network 314 may overlap the nodes of the blockchain network 316.

The system 300 includes a root hash module 338 that is configured to calculate the root hash of the world states (e.g., 310c, 312c) that represents a fingerprint of the of the most current state values of all the user accounts associated with the system 300. In this example, the group world state may have N shards, and each shard may have multiple world states. The root hash module 338 first calculates, for each shard, the root hash of the sharding world state based on the root hash values of each world state in the shard. The root hash of the sharding world state represents a fingerprint of the world states within the shard. The root hash module 338 then calculates the root hash of the group world state based on the N number of root hash values of the sharding world states.

The world state associated with a blockchain stores state information of user accounts associated with the blockchain. A blockchain can be partitioned into multiple (e.g., N) shards to enhance processing efficiency. A group world state stores the state information of all the user accounts associated with all the shards of the blockchain. The group world state is also partitioned into the same number of shards (e.g., N) as the blockchain. In this example, each shard of blockchain is associated with a sharding world state that stores state information of user accounts associated with the shard of blockchain. Each sharding world state can include multiple world states, and each world state stores state information for a subset of user accounts.

In some implementations, the user accounts are allocated to the world states using a predetermined allocation method. When the shards of the blockchain and group world state are expanded or reduced, the number of shards changes, but the total number of world states remains the same. For example, suppose the user accounts are allocated to 16 world states (referred to as world states 1 to 16) based on the first 4 bits of the user account identifier. Suppose at a first time point t1 there are two shards of blockchain and two sharding world states, e.g., sharding world state 1 and sharding world state 2. Sharding world state 1 includes world states 1 to 6, and sharding world state 2 includes world staes 7 to 16. Suppose at a second time point t2 sharding world state 2 is partitioned into two sharding world states, e.g., sharding world state 2 and sharding world state 3. Suppose sharding world state 2 includes world states 7 to 10, and sharding world state 3 includes world states 11 to 16. In this example, the user accounts associated with each individual world state remain the same (because it is based on the first 4 bits of the user account identifier) after the number of sharding world states is increased or decreased.

The group world state data structure is designed to enable state information of all user accounts to be stored and processed in an efficient manner. For example, there are two ways to design the group world state data structure. In a first design, the group world state is maintained by a digital tree structure in which each leaf node corresponds to a sharding world state root node. The leaf node stores the sharding world state root hash value. The group world state root hash value is calculated based on the sharding world state root hash values. This design has the advantage that the implementation is simple, the required data storage size is small, and the computation required for processing the world state information is low. The group world state root hash is calculated based on the sharding world state root hash values. When the shards are expanded or reduced, the user accounts associated with each sharding world state may change, the sharding world state root hash values may change, and the group world state root hash value may also change.

In a second design, the group world state is maintained by a digital tree structure in which every leaf node of the group world state corresponds to a sharding world state, and each leaf node records the root hash values of the world states in the shard. The group world state root hash value is calculated based on the root hash values of the world states (not the sharding world state root hash values). In this example, when the shards of the blockchain are expanded or reduced, the root hash of the group world state remains stable and does not change. The root hash of the group world state reflects the states of all the user accounts. If the states of the user accounts do not change, then the root hash of the group world state does not change, regardless of the changes in how the various world states are allocated to the various shards. In this design, the storage capacity required to store the world state information is greater (e.g., each leaf node needs to store information about all the world states in the shard), the computation required for processing the world state information is greater, and the implementaion is more complicated (compared to the first design).

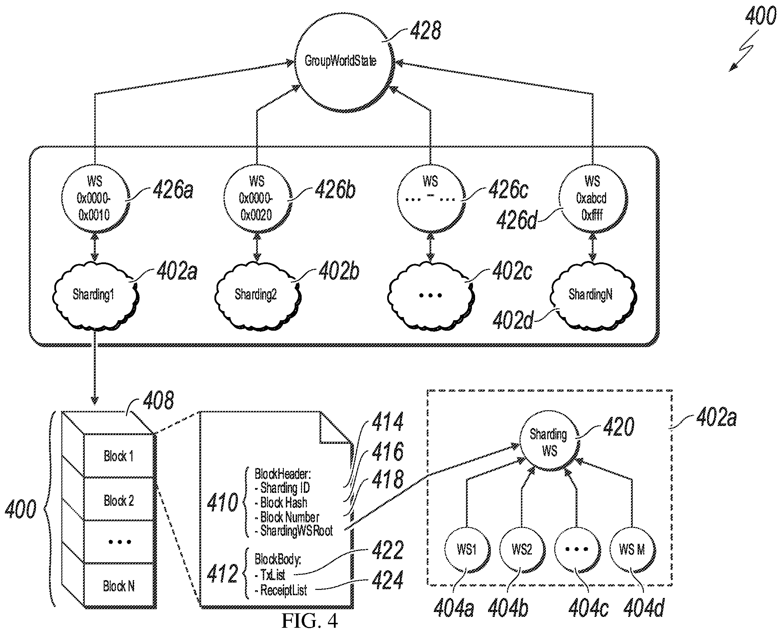

In the following, we describe implementations of the group world state using the first design. In some implementations, a blockchain is partitioned into N shards, and each shard has a corresponding sharding world state that stores state information of the user accounts associated with the shard. FIG. 4 is a diagram of an example of a data structure for a group world state 400 for storing the state information of all the user accounts being considered, e.g., all the user accounts associated with the blockchain-based application module 308. In this example, the group world state is partitioned into N shards, e.g., 402a, 402b, 402c, and 402d, collectively referenced as 402. Each shard of the group world state is referred to as a "sharding world state." Each sharding world state stores state information of a subset of all the user accounts being considered. For example, all user accounts being considered can include all user accounts that are associated with an online payment system, and the user accounts are located in a particular country, state, province, or city. The group world state support multiple world states, in which each world state stores state information of a subset of the user accounts. For example, the user accounts can be allocated to the world states based on the first predetermined number of byte words of the user account identifiers.

The number of shards can be less than the number of world states. For example, there can be initially a smaller number of shards, and each shard may include a larger number of world states. Over time, as the amount of data stored in each world state increases, the number of shards may be increased, each shard may include a smaller number of world states, so that the total amount of data managed in each shard does not exceed capacity.

In the example of FIG. 4, the sharding world state 402a includes M world states, e.g., 404a, 404b, 404c, 404d, collectively referenced as 404. Each world state 404 is maintained using a binary tree, such as a Merkle tree. Each root node of the world state 404 can be used to establish a binary tree for maintaining the sharding world state. For example, the root nodes of the world states 404 become the leaf nodes of the binary tree for the sharding world state 402a. Each root node of the sharding world state 402 can be used to establish a binary tree for maintaining the group world state 400. For example, the root nodes of the sharding world states 402 become the leaf nodes of the binary tree for the group world state 400. In some implementations, each world state can be maintained using, e.g., a Patricia tree, a Merkle Patricia tree, a modified Merkle Patricia tree, or a Bucket tree.

Each sharding world state 402 is associated with a blockchain 406, which can include multiple blocks 408. The sharding world state 402 stores state information of user accounts associated with the blockchain 406. In some implementations, each block 408 in the blockchain 406 includes a block header 410 and a block body 412. The block body 412 includes, e.g., a transaction list 422 and a recipient list 424. The block header 410 includes, e.g., a sharding identifier 414, a block hash value 416, a block number 418, and a sharding world state root hash value 420. The sharding world state root hash value 420 is calculated based on the root hash values of the world states included in the shard. In this example, the sharding world state 402a includes M world states (e.g., 404a, 404b, 404c, 404d), so the sharding world state root hash value 420 is calculated based on the root hash values of the M world states (e.g., 404a, 404b, 404c, 404d).

In the example of FIG. 4, the user accounts are allocated to the sharding world states based on the first two byte words of the user account identifier. For example, if the first two byte words of the user account identifier is in the range of 0x0000 to 0x0010, the state information of the user account is stored in the first sharding world state 402a. If the user account identifier is in the range of 0x0010 to 0x0020, the state information of user account is stored in the second sharding world state 402b. If the user identifier is in the range of 0xABCD to 0xFFFF, the user account is allocated to the N-th sharding world state 402d.

The node 426a represents the root node of the sharding world state 402a and stores a root hash value for the sharding world state 402a, in which the sharding world state root hash value represents a fingerprint of the state information of the user accounts associated with the sharding world state 402a. The node 426b represents the root node of the sharding world state 402b and stores a root hash value for the sharding world state 402b, in which the sharding world state root hash value represents a fingerprint of the state information of the user accounts associated with the sharding world state 402b. The node 426d represents the root node of the sharding world state 402d and stores a root hash value for the sharding world state 402d, in which the sharding world state root hash value represents a fingerprint of the state information of the user accounts associated with the sharding world state 402d.

A node 428 represents the root node of the group world state 400 and stores a root hash value for the group world state 400, in which the group world state root hash value represents a fingerprint of the state information of the user accounts associated with the group world state 400. The user accounts associated with the group world state 400 include the user accounts associated with all of the sharding world states 402. The group world state root hash value is calculated based on the sharding world state root hash values of all the sharding world states 402. The node 428 stores information about all the shards 402 of the group world state 400. For example, the node 428 can store the addresses of (or links or pointers to) the root nodes 426 of the shards 402. In some examples, a group world state mapping table is established to store information about the addresses of the root node 428 of the group world state 400 and the root nodes 426 of all the shards 402.

In some implementations, the user account identifiers can be represented by numbers, and the first two byte words of the user account identifiers range from 0x0000 to 0xFFFF. For example, the user accounts can be allocated to the sharding world states based on the first two byte words of the user account identifier. In this example, the group world state can support a maximum of 2¹⁶ = 65,536 sharding world states. If each sharding world state corresponds to one shard of blockchain, then the group world state 402 can support up to 65,536 blockchain shards.

In some implementations, the user accounts can be allocated to the sharding world states based on the first three byte words (which includes 24 bits) of the user account identifiers. In this example, the group world state can support up to 2²⁴ = 16,777,216 sharding world states. If each sharding world state corresponds to one shard of blockchain, then the group world state can support up to 16,777,216 blockchain shards. If additional sharding world states are needed, the first four or more byte words of the user account identifiers can be used for allocating the user accounts to the sharding world states. In the examples below, we assume that the user accounts are allocated to the sharding world states based on the first two byte words of the user identifier.

Typically, the system does not need to use the maximum number of shards that can be supported. For example, when the user accounts are allocated to the sharding world states based on the first two byte words of the user account identifiers, the group world state can support a maximum of 65,536 sharding world states and up to 65,536 blockchain shards. In this example, the system typically uses less than 65,536 shards of blockchains. Thus, each shard includes multiple world states (e.g., M world states). In some implementations, the rules for specifying the number of world states in a shard and/or which world states belong to the shard can be recorded in the block header or block body. For example, the smart contract associated with the blockchain can store the rules for specifying the number of world states in a shard and/or which world states belong to the shard. For example, the number of world states in a shard or which world states belong to the shard can be determined by traversing the digital tree (e.g., Merkle tree) of the sharding world state.

For example, even though the group world state can support 65,536 sharding world states, the system may use a smaller number of sharding world states. In the example of FIG. 4, the user accounts are allocated to the sharding world states based on the first two byte words of the user account identifier. As described above, if the first two byte words of the user account identifier is in the range of 0x0000 to 0x0010, the state information of the user account is stored in the first sharding world state 402a. If the user account identifier is in the range of 0x0010 to 0x0020, the state information of user account is stored in the second sharding world state 402b. If the user identifier is in the range of 0xABCD to 0xFFFF, the user account is allocated to the N-th sharding world state 402d. Other methods of allocating particular user accounts to particular world states can also be used.

For example, each user account information can include a unique identifier specifically used to determine which world state the user account is allocated to. For example, the system can also assign attributes to users, such as priority levels, and assign different priority levels to different shards. For example, user accounts having a higher priority level can be assigned to a first shard that has better quality of service and/or faster processing time, which may also incur a higher service fee. User accounts having a lower priority level can be assigned to a second shard that has lower quality of service and/or slower processing time, which may incur a lower service fee.

The following describes simplified payment verification proof of a transaction in a system that uses a group world state. In a blockchain based system, when a node receives a new transaction, the node validates the transaction, including verifying that none of the transaction's inputs have been previously spent. To carry out that check the node accesses the blockchain. The node can keep a full local copy of the blockchain, so that any input can be verified. It is also possible to verify transactions without running a full network node. This is referred to as simplified payment verification or SPV. Simplified payment verification allows a lightweight client to verify that a transaction is included in a blockchain without having to download the entire blockchain. The SPV client downloads the block headers that are much smaller than the full blocks. Each block header includes a hash of all the transactions within that block, structured in such a way to enable easy verification regarding whether a transaction belongs to the block by considering its hash value. To verify that a transaction is in the block, the SPV client requests a proof of inclusion, in the form of a Merkle branch linking the transaction to the block.

With the use of a group world state that includes multiple shards, in which each shard includes multiple world states, generating a simplified payment verification proof may require an additional SPV proof from the sharding world state to the world state, as compared to generating an SPV proof when a single blockchain without sharding is used. If we do not consider expanding or reducing capacity of the group world state through modification of the sharding scheme, the group world state can be recorded in a particular sharding, in which the group world state records the world state of every sharding at a particular time point. When it is necessary to provide an SPV proof to an outside node, the SPV proof message can include three parts:
- The SPV proof from the group world stateto the sharding world state;
- The SPV proof from the sharding world state to the corresponding world state; and
- The SPV proof from the world stateto the correspnding user account.

The following describes processes for expanding or reducing the capacity of the shards of the group world state. In some examples, each shard is allocated a given amount of resources, such as storage capacity or computing power, and the amount of resources for supporting a group world state can be increased by increasing the number of shards.

In some implementations, a blockchain ledger includes three databases: a blockchain database (e.g., BlockDB), a world state database (e.g., StateDB), and a miscellaneous database (e.g., ExtraDB). The blockchain database stores blockchains, the world state database stores world states, and the miscellaneous database stores miscellaneous data. The blockchain ledger can also include other databases, such as RelatedDB and Consensus databases in Mychain blockchain, which can be processed in a manner similar to the miscellaneous database (ExtraDB).

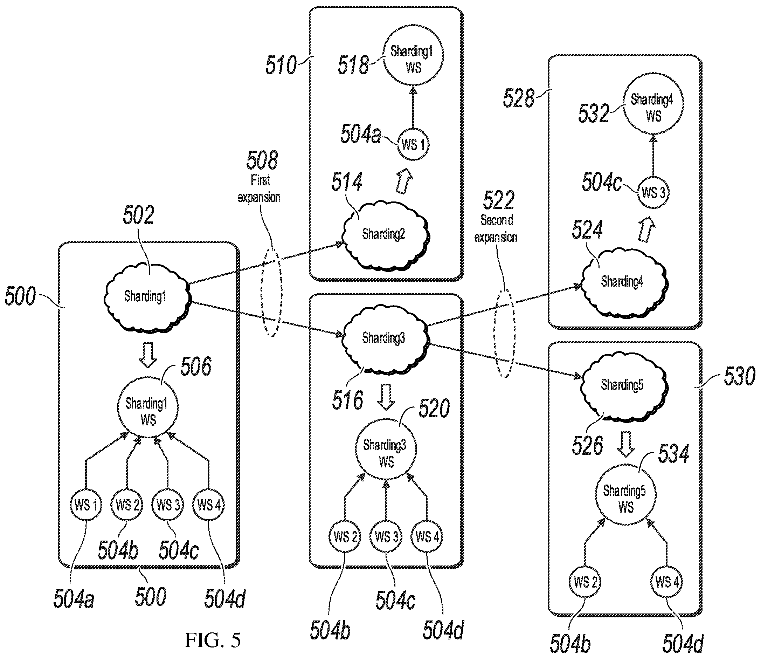

The following describes a process for expansion of the group world state, including expanding the sharding of a blockchain ledger, in which the number of shards is increased. Referring to FIG. 5, for example, a first shard 500 is partitioned into a second shard 510 and a third shard 512 in a first expansion operation 508. Next, the third shard 512 is partitioned into a fourth shard 528 and a third shard 530 in a second expansion operation 522.

The following describes the expansion of the sharding of the world state data structure to increase the number of sharding world states. In some implementations, an expansion of a first sharding world state 502 is achieved by partitioning the first sharding world state 502 into a second sharding world state 514 and a third sharding world state 516. For example, the first shard 500 initially includes four world states 504a, 504b, 504c, and 504d. A node 506 corresponds to the root node of the sharding world state 502. The root hash value of the sharding world state 502 is calculated based on the root hash values of the world states 504a, 504b, 504c, and 504d. After the first expansion 508, the second sharding world state 514 includes the world state 504a. A node 518 corresonds to the root node of the sharding world state 514. The root hash value of the sharding world state 514 is calculated based on the root hash value of the world state 504a. The third sharding world state 516 includes the world states 504b, 504c, 504d. A node 520 corresonds to the root node of the sharding world state 516. The root hash value of the sharding world state 516 is calculated based on the root hash values of the world states 504b, 504c, 504d.

Initially, when the first sharding world state 502 is part of the group world state 400, the root node 428 stores the address of (or link or pointer to) the root node 506 of the first sharding world state 502. In some examples, after the first sharding world state 502 is partitioned into the second sharding world state 514 and the third sharding world state 516, the system 300 configures the root node 428 of the group world state 400 to remove the address of the root node 506 of the first sharding world state 502, and store the address of the root node 518 of the second sharding world state 514 and the root node 520 of the third sharding world state 516. In some examples, the group world state mapping table is updated to remove the address of the root node 506 and add the addresses of the root nodes 518 and 520.

After a second expansion of the shards 522, the third sharding world state 516 is partitioned into a fourth sharding world state 524 (shown in diagram 528) and a fifth sharding world state 526 (shown in diagram 530). The fourth sharding world state 524 includes the world state 504c. A node 532 corresponds to the root node of the sharding world state 524. The root hash value of the sharding world state 524 is calculated based on the root hash value of the world state 504c. The fifth sharding world state 526 includes the world states 504b and 504d. A node 534 corresonds to the root node of the sharding world state 526. The root hash value of the sharding world state 526 is calculated based on the root hash values of the world states 504b and 504d.

In some examples, the system 300 configures the root node 428 of the group world state 400 to remove the address of the root node 520 of the third sharding world state 516, and store the address of the root node 532 of the fourth sharding world state 524 and the root node 534 of the fifth sharding world state 526. In some examples, the group world state mapping table is updated to remove the address of the root node 520 and add the addresses of the root nodes 532 and 534.

In general, after each expansion of the shards in which a pre-partition sharding world state is partitioned into two new sharding world states, the root node of the group world state is updated to remove the address of the root node of the pre-partition sharding world state and add the addresses of the root nodes of the new sharding world states. Alternatively, the group world state mapping table is updated to remove the address of the root node of the pre-partition sharding world state and add the addresses of the root nodes of the new sharding world states. This way, the root node of the group world state or the group world state mapping table will have the correct information about which root nodes of the sharding world states should be accessed in order to calculate an updated group world state root hash value.

Expansion of a shard can be achieved by partitioning the sharding word state that corresponds to the shard, and allocating the world states to the newly partitioned sharding world states. This allows the capacity of a shard to be expanded quickly, and users will only experience a small downtime during the sharding expansion process. When the first two byte words of the user account identifier is used to allocate user accounts to the world states, the group world state can support up to 256² = 65,536 sharding world states. Thus, the maximum number of shards that can be supported in the example is 65,536.

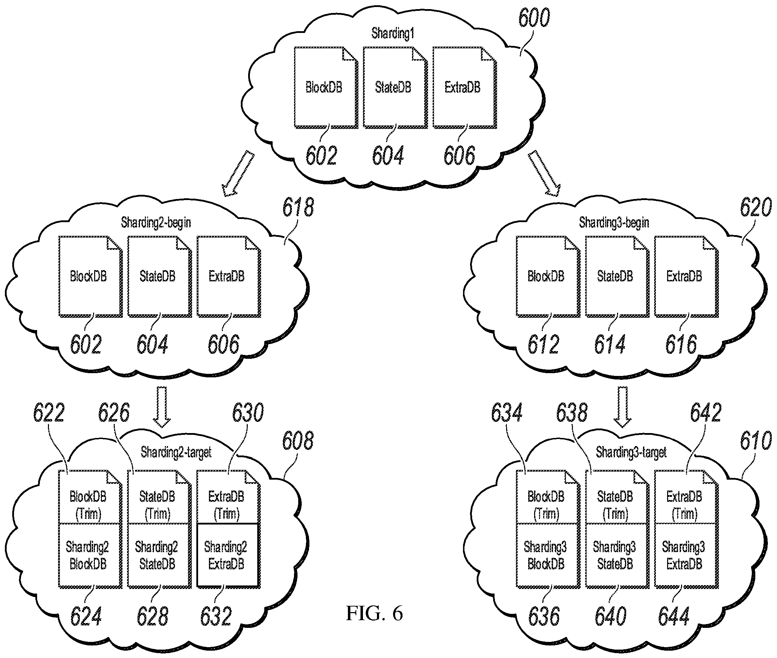

The process shown in FIG. 5 relates to how the world states are allocated to the sharding world states upon an expansion of the group world state by increasing the number of shards. The following describes a process for expansion of the databases in order to support the expansion of the group world state. Referring to FIG. 6, in some implementations, initially there is a single shard 600 that includes a blockchain database BlockDB 602, a world state database StateDB 604, and a miscellaneous database ExtraDB 606. In this example, the first shard 600 is partitioned into a second shard 608 and a third shard 610, in which each of the second and third shards 608 and 610 has its own blockchain database, world state database, and miscellaneous database.

The process for expanding the group world state by partitioning the first shard into the second shard and the third shard is designed to minimize the disruption to the user, to prevent or reduce outage of the services provided by the system (e.g., services provided by the blockchain-based application module 308). One way to achieve this is to generate a quick snapshot of the content of the first shard, and redefine the structure of the group world state, e.g., using the process shown in FIG. 5. The first shard becomes the initial second shard 618 and includes the blockchain database BlockDB 602, the world state database StateDB 604, and the miscellaneous database ExtraDB 606. The snapshot of the first shard becomes the initial third shard 620 and includes a copy of the blockchain database BlockDB 612, a copy of the world state database StateDB 614, and a copy of the miscellaneous database ExtraDB 616. In some implementations, the snapshot of the first shard initially does not include a full copy of the content of the first shard. For example, the snapshot can include a pointer to the first shard that allows the system to identify the contents of the copy of the first shard without actually making a full copy of the first shard. This allows the snapshot to be established quickly, without having to wait for the time required to make a full copy of the first shard. Subsequently, when the snapshot needs to be processed, content is copied from the first shard to the snapshot. Also, if a piece of data in the first shard is to be modified, the piece of data is copied to the snapshot before the piece of data in the first shard is modified.

There are a number of ways to generate the snapshot of the first shard. For example, in a first method, a virtual machine associated with the first shard can be used to generate the snapshot of the first shard. For example, in a second method, the consensus blockchain network includes validating peer nodes that participate in a consensus process for determining whether to write data on the blockchain and non-validating peer nodes that do not participate in the consensus process. The snapshot of the first shard can be generated by the non-validating peer nodes. In a third method, the number of validating peer nodes can be increased, and the snapshot of the first shard can be generated by the validating peer nodes concurrently with the increase of the validating peer nodes. The second method is more flexible, has better expansion characteristics, and requires lower online maintenance costs.

After the snapshot is generated, the contents of the initial second shard 618 and the initial third shard 610, including the blockchain databases BlockDB 602/612, the world state databases StateDB 604/614, and the miscellaneous databases ExtraDB 606/616 can be accessed by the user. Generating a quick snapshot of the content of the first shard takes a short amount of time, so the system downtime is small, and the corresponding disruption to the user is small.

Initially, each of the initial second shard 618 and the initial third shard 620 includes a full copy of the blockchain database BlockDB 602/612, the world state database StateDB 604/614, and the miscellaneous database ExtraDB 606/616. The amount of storage needed to store the data for supporting the second and third shards is double the amount of storage needed to support the first shard 600. To reduce the data storage requirements, the databases in the initial second shard 618 and the initial third shard 620 can be trimmed to remove data that are not necessary to support the second and third shards, respectively. After trimming, the initial second shard 618 becomes the target second shard 608, and the initial third shard 620 becomse the target third shard 610. The trimming operation can be implemented as a background process that does not cause interruption to the users.

In some implementations, the blockchain database BlockDB 602/612, the world state database StateDB 604/614, and the miscellaneous database ExtraDB 606/616 can be trimmed using a process described below. For example, when trimming the blockchain database BlockDB, the block header can be preserved. Within the block body, the transactions that are not relevant to the user accounts associated with the sharding world state are gradually removed. For example, suppose the first shard includes world states 504a, 504b, 504c, and 504d, the target second shard 608 includes the world state 504a, and the target third shard 610 includes the world states 504b, 504c, and 504d (this is similar to the example of the first expansion 508 in FIG. 5). The initial second shard 618 is trimed such that within the block body, the transactions that are not relevant to the user accounts associated with the world state 504a are gradually removed. The initial third shard 620 is trimed such that within the block body, the transactions that are not relevant to the user accounts associated with the world states 504b, 504c, and 540d are gradually removed.

For example, when trimming the world state database StateDB, the Merkle trees that are not associated with the world states in the shard are removed. For example, because the miscelaneous database ExtraDB is small, the miscellaneous database ExtraDB does not need to be trimmed. Alternatively, the miscellaneous database ExtraDB can be trimmed by removing the transaction index that is not needed by the corresponding sharding world state.

The trimming of the databases in the second shard results in the following. In this example, a portion 622 of the blockchain database BlockDB is removed, and the remaining blockchain database Sharding2 BlockDB 624 includes transaction data for user accounts associated with the second shard. A portion 626 of the world state database StateDB is removed, and the remaining world state database Sharding2 StateDB 628 includes state information for user accounts associated with the second shard. A portion 630 of the miscellaneous database ExtraDB is removed, and the remaining miscellaneous database Sharding2 ExtraDB 632 includes miscellaneous data for user accounts associated with the second shard.

The trimming of the databases in the third shard results in the following. In this example, a portion 634 of the blockchain database BlockDB is removed, and the remaining blockchain database Sharding3 BlockDB 636 includes transaction data for user accounts associated with the third shard. A portion 638 of the world state database StateDB is removed, and the remaining world state database Sharding3 StateDB 640 includes state information for user accounts associated with the third shard. A portion 642 of the miscellaneous database ExtraDB is removed, and the remaining miscellaneous database Sharding3 ExtraDB 644 includes miscellaneous data for user accounts associated with the third shard.

The sharding expansion prrocess allows the capacity of the shards to be expanded quickly to provide high quality online services to the users. After expansion, the databases can be trimmed to reduce the storage costs. The trimming can be performed when there are no transactions or as a background process to avoid disruption to the users.

The following describes a process for reduction of the sharding of the blockchain ledger. We first describe reduction of the sharding of the world state. A group world state data structure is provided in which the world states of multiple shards are combined into a group world state.

For a conventional content addressable Merkle tree (FDMT_History/MPT), the data are stored in the format <Hash,Value> in the nodes of the Merkle tree, and the Merkle tree is already in a "forest" configuration, so the complete database for the group world state can be obtained by combining two databases of the individual sharding world states.

For a MerkleTree (FDMT_Current/Bucket Tree) that is not content addressable, each sharding world state records the current state of the user accounts in the shard, different world states are separated based on user account identifiers (e.g., the first predetermined number of byte words of the user account identifiers), so different sharding world states are associated with different subsets of user accounts. Two sharding world states can be combined to obtain the complete world state. However, prior to combination, the sharding world states need to be "pure," meaning that each sharding world state only stores state information of user accounts associated with the sharding world state, and does not store state information of user accounts associated with another sharding world state. As shown in FIG. 6, when a first shard 600 is partitioned to generate the initial second shard 618 and the initial third shard 620, the initial second shard 618 and the initial third shard 620 include duplicate data and need to be trimmed. The initial second shard 618 needs to be trimmed to remove state data of user accounts associated with the target third shard 610, and the initial third shard 620 needs to be trimmed to remove state data of user accounts associated with the target second shard 608. Therefore, the second sharding world state and the third sharding world state can be combined after the trimming is completed.

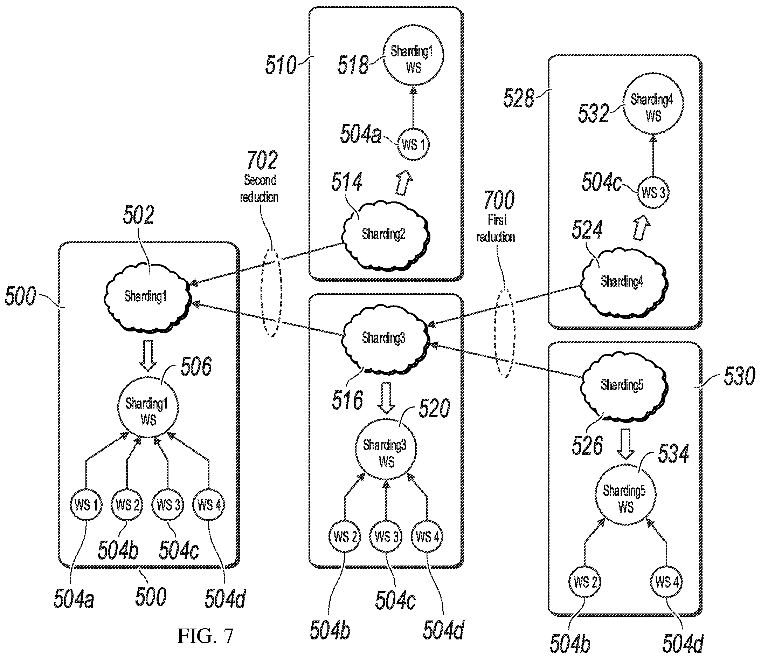

FIG. 7 shows an example of a process for combining a fourth shard 528 and a fifth shard 530 to generate a third shard 512 in a first sharding reduction operation 700, and combining a second shard 510 and the third shard 512 to generate a first shard 500 in a second sharding reduction operation 702. The fourth shard 528, fifth shard 530, third shard 512, second shard 510, and first shard 500 in FIG. 7 are similar to those in FIG. 5.

Prior to combining the fourth shard 528 and the fifth shard 530 into the third sharding world state 516, the root node 428 stores the addresses of (or links or pointers to) the root nodes 518, 532, and 534 of the second, fourth, and fifth sharding world states 514, 524, 526. In some examples, after the fourth sharding world state 524 is merged with the fifth sharding world state 526, the system 300 configures the root node 428 of the group world state 400 to remove the addresses of the root nodes 532 and 534, and store the address of the root node 520. In some examples, the group world state mapping table is updated to remove the addresses of the root nodes 532 and 534 and add the address of the root node 520.

The sharding reduction example of FIG. 7 is basically the reverse of the sharding expansion example of FIG. 5. However, the sharding reduction operaiont can also be performed differently. For example, the fourth shard 528 and the second shard 510 can be combined to generate a sixth shard, the fifth shard 530 and the third shard 512 can be combined to generate a seventh shard, and the sixth shard and the seventh shard can be combined to generate the first shard 500.

In this example, in the first sharding reduction operation 700, the fourth sharding world state 524 is combined with the fifth sharding world state 526 to generate the third sharding world state 516. The fourth sharding world state 524 includes the third world state 504c, the fifth sharding world stae 526 includes the second and fourth world states 504b and 504d. After combining the fourth sharding world state 524 and the fifth sharding world state 526, the third sharding world state 516 includes the second world state 504b, the third world state 504c, and the fourth world state 504d. The second sharding world state 514 includes the first world state 504a. After combining the second sharding world state 514 and the third sharding world stae 516, the first sharding world state 502 includes the first world state 504a, the second world state 504b, the third world state 504c, and the fourth world state 504d.

In the fourth shard 528, the root node 532 of the fourth sharding world state 524 stores the root hash value of the fourth sharding world state 524, which is calculated based on the root hash value of the third world state 504c. In the fifth shard 530, the root node 534 of the fifth sharding world state 524 stores the root hash value of the fourth sharding world state 524, which is calculated based on the root hash values of the second and fourth world states 504b and 504d. After the first sharding reduction operation 700, the root node 520 of the third sharding world state 516 stores the root hash value of the third sharding world state 516, which is based on the root hash values of the second, third, and fourth world states 504b, 504c, and 504d. After the second sharding reduction operation 702, the root node 506 of the first sharding world state 502 stores the root hash value of the first sharding world state 502, which is based on the root hash values of the first, second, third, and fourth world states 504a, 504b, 504c, and 504d.

In general, after each combining of the shards in which two pre-combining sharding world state are combined into a new sharding world state, the root node of the group world state is updated to remove the addresses of the root nodes of the pre-combining sharding world states and add the address of the root node of the new sharding world state. Alternatively, the group world state mapping table is updated to remove the addresses of the root nodes of the pre-combining sharding world states and add the address of the root node of the new sharding world state. This way, the root node of the group world state or the group world state mapping table will have the correct information about which root nodes of the sharding world states should be accessed in order to calculate an updated group world state root hash value.

The following describes the reduction of databases of the blockchain ledger. For two different shards of the blockchain ledger, their blockchain databases BlockDBs, world state databases WorldDBs, and miscellaneous databases ExtraDBs can be directly combined. Combining the blockchain databases BlockDBs, world state databases WorldDBs, and miscellaneous databases ExtraDBs takes only a small amount of time, so the interruption to users can be minimized.

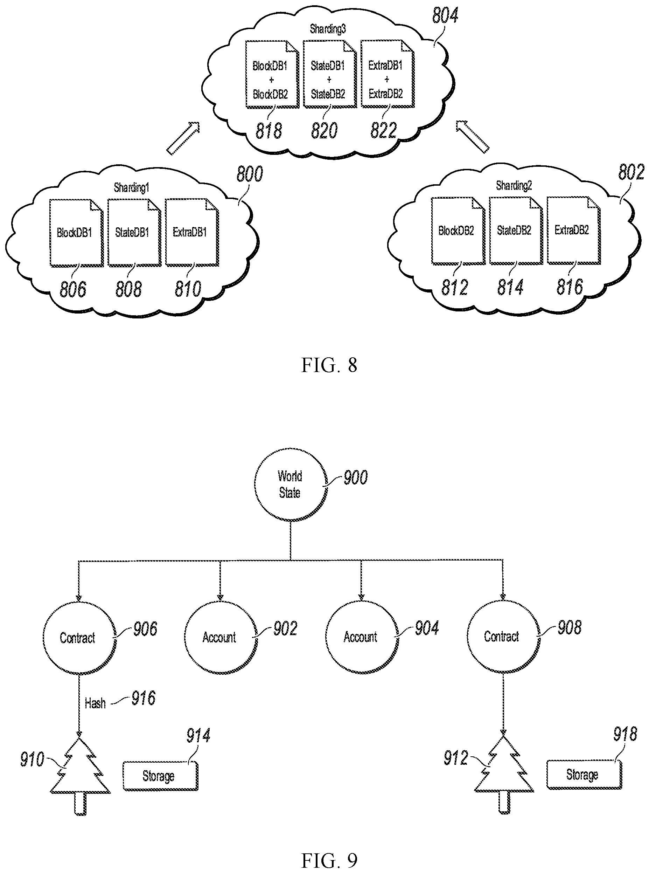

Referring to FIG. 8, a first shard 800 and a second shard 802 can be combined to form a third shard 804. The first shard 800 includes a first blockchain database BlockDB1 806, a first world state database StateDB1 808, and a first miscellaneous database ExtraDB1 810. The second shard 802 incldues a second blockchain database BlockDB2 812, a second world state database StateDB2 814, and a second miscellaneous database ExtraDB2 816. After the sharding reduction operation, the third shard 804 includes a blockchain database 818, which is a combination of the first blockchain database BlockDB 1 806 and and the second blockchain database BlockDB2 812. The third shard 804 includes a world state database 820 that is a combination of the first world state database StateDB 1 808 and the second world state database StateDB2 814. The third shard 804 further includes a miscellaneous database 822 that is a combination of the first miscellaneous database ExtraDB1 810 and the second miscellaneous database ExtraDB2 816.

The following describes how data searches are performed and how the genesis block is generated after the sharding reduction operation. The block heights of the first shard 800 and the second shard 802 may be different. If the block heights of the first shard 800 and the second shard 802 are the same, their hash values may be different. In general, the third shard 804 can start with block 0. Alternatively, the third shard 804 can also start from a certain block height that is greater than 0. After the merging the first shard 800 and the second shard 802, the first block of the third shard 804 should include information about the merger of the first and second shards 800 and 802. For example, such information can include three parts:
- An indication that the third shard 804 is produced as a result of a sharding reduction operation;
- The block indices of the original shards (i.e., first shard 800 and second shard 802) to enable efficient querying of the blocks and indexing of the data in the third shard 804;
- The root hash value of the current sharding world state, which in this example corresponds to the world state of the third shard 804.

The sharding expansion and sharding reduction processes described above allows resources to be efficiently used to support the world state data structure in order to provide a high quality of service to users. For example, the sharding expansion operation is used to increase the number of shards of a group world state, enabling more resources to be allocated to process the digital trees for maintaining the group world state.

The following describes another technique for enabling efficient use of resources to support digital trees that store state information associated with smart contracts in order to provide a high quality of service to users. In some implementations, smart contracts are executed on a blockchain to autonomously process data to provide services to users. The blockchain-based system 300 can include a virtual machine that provides the runtime environment for executing smart contracts to facilitate the services provided by the blockchain-based application module 308. The blockchain-based application module 308 can be viewed as a transaction-based state machine. State data associated with the blockchain-based application module 308 can be assembled to a global shared-state referred to as a world state. The world state includes a mapping between account addresses and account states. The world state can be stored in content-addressed tree structures such as the Merkle Patricia tree (MPT).

FIG. 9 is a diagram showing an example of a world state that stores state data for user accounts and smart contracts. The upper half of the diagram in FIG. 9 shows conceptually that a world state 900 stores state information of a first set of user accounts 902 and a second set of user accounts 904. The world state 900 also stores state information associated with a first smart contract 906 and a second smart contract 908. The root hash value of the world state provides a fingerprint of the most current state values of the first and second sets of user accounts, and the first and second smart contracts.

The lower half of the diagram in FIG. 9 shows the world state data are maintained in digital trees, such as Merkle trees, that are stored in storage devices. In this example, the first smart contract 906 generates hash values 916 of state data associated with the first smart contract 906, and stores the hash values in a first Merkle tree 910 that is stored in a first storage device 914. The state data associated with the second smart contract 908 are stored in a second Merkle tree 912 that is stored in a second storage device 918. The world state 900 is maintained by the first Merkle tree 910 and the second Merkle tree 912. In some implementations, the world state can be maintained using other types of tree-like data structures, or digital trees, e.g., one or more Patricia trees, one or more Merkle Patricia trees, one or more modified Merkle Patricia trees, one or more Bucket trees, or any combination of the above.

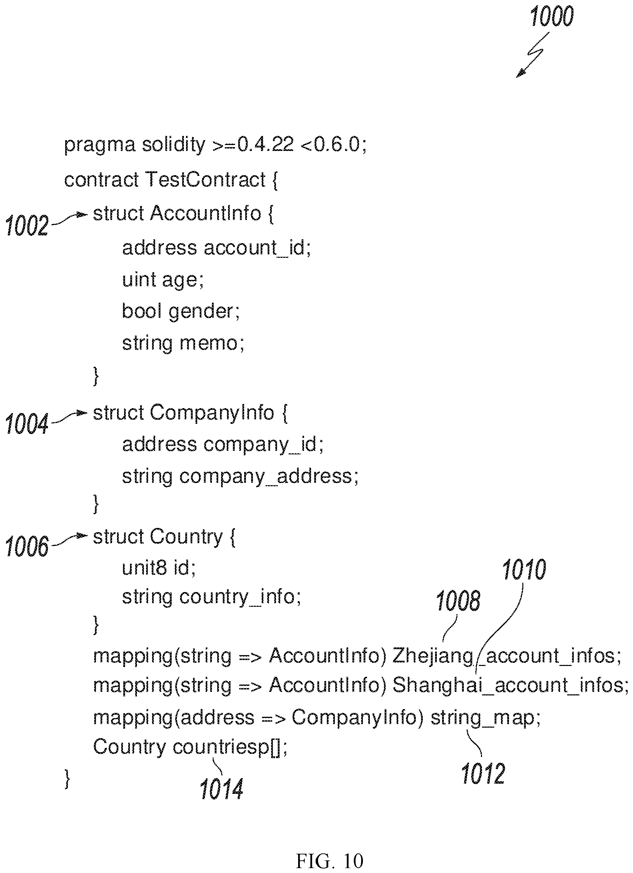

FIG. 10 shows an example of a smart contract "TestContract" 1000 that includes three types of data structures, namely the AccountInfo data structure 1002, the CompanyInfo data structure 1004, and the Country data structure 1006. The smart contract 100 specifies user account information 1008 (i.e., Zhejiang_account_infos) in which keys of the type "string" are mapped to the user account values of the type "AccountInfo." The smart contract 100 specifies user account information 1010 (i.e., Shanghai_account_infos) in which keys of the type "string" are mapped to the user account values of the type "AccountInfo." The smart contract 100 specifies company account information 1012 (i.e., string_map) in which keys of the type "address" are mapped to company account values of the type "CompanyInfo." The smart contract 100 specifies country information 1014 (i.e., a countriesp array) of the type "Country." For example, the smart contract 1000 can correspond to the smart contract 906 or 908 of FIG. 9.

For example, each of the "Zhejiang_account_infos," "Shanghai_account_infos," and "string_map" can include an array of key-value pairs, or a hash table that includes key types and corresponding value type pairs. For example, the user account information Zhejiang_account_infos can store account information of users residing in Zhejiang, and the user account information Shanghai_account_infos can store account information of users residing in Shanghai.

In some implementations, a smart contract is associated with a Merkle tree, so the user account information Zhejian_account_infos 1008, the user account information Shanghai_account_infos 1010, the company information string_map 1012, and the countriesp array 1014 are stored in a single Merkle tree. As the data in the user account information Zhejian_account_infos 1008, the user account information Shanghai_account_infos 1010, the company account information string_map 1012, and the country information countriesp array 1014 increase, the amount of data stored in the Merkle tree increases, and processing of the data in the Merkle tree may become slower and more difficult. Furthermore, because the four types of data are stored in the same Merkle tree, searching for one type of data may require processing of other types of data, reducing the efficiency of the search.

The following describes an improved system in which two or more Merkle trees are associated with a smart contract so that the amount of data stored in each Merkle tree is reduced, allowing the processing of the Merkle trees to be more efficient.

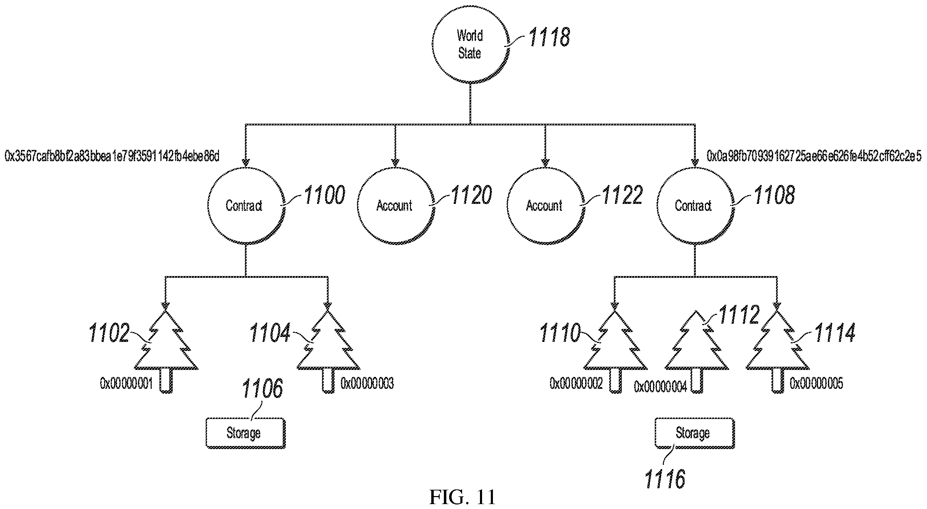

Referring to FIG. 11, in some implementations, a smart contract 1100 is configured to store state data, or hash values of the state data, in a first Merkle tree 1102 and a third Merkle tree 1104. The smart contract 1100 includes code that specifies which type of data are stored in which Merkle tree. Each Merkle tree has a unique address, which can be specified by the author of the smart contract. For example, the first Merkle tree 1102 can have an address 0x00000001, and the third Merkle tree 1104 can have an address 0x00000003. The first and third Merkle trees 1102 and 1104 are stored in a storage device 1106.

A second smart contract 1108 is configured to store state data, or hash values of the state data, in a second Merkle tree 1110, a fourth Merkle tree 1112, and a fifth Merkle tree 1114. The smart contract 1108 includes code that specifies which type of data are stored in which Merkle tree. In this example, the second Merkle tree 1110 has an address 0x00000002, the fourth Merkle tree 1112 has an address 0x00000004, and the fifth Merkle tree 1114 has an address 0x00000005. The second, fourth, and fifth Merkle trees 1110, 1112, and 1114 are stored in a storage device 1116.

The upper half of the diagram in FIG. 11 shows conceptually that a world state 1118 stores state information of a first set of user accounts 1120 and a second set of user accounts 1122. The world state 1118 also stores state information associated with the first smart contract 1100 and the second smart contract 1108. The root hash value of the world state provides a fingerprint of the most current state values of the first and second sets of user accounts, and the first and second smart contracts. In this example, the world state 1100 is maintained by the first Merkle tree 1102, the second Merkle tree 1110, the third Merkle tree 1104, the fourth Merkle tree 1112, and the fifth Merkle tree 1114.

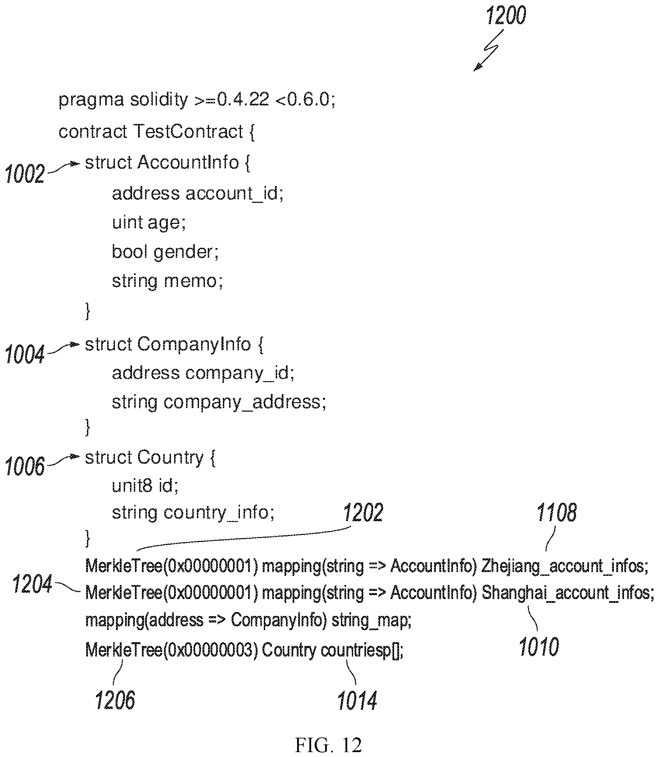

FIG. 12 shows an example of a smart contract "TestContract" 1200 that includes three types of data structures, namely the AccountInfo data structure 1002, the CompanyInfo data structure 1004, and the Country data structure 1006, similar to those of the smart contract 1000 of FIG. 10. The smart contract 1200 includes code that identifies state data and a particular Merkle tree for storing the first state data. In this example, the smart contract 1200 includes a modifier "MerkleTree(0x00000001)" 1202 in front of the code "mapping(string => AccountInfo) Zhejiang_account_infos," in which the modifier specifies that a mapping of keys to values of user account information Zhejiang_account_infos 1008 is to be stored in the first Merkle tree 1102 having the address 0x00000001. The smart contract 1200 includes a modifier "MerkleTree(0x00000001)" 1204 in front of the code "mapping(string => AccountInfo) Shanghai_account_infos," in which the modifier specifies that a mapping of keys to values of user account information Shanghai_account_infos 1010 is to be stored in the first Merkle tree 1102 having the address 0x00000001. The smart contract 1200 includes a modifier "MerkleTree(0x00000003)" 1206 in front of the code "Country countriesp[]," in which the modifier specifies that a countriesp array 1014 is to be stored in the third Merkle tree 1104 having the address 0x00000003.

In some implementations, a smart contract includes code written in a high-level language or a blockchain programming language, e.g., Solidity, Serpent, low-level Lisp-like language (LLL). Depending on the language in which the smart contract is written, and the system on which the smart contract is deployed, there can be a number of ways to execute the smart contract. For example, the virtual machine can include a compiler that compiles the smart contract into bytecode that can be deployed and executed on the blockchain. In some examples, the compiler can be provided by a device or node outside of the virtual machine. The compiler can be configured such that it can recognize the modifier "MerkleTree(*treeID*)" in which *treeID* represents an identifier of the Merkle tree, such as the address of the Merkle tree, in which the data specified after the modifier are to be stored. In this specification, the phrase "executing the smart contract" has a meaning similar to executing the bytecode that has been compiled from the smart contract.

In some examples, the virtual machine can include an interpreter that interprets the smart contract source code, allowing the smart contract code to start execute without having to wait for the entire compilation process to complete. In this specification, the term "compiler" refers to a module that can transform the smart contract high level source code into a lower level code that can be executed by the virtual machine. Depending on context, the term "compiler" can also include an interpreter.

In some implementations, the Merkle tree identifier can be a variable whose value depends on the value(s) of other parameter(s), e.g., as a function of other parameter values, or according to a rule set that includes one or more rules. The function can be, e.g., a Boolean function or a mathematical function. For example, the Merkle tree identifier can be determined at a time period when the smart contract is compiled by a compiler into bytecode, or at a time period when the bytecode is executed. For example, the Merkle tree identifier can be a variable or parameter that is un-determined in the smart contract, and determined when the smart contract is compiled by the compiler into bytecode. For example, the Merkle tree identifier can be a variable or parameter that is un-determined in the smart contract and the bytecode, and determined when the bytecode is executed by the virtual machine.

For example, the smart contract can include code:
MerkleTree(TreeAddress1) mapping(string => AccountInfo) Zhejiang_account_infos;
In this example, "TreeAddress1" is a variable.

For example, the smart contract can include code:
TreeAddress2 = getTreeAddress (user ID);
MerkleTree(TreeAddress2) mapping(string => AccountInfo) Zhejiang_account_infos;
In this example, "getTreeAddress" is a function of "user_ID" and "TreeAddress2" is a variable.

For example, the smart contract can include code:
Rule 1: If user_ID is less than 100,000, then TreeAddress3 = 0x00000001;
Rule 2: If user_ID is less than 200,000 and greater than or equal to 100,000, then TreeAddress3 = 0x00000002;
Rule 3: If user_ID is less than 300,000 and greater than or equal to 200,000, then TreeAddress3 = 0x00000003;
Rule 4: If user_ID is less than 400,000, and greater than or equal to 300,000, then TreeAddress3 = 0x00000004;
MerkleTree(TreeAddress3) mapping(string => AccountInfo) Zhejiang_account_infos;
In this example, "TreeAddress3" is a variable that is determined based on Rules 1 to 4.

For example, the data can be stored in different Merkle trees depending on the characteristics of the data and/or the characteristics of the Merkle trees, and/or characteristics of the computing resources associated with the Merkle trees. The characteristics of the data can include, e.g., the size of the data, and the priority of data. For example, a function can specify that data associated with a first set of user accounts are stored in a first Merkle tree if the number of user accounts in the first set of user accounts is equal to or less than a predetermined number N4, stored in a second Merkle tree if the number of user accounts in the first set of user accounts is greater than N4 and equal to or less than a predetermined number N5, and stored in a third Merkle tree if the number of user accounts in the first set of user accounts is greater than N5, with N4 and N5 being positive integers. For example, a function can specify that data associated with a user account are stored in a first Merkle tree if the user account is associated with a low priority level, and stored in a second Merkle tree if the user account is associated with a high priority level.

The characteristics of the Merkle tree can include, e.g., how much data are already stored in the Merkle tree, and process times associated with the Merkle tree (e.g., read and write access times, and time periods for processing Merkle proofs). For example, the smart contract can include code that specifies that data associated with a new user account should be stored in a first Merkle tree if the size of the Merkle tree is equal to or less than X3 giga-bytes, and stored in a second Merkle tree if the size of the Merkle tree is greater than X3 giga-bytes, with X3 being a positive real number.

The characteristics of the computing resources associated with the Merkle trees can include, e.g., characteristics of the storage devices for storing the Merkle trees, such as the remaining capacity of the storage devices, or the location of the storage devices. For example, the smart contract can include code that specifies that data associated with a new user account should be stored in a Merkle tree that is stored in a storage device that has at least X4 tetra-bytes of free space. For example, the smart contract can include code that specifies that data associated with a new account of a user residing in a particular country should be stored in a Merkle tree that is stored in a storage device located in the particular country.

In some implementations, the identifier of the Merkle tree can be unknown at the time a smart contract is deployed on a blockchain. The identifier of the Merkle tree can be specified by passing function arguments to the smart contract at the time that the smart contract is executed (e.g., at run time). The compiler for the smart contracts is configured to support the dynamic association of Merkle trees with the smart contracts described above.

A feature of the invention is that a smart contract is not fixedly tied to a single Merkle tree. Rather, a smart contract can be associated with multiple Merkle trees. Furthermore, the association between a smart contract and the Merkle trees can be dynamically adjusted. For example, each smart contract can include a mapping table that provides information about all the Merkle trees that can be visited by the smart contract.

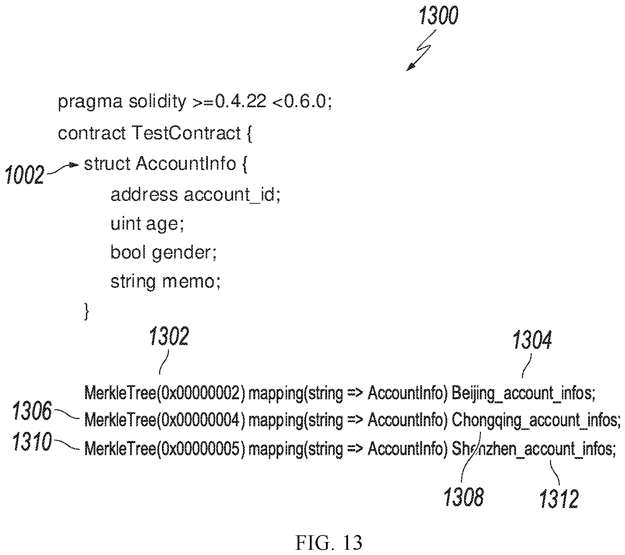

FIG. 13 shows an example of a smart contract "TestContract2" 1300 that includes the AccountInfo data structure 1002, similar to that of the smart contract 1000 of FIG. 10. In the smart contract 1300, a modifier "MerkleTree(0x00000002)" 1302 in front of the code "mapping(string => AccountInfo)Beijing_account_infos" specifies that a map of Beijing_account_infos 1304 is to be stored in the second Merkle tree 1110 having the address 0x00000002. A modifier "MerkleTree(0x00000004)" 1306 in front of the code "mapping(string => AccountInfo) Chongqing_account_infos" specifies that a map of Chongqing_account_infos 1308 is to be stored in the fourth Merkle tree 1112 having the address 0x00000004. A modifier "MerkleTree(0x00000005)" 1310 in front of the code "mapping(string => AccountInfo) Shenzhen_account_infos" specifies that a map of Shenzhen_account_infos 1312 is to be stored in the fifth Merkle tree 1114 having the address 0x00000005.

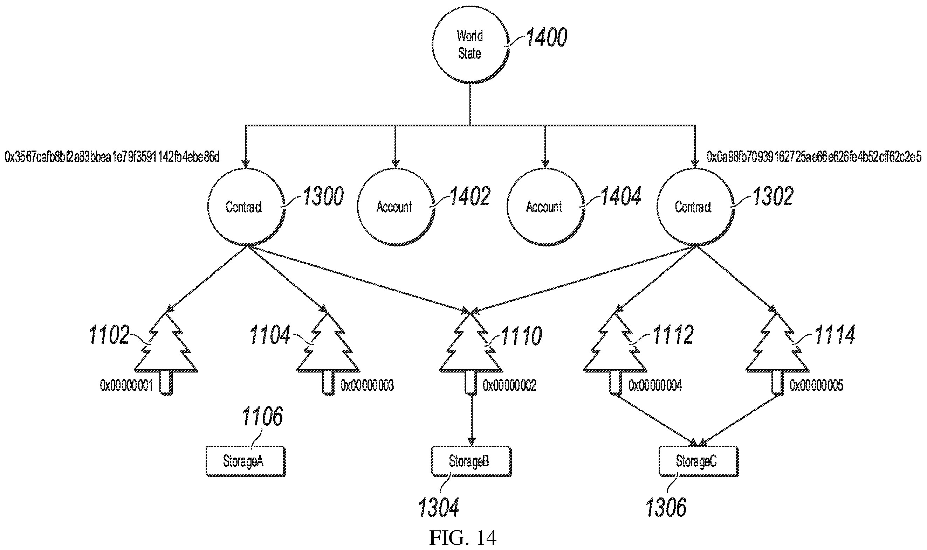

In some implementations, a Merkle tree can store state information of two or more smart contracts. Referring to FIG. 14, in some examples, a first smart contract 1300 stores state data, or hash values of state data, in a first Merkle tree 1102, a second Merkle tree 1110, and a third Merkle tree 1104. A second smart contract 1302 stores state data, or hash values of state data, in the second Merkle tree 1110, a fourth Merkle tree 1112, and a fifth Merkle tree 1114. In this example, both the first smart contract 1300 and the second smart contract store state data in the second Merkle tree 1110.

In some implementations, two or more Merkle trees can be stored in a storage device. In the example of FIG. 14, the second Merkle tree 1110 is stored in the storage device StorageB 1304. The second Merkle tree 1110 maintains an index for searching the data in the second storage device StorageB 1304. The fourth Merkle tree 1112 and the fifth Merkle tree 1114 are stored in a third storage device StorageC 1306. The fourth Merkle tree 1112 and the fifth Merkle tree 1114 maintain an index for searching the data stored in the third storage device StorageC 1306.

The upper half of the diagram in FIG. 14 shows conceptually that a world state 1400 stores state information of a first set of user accounts 1402 and a second set of user accounts 1404. The world state 1400 also stores state information associated with the first smart contract 1300 and the second smart contract 1302. The root hash value of the world state provides a fingerprint of the most current state values of the first and second sets of user accounts, and the first and second smart contracts. In this example, the world state 1400 is maintained by the first Merkle tree 1102, the second Merkle tree 1110, the third Merkle tree 1104, the fourth Merkle tree 1112, and the fifth Merkle tree 1114. For example, the root hash of the world state 1400 can be determined based on the root hash of Merkle tree 0x00000001 (1102), the root hash of Merkle tree 0x00000002 (1110), the root hash of Merkle tree 0x00000003 (1104), the root hash of Merkle tree 0x00000004 (1112), and the root hash of Merkle tree 0x00000005 (1114).

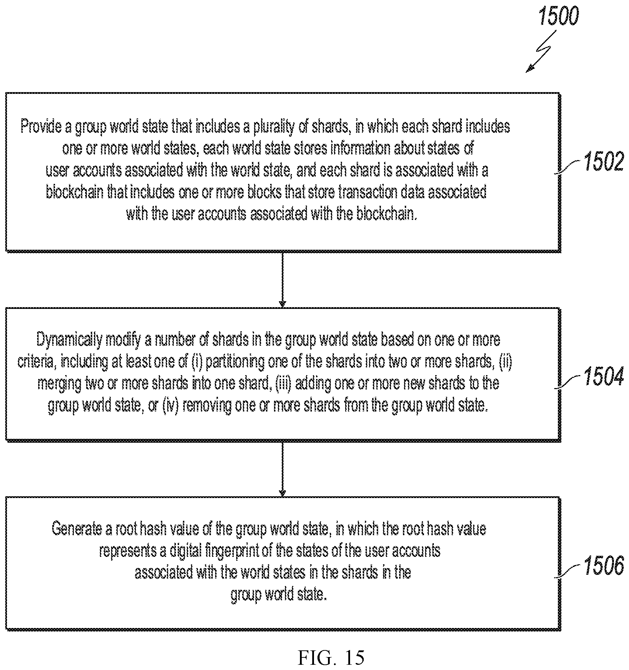

FIG. 15 is a flowchart of an example of a process 1500 for processing world state information associated with one or more blockchains. For convenience, the process 1500 will be described as being performed by a system of one or more computers, located in one or more locations, and programmed appropriately in accordance with this specification. For example, a computing system, e.g., the computing system 106, 108 of FIG. 1 or system 300 of FIG. 3, appropriately programmed, can perform the process 1500. The process 1500 includes the following steps.

At 1502, the system provides a group world state that includes a plurality of shards, in which each shard includes one or more world states, each world state stores information about states of user accounts associated with the world state, and each shard is associated with a blockchain that includes one or more blocks that store transaction data associated with the user accounts associated with the blockchain.

In some embodiments, each world state is maintained using at least one of a Merkle tree, a Patricia tree, a Merkle Patricia tree, a modified Merkle Patricia tree, or a Bucket tree.

In some embodiments, the user accounts are associated with the world states based on a characteristic of the user accounts, in which each user account is associated with only one of the world states.

In some embodiments, the user accounts are associated with the world states based on characteristics of user account identifiers.

In some embodiments, the user accounts are associated with the world states based on predetermined bytes or byte words of the user account identifiers.

In some embodiments, the group world state supports a maximum of 2ⁿ world states, and a user account whose user account identifier has the predetermined bytes or byte words equal to m is associated with the m-th world state, 1 ≤ m ≤ 2ⁿ.

In some embodiments, the group world state supports a maximum of 2¹⁶ = 65,536 world states, and a user account whose user account identifier has the first two byte words equal to m is associated with the m-th world state, 1 ≤ m ≤ 65,536.

In some embodiments, the user accounts are associated with the world states based on priority levels of user accounts.

At 1504, the system dynamically modifies a number of shards in the group world state based on one or more criteria, including at least one of (i) partitioning one of the shards into two or more shards, (ii) merging two or more shards into one shard, (iii) adding one or more new shards to the group world state, or (iv) removing one or more shards from the group world state.

In some embodiments, the number of shards in the group world state can be dynamically modified by partitioning a first shard into a second shard and a third shard, the second shard includes a second subset of world states of the first shard, and the third shard includes a third subset of world states of the first shard.

In some embodiments, the number of shards in the group world state can be dynamically modified by merging a second shard and a third shard to generate a first shard, in which the first shard includes one or more world states of the second shard and one or more world states of the third shard.

In some embodiments, the number of shards in the group world state can be dynamically modified by adding one or more new shards to the group world state, in which the one or more new shards include one or more world states that were previously not included in the group world state.

In some embodiments, the number of shards in the group world state can be dynamically modified by removing one or more shards from the group world state, including removing one or more world states in the removed one or more shards from the group world state.

In some embodiments, the system evaluates the one or more criteria, and partitions one of the shards into two or more shards upon determining that the one or more criteria are met.

In some embodiments, the system evaluates the one or more criteria, and merges two or more shards into one shard upon determining that the one or more criteria are met.

In some embodiments, the one or more criteria include at least one of quality of service measure, computation power requirement, memory requirement, data storage requirement, or data bandwidth requirement.

In some embodiments, the system determines at least one of (i) the quality of service measure is below a threshold, (ii) the computation power requirement is not met, (iii) the memory capacity requirement is not met, (iv) the data storage capacity requirement is not met, or (v) the data bandwidth requirement is not met. In response to the determination, the system partitions one of the shards into two or more shards, and allocates more resources to a combination of the two or more shards, as compared to the resources allocated to the one of the shards, in which the resources include at least one of computation power, memory capacity, data storage capacity, or data bandwidth.

In some embodiments, the system determines that at least one of (i) the quality of service measure is above a threshold, (ii) idle or excess computation power is above a threshold, (iii) available memory capacity is above a threshold, (iv) available data storage capacity is above a threshold, or (v) available data bandwidth is above a threshold. In response to the determination, the system merges two or more shards into a single shard, and allocates fewer resources to the single shard after the merging, as compared to the resources allocated to the two or more shards before the merging, in which the resources include at least one of computation power, memory capacity, data storage capacity, or data bandwidth.

In some embodiments, partitioning one of the shards into two or more shards includes partitioning a first shard into a second shard and a third shard. The first shard includes a first world state database that includes a first set of world states. The partitioning of the first shard into the second shard and the third shard includes: generating a first snapshot of the first shard, in which the first snapshot includes a snapshot of a first world state database. The partitioning includes trimming the first shard to generate the second shard, including removing one or more world states in the first world state database to generate a second world state database that includes a second subset of one or more world states in the first shard. The partitioning further includes trimming the first snapshot of the first shard to generate the third shard, including removing one or more world states in the first world state database to generate a third world state database that includes a third subset of one or more world states in the first shard, in which the third subset of one or more world states is different from the second subset of one or more world states.

In some embodiments, partitioning one of the shards into two or more shards includes partitioning one of the shards into three or more shards.

In some embodiments, merging two or more shards into one shard includes merging a second shard and a third shard into a first shard. The second shard includes a second world state database that includes a second set of world states that store state information associated with a second set of user accounts. The third shard includes a third world state database that includes a third set of world states that store state information associated with a third set of user accounts. The first shard includes a first world state database that includes a first set of world states that includes the second set of world states and the third set of world states, the first set of world states stores state information associated with a first set of user accounts that includes the second set of user accounts and the third set of user accounts.

In some embodiments, partitioning one of the shards into two or more shards includes partitioning a first shard into a second shard and a third shard, the first shard is associated with a first set of user accounts, the second shard is associated with a second set of user accounts, and the third shard is associated with a third set of user accounts. The second set of user accounts is a second subset of the first set of user accounts, the third set of user accounts is a third subset of the first set of user accounts, and the third subset of user accounts is different from the second subset of user accounts.

In some embodiments, the system provides a first set of one or more rules that specify one or more conditions for which a number of shards in the group world state is to be increased.

In some embodiments, the system provides a second set of one or more rules that specify one or more conditions for which a number of shards in the group world state is to be decreased.

At 1506, the system generates a root hash value of the group world state, in which the root hash value represents a digital fingerprint of the states of the user accounts associated with the world states in the shards in the group world state.

In some embodiments, the system dynamically modifies resources allocated to the group world state based on the number of shards in the group world state.

In some embodiments, the system allocates more resources to the group worlds state in response to an increase in the number of shards in the group world state.

In some embodiments, the system allocates fewer resources to the group world state in response to a decrease in the number of shards in the group world state.

In some embodiments, the resources include at least one of computation power, memory, data storage capacity, or data bandwidth.

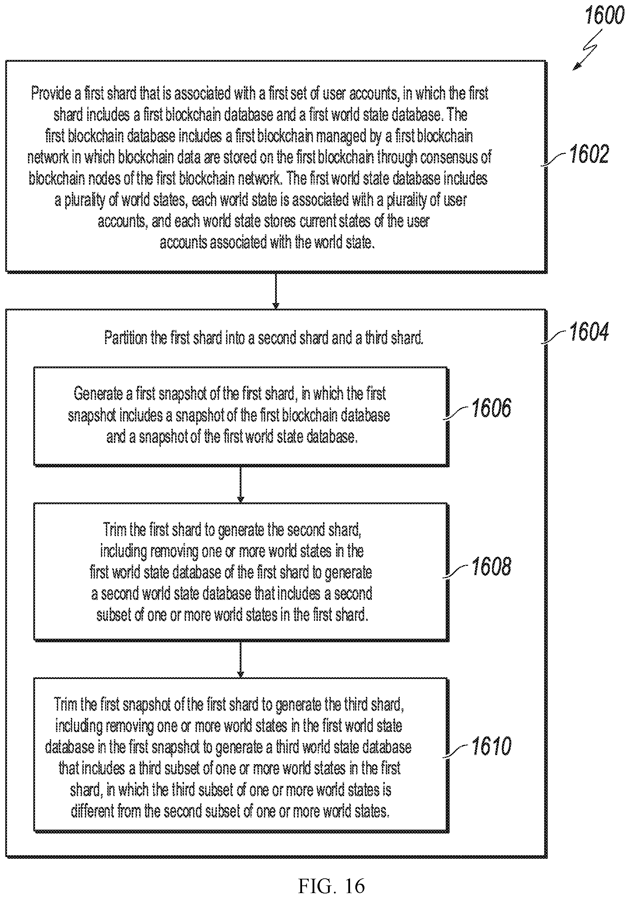

FIG. 16 is a flowchart of an example of a process 1600 for processing world state information associated with one or more blockchains. For convenience, the process 1600 will be described as being performed by a system of one or more computers, located in one or more locations, and programmed appropriately in accordance with this specification. For example, a computing system, e.g., the computing system 106, 108 of FIG. 1 or system 300 of FIG. 3, appropriately programmed, can perform the process 1600. The process 1600 includes the following steps.

At 1602, the system provides a first shard that is associated with a first set of user accounts, in which the first shard includes a first blockchain database and a first world state database. The first blockchain database includes a first blockchain managed by a first blockchain network in which blockchain data are stored on the first blockchain through consensus of blockchain nodes of the first blockchain network. The first world state database includes a plurality of world states, each world state is associated with a plurality of user accounts, and each world state stores current states of the user accounts associated with the world state.

In some embodiments, the first world state database is associated with a first set of user accounts, the second world state database is associated with a second set of user accounts, the third world state database is associated with a third set of user accounts, and the first set of user accounts includes a sum of the second set of user accounts and the third set of user accounts.

In some embodiments, the first world state database is associated with a first set of user accounts, the second world state database is associated with a second set of user accounts, the third world state database is associated with a third set of user accounts, and the second set of user accounts does not overlap the third set of user accounts.

In some embodiments, each world state in the plurality of world states of the first world state database includes a root node, the first blockchain of the first blockchain database includes a first block, the first block includes a block header and a block body, the block header stores a first hash value derived from a hash of hash values of the root nodes of the plurality of world states of the first world state database, and the first hash value represents a digital fingerprint of the current states of the user accounts associated with the plurality of world states of the first world state database.

In some embodiments, each world state in the plurality of world states of the first world state database includes a root node, the first blockchain of the first blockchain database includes a first block, the first block includes a block header and a block body, and the block header stores hash values of the root nodes of the world states in the first world state database.

In some embodiments, each world state is maintained using a digital tree including at least one of a Merkle tree, a Patricia tree, a Merkle Patricia tree, a modified Merkle Patricia tree, or a Bucket tree.

At 1604, the system partitions the first shard into a second shard and a third shard. The partitioning includes the following steps.

At 1606, the system generates a first snapshot of the first shard, in which the first snapshot includes a snapshot of the first blockchain database and a snapshot of the first world state database.

In some embodiments, generating the snapshot of the first shard includes using a virtual machine associated with the first shard to generate the snapshot of the first shard.

In some embodiments, the first blockchain network includes a consensus blockchain network that includes validating peer nodes that participate in a consensus process for determining whether to write data on the blockchain and non-validating peer nodes that do not participate in the consensus process. Generating the snapshot of the first shard includes using the non-validating peer nodes to generate the snapshot.

In some embodiments, the consensus blockchain network includes validating peer nodes that participate in a consensus process for determining whether to write data on the blockchain and non-validating peer nodes that do not participate in the consensus process. Generating the snapshot of the first shard includes increasing a number of validating peer nodes, and using the validating peer nodes to generate the snapshot.

At 1608, the system trims the first shard to generate the second shard, including removing one or more world states in the first world state database of the first shard to generate a second world state database that includes a second subset of one or more world states in the first shard.

In some embodiments, the second shard includes a second blockchain database that includes a second blockchain that stores transaction data associated with user accounts that are associated with the second shard. The second blockchain includes a first block, and the first block includes a block body that stores information about transactions. Trimming the first shard includes removing information about transactions associated with user accounts that are not associated with the second subset of the one or more world states in the second world state database.

At 1610, the system trims the first snapshot of the first shard to generate the third shard, including removing one or more world states in the first world state database in the first snapshot to generate a third world state database that includes a third subset of one or more world states in the first shard, in which the third subset of one or more world states is different from the second subset of one or more world states.

In some embodiments, the third shard includes a third blockchain database that includes a third blockchain that stores transaction data associated with user accounts that are associated with the third shard. The third blockchain includes a first block, and the first block includes a block body that stores information about transactions. Trimming the first snapshot of the first shard includes removing information about transactions associated with user accounts that are not associated with the third subset of one or more world states in the third world state database.

In some embodiments, the third shard includes a third blockchain database that includes a third blockchain that stores transaction data associated with user accounts that are associated with the third shard. The system partitions the third shard into a fourth shard and a fifth shard, in which the partitioning includes: generating a second snapshot of the third shard, in which the second snapshot includes a snapshot of the third blockchain database and a snapshot of the third world state database. The partitioning includes trimming the third shard to generate the fourth shard, including removing one or more world states in the third world state database of the third shard to generate a fourth world state database that includes a fourth subset of one or more world states in the third shard. The partitioning further includes trimming the second snapshot of the third shard to generate the fifth shard, including removing one or more world states in the third world state database in the second snapshot to generate a fifth world state database that includes a fifth subset of one or more world states in the third shard, in which the fifth subset of the one or more world states is different from the fourth subset of the one or more world states.

In some embodiments, the system allocates more resources to a combination of the fourth shard and the fifth shard as compared to the resources allocated to the third shard.

In some embodiments, the system allocates more resources to a combination of the second shard and the third shard as compared to the resources allocated to the first shard after the partitioning of the first shard into the second shard and the third shard.

In some embodiments, allocating more resources includes allocating more of at least one of computation power, memory, data storage capacity, or data bandwidth.

In some embodiments, the system generates a group world state hash value representing the world states of the first and second shards based on hash values of root nodes of the digital trees maintaining the world states of the first and second shards.

In some embodiments, the system generates a simplified payment verification proof of a transaction associated with a user account by generating a first proof based on a path from a root node of a group world state to a root node of a sharding world state, generating a second proof based on a path from the root node of the sharding world state to a root node of a world state associated with the user account, and generating a third proof based on a path from the root node of the world state to a node representing the user account.

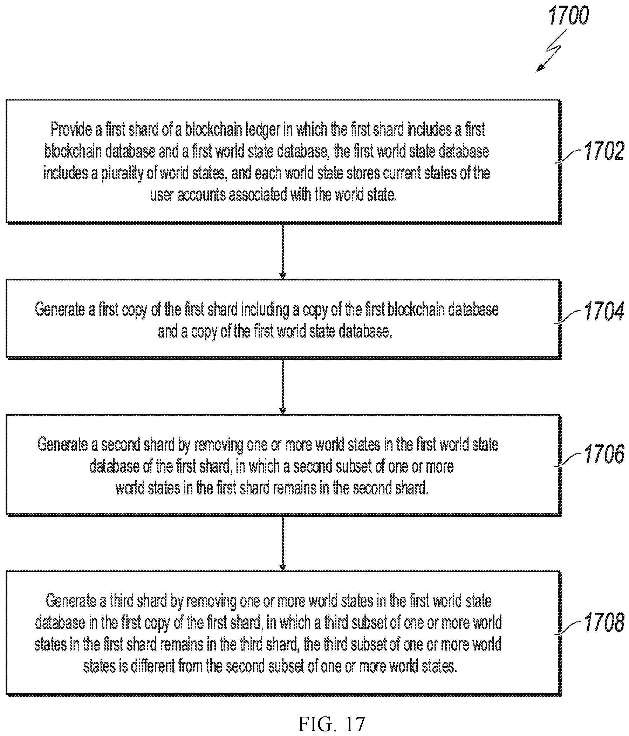

FIG. 17 is a flowchart of an example of a process 1700 for processing world state information associated with one or more blockchains. For convenience, the process 1700 will be described as being performed by a system of one or more computers, located in one or more locations, and programmed appropriately in accordance with this specification. For example, a computing system, e.g., the computing system 106, 108 of FIG. 1 or system 300 of FIG. 3, appropriately programmed, can perform the process 1700. The process 1700 includes the following steps.

At 1702, the system provides a first shard of a blockchain ledger in which the first shard includes a first blockchain database and a first world state database, the first world state database includes a plurality of world states, and each world state stores current states of the user accounts associated with the world state.

At 1704, the system generates a first copy of the first shard including a copy of the first blockchain database and a copy of the first world state database.

At 1706, the system generates a second shard by removing one or more world states in the first world state database of the first shard, in which a second subset of one or more world states in the first shard remains in the second shard.

At 1708, the system generates a third shard by removing one or more world states in the first world state database in the first copy of the first shard, in which a third subset of one or more world states in the first shard remains in the third shard, the third subset of one or more world states is different from the second subset of one or more world states.

In some embodiments, the system allocates more resources to a combination of the second shard and the third shard as compared to the resources allocated to the first shard.

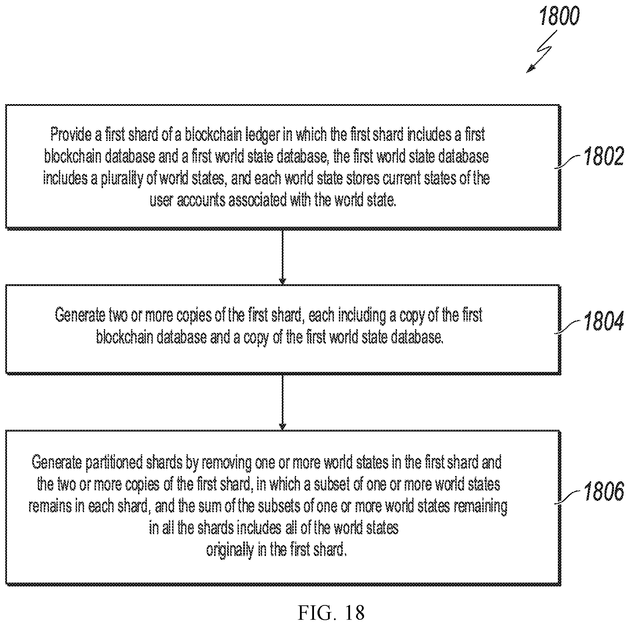

FIG. 18 is a flowchart of an example of a process 1800 for processing world state information associated with one or more blockchains. For convenience, the process 1800 will be described as being performed by a system of one or more computers, located in one or more locations, and programmed appropriately in accordance with this specification. For example, a computing system, e.g., the computing system 106, 108 of FIG. 1 or system 300 of FIG. 3, appropriately programmed, can perform the process 1800. The process 1800 includes the following steps.

At 1802, the system provides a first shard of a blockchain ledger in which the first shard includes a first blockchain database and a first world state database, the first world state database includes a plurality of world states, and each world state stores current states of the user accounts associated with the world state.

At 1804, the system generates two or more copies of the first shard, each including a copy of the first blockchain database and a copy of the first world state database.

At 1806, the system generates partitioned shards by removing one or more world states in the first shard and the two or more copies of the first shard, in which a subset of one or more world states remains in each shard, and the sum of the subsets of one or more world states remaining in all the shards includes all of the world states originally in the first shard.

In some embodiments, the system allocates more resources to a combination of the partitioned shards as compared to the resources allocated to the first shard.

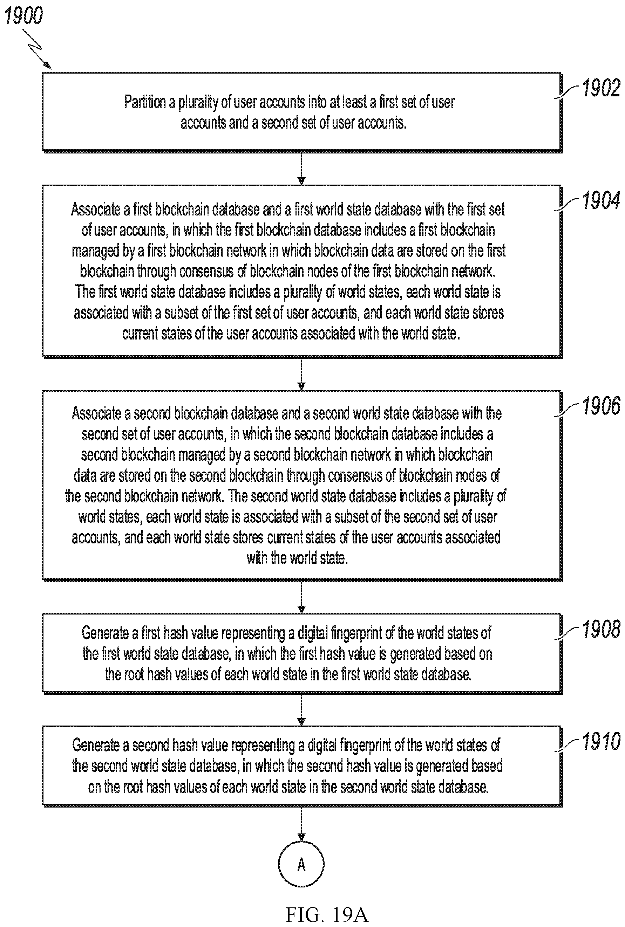

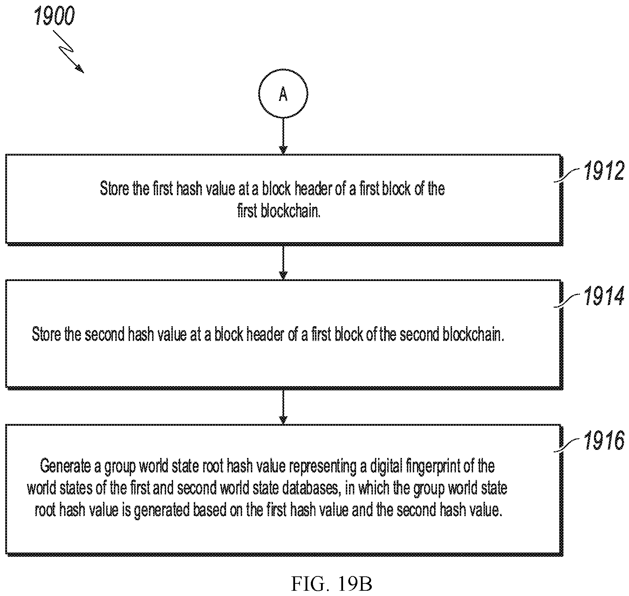

FIGS. 19A and 19B show a flowchart of an example of a process 1900 for processing world state information associated with one or more blockchains. For convenience, the process 1900 will be described as being performed by a system of one or more computers, located in one or more locations, and programmed appropriately in accordance with this specification. For example, a computing system, e.g., the computing system 106, 108 of FIG. 1 or system 300 of FIG. 3, appropriately programmed, can perform the process 1900. The process 1900 includes the following steps.

At 1902, the system partitions a plurality of user accounts into at least a first set of user accounts and a second set of user accounts.

At 1904, the system associates a first blockchain database and a first world state database with the first set of user accounts, in which the first blockchain database includes a first blockchain managed by a first blockchain network in which blockchain data are stored on the first blockchain through consensus of blockchain nodes of the first blockchain network. The first world state database includes a plurality of world states, each world state is associated with a subset of the first set of user accounts, and each world state stores current states of the user accounts associated with the world state.

At 1906, the system associates a second blockchain database and a second world state database with the second set of user accounts, in which the second blockchain database includes a second blockchain managed by a second blockchain network in which blockchain data are stored on the second blockchain through consensus of blockchain nodes of the second blockchain network. The second world state database includes a plurality of world states, each world state is associated with a subset of the second set of user accounts, and each world state stores current states of the user accounts associated with the world state.

At 1908, the system generates a first hash value representing a digital fingerprint of the world states of the first world state database, in which the first hash value is generated based on the root hash values of each world state in the first world state database.

At 1910, the system generates a second hash value representing a digital fingerprint of the world states of the second world state database, in which the second hash value is generated based on the root hash values of each world state in the second world state database.

At 1912, the system stores the first hash value at a block header of a first block of the first blockchain,

At 1914, the system stores the second hash value at a block header of a first block of the second blockchain.

At 1916, the system generates a group world state root hash value representing a digital fingerprint of the world states of the first and second world state databases, in which the group world state root hash value is generated based on the first hash value and the second hash value.

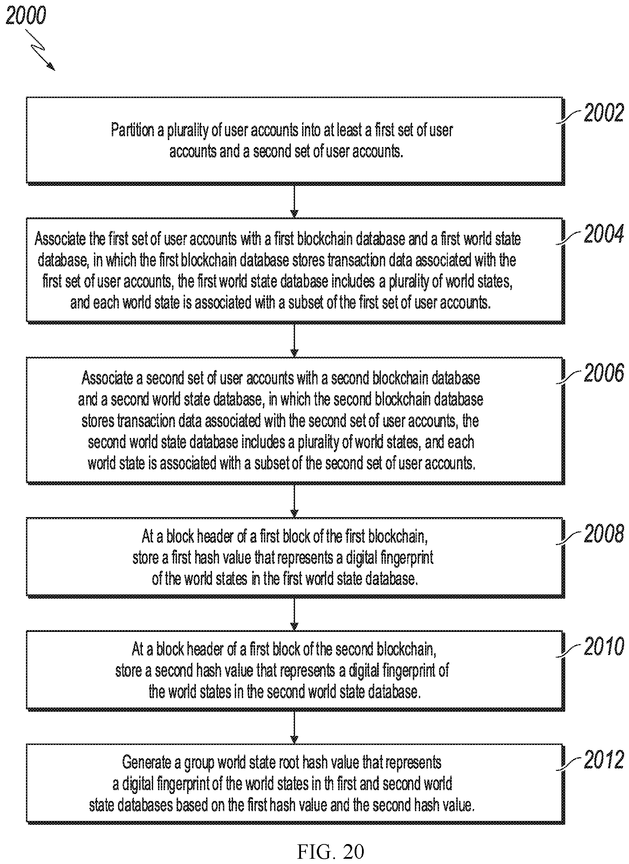

FIG. 20 is a flowchart of an example of a process 2000 for processing world state information associated with one or more blockchains. For convenience, the process 2000 will be described as being performed by a system of one or more computers, located in one or more locations, and programmed appropriately in accordance with this specification. For example, a computing system, e.g., the computing system 106, 108 of FIG. 1 or system 300 of FIG. 3, appropriately programmed, can perform the process 2000. The process 2000 includes the following steps.

At 2002, the system partitions a plurality of user accounts into at least a first set of user accounts and a second set of user accounts.

At 2004, the system associates the first set of user accounts with a first blockchain database and a first world state database, in which the first blockchain database stores transaction data associated with the first set of user accounts, the first world state database includes a plurality of world states, and each world state is associated with a subset of the first set of user accounts.

At 2006, the system associates a second set of user accounts with a second blockchain database and a second world state database, in which the second blockchain database stores transaction data associated with the second set of user accounts, the second world state database includes a plurality of world states, and each world state is associated with a subset of the second set of user accounts.

At 2008, at a block header of a first block of the first blockchain, the system stores a first hash value that represents a digital fingerprint of the world states in the first world state database.

At 2010, at a block header of a first block of the second blockchain, the system stores a second hash value that represents a digital fingerprint of the world states in the second world state database.

At 2012, the system generates a group world state root hash value that represents a digital fingerprint of the world states in the first and second world state databases based on the first hash value and the second hash value.

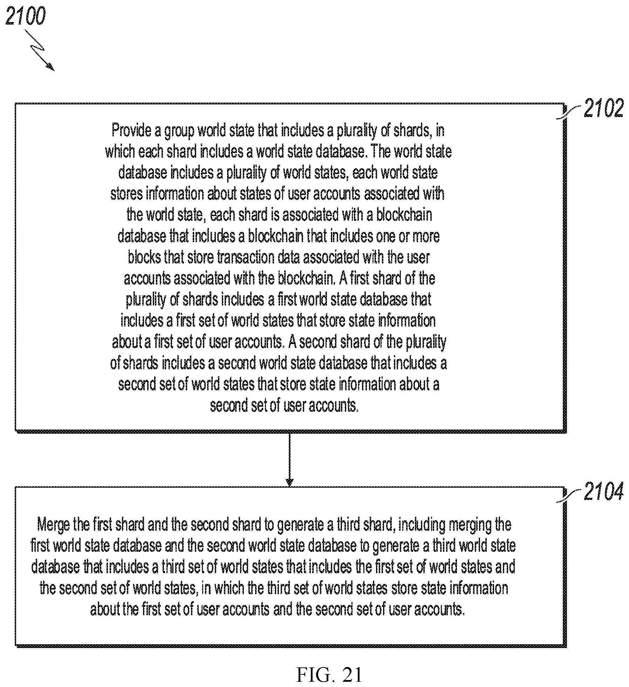

FIG. 21 is a flowchart of an example of a process 2100 for processing world state information associated with one or more blockchains. For convenience, the process 2100 will be described as being performed by a system of one or more computers, located in one or more locations, and programmed appropriately in accordance with this specification. For example, a computing system, e.g., the computing system 106, 108 of FIG. 1 or system 300 of FIG. 3, appropriately programmed, can perform the process 2100. The process 2100 includes the following steps.

At 2102, the system provides a group world state that includes a plurality of shards, in which each shard includes a world state database. The world state database includes a plurality of world states, each world state stores information about states of user accounts associated with the world state, each shard is associated with a blockchain database that includes a blockchain that includes one or more blocks that store transaction data associated with the user accounts associated with the blockchain. A first shard of the plurality of shards includes a first world state database that includes a first set of world states that store state information about a first set of user accounts. A second shard of the plurality of shards includes a second world state database that includes a second set of world states that store state information about a second set of user accounts.

In some embodiments, each world state is maintained using a digital tree, the first set of world states is maintained using a first set of digital trees, the second set of world states is maintained using a second set of digital trees, and the third set of world states is maintained using a third set of digital trees that includes the first set of digital trees and the second set of digital trees.

In some embodiments, each digital tree includes at least one of a Merkle tree, a Patricia tree, a Merkle Patricia tree, a modified Merkle Patricia tree, or a Bucket tree.

In some embodiments, the first shard is associated with a first blockchain database that includes a first blockchain that stores transaction data associated with the first set of user accounts, the second shard is associated with a second blockchain database that includes a second blockchain that stores transaction data associated with the second set of user accounts. The system merges the first blockchain database and the second blockchain database to generate a third blockchain database that includes a third blockchain that stores transaction data associated with the first set of user accounts and the second set of user accounts.

In some embodiments, the third blockchain includes a first block that stores information indicating that the third blockchain is generated by merging at least two blockchains.

In some embodiments, the first blockchain database includes a first data structure to facilitate searching of data in the first blockchain, the second blockchain database includes a second data structure to facilitate searching of data in the second blockchain, and the third blockchain database includes the first data structure and the second data structure to facilitate searching of data in the third blockchain database.

In some embodiments, the first blockchain database stores a first root hash value for the first set of world states, the second blockchain database stores a second root hash value for the second set of world states, and the third blockchain database stores a third root hash for the third set of world states.

At 2104, the system merges the first shard and the second shard to generate a third shard, including merging the first world state database and the second world state database to generate a third world state database that includes a third set of world states that includes the first set of world states and the second set of world states, in which the third set of world states store state information about the first set of user accounts and the second set of user accounts.

In some embodiments, the system determines that the first shard was generated by a partition process that includes generating a snapshot of a fourth shard, trims the fourth shard or the snapshot of the fourth shard to generate the first shard, and waits for the trimming of the fourth shard or the snapshot of the fourth shard to be completed before merging the first shard and the second shard.

In some embodiments, the system allocates fewer resources to the third shard as compared to the resources allocated to a combination of the first shard and the second shard.

In some embodiments, the resources include at least one of computation power, memory, data storage capacity, or data bandwidth.

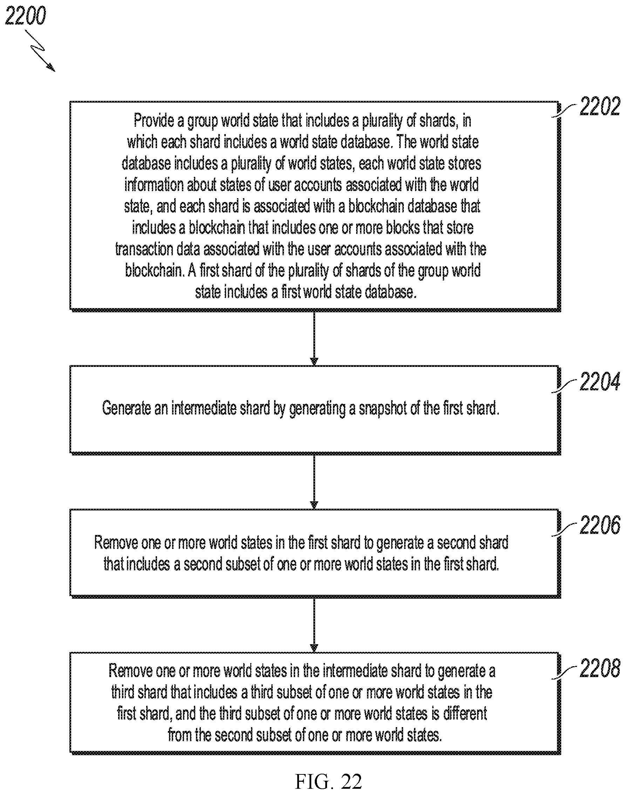

FIG. 22 is a flowchart of an example of a process 2200 for processing world state information associated with one or more blockchains. For convenience, the process 2200 will be described as being performed by a system of one or more computers, located in one or more locations, and programmed appropriately in accordance with this specification. For example, a computing system, e.g., the computing system 106, 108 of FIG. 1 or system 300 of FIG. 3, appropriately programmed, can perform the process 2200. The process 2200 includes the following steps.

At 2202, the system provides a group world state that includes a plurality of shards, in which each shard includes a world state database. The world state database includes a plurality of world states, each world state stores information about states of user accounts associated with the world state, and each shard is associated with a blockchain database that includes a blockchain that includes one or more blocks that store transaction data associated with the user accounts associated with the blockchain. A first shard of the plurality of shards of the group world state includes a first world state database.

At 2204, the system generates an intermediate shard by generating a snapshot of the first shard.

At 2206, the system removes one or more world states in the first shard to generate a second shard that includes a second subset of one or more world states in the first shard.

At 2208, the system removes one or more world states in the intermediate shard to generate a third shard that includes a third subset of one or more world states in the first shard, and the third subset of one or more world states is different from the second subset of one or more world states.

In some embodiments, the system allocates more resources to a combination of the second shard and the third shard as compared to the resources allocated to the first shard.

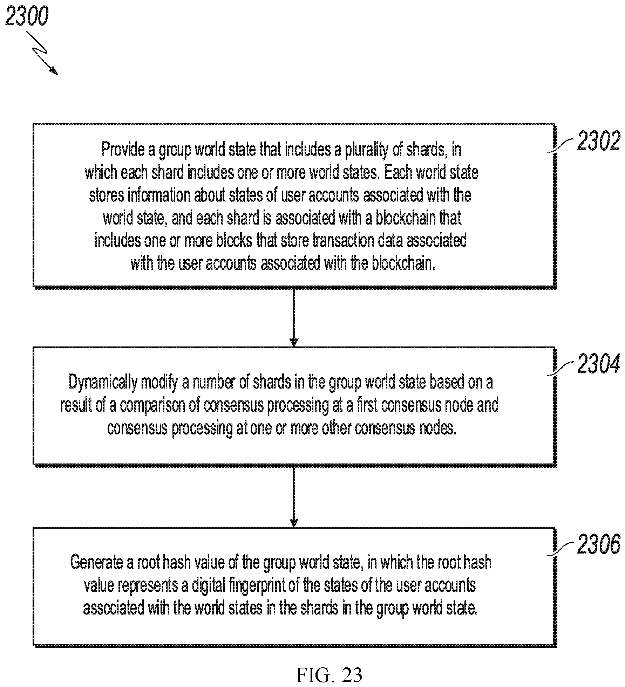

FIG. 23 is a flowchart of an example of a process 2300 for processing world state information associated with one or more blockchains. For convenience, the process 2300 will be described as being performed by a system of one or more computers, located in one or more locations, and programmed appropriately in accordance with this specification. For example, a computing system, e.g., the computing system 106, 108 of FIG. 1 or system 300 of FIG. 3, appropriately programmed, can perform the process 2300. The process 2300 includes the following steps.

At 2302, the system provides a group world state that includes a plurality of shards, in which each shard includes one or more world states. Each world state stores information about states of user accounts associated with the world state, and each shard is associated with a blockchain that includes one or more blocks that store transaction data associated with the user accounts associated with the blockchain.

At 2304, the system dynamically modifies a number of shards in the group world state based on a result of a comparison of consensus processing at a first consensus node and consensus processing at one or more other consensus nodes.

In some embodiments, dynamically modifies a number of shards in the group world state by at least one of (i) partitioning one of the shards into two or more shards, (ii) merging two or more shards into one shard, (iii) adding one or more new shards to the group world state, or (iv) removing one or more shards from the group world state.

In some embodiments, the system dynamically modifies a number of shards in the group world state by increasing the number of shards in the group world state if the consensus processing at the first consensus node is slower than the consensus processing at one or more other consensus nodes by a first threshold.

In some embodiments, the system dynamically modifies a number of shards in the group world state by decreasing the number of shards in the group world state if the consensus processing at the first consensus node is faster than the consensus processing at one or more other consensus nodes by a second threshold.

At 2306, the system generates a root hash value of the group world state, in which the root hash value represents a digital fingerprint of the states of the user accounts associated with the world states in the shards in the group world state.

In some embodiments, the system provides a first set of one or more rules that specify one or more conditions for which the number of shards in the group world state is to be increased.

In some embodiments, the system determines a first speed of consensus processing at the first consensus node, determines a second speed of consensus processing at one or more other consensus nodes, compares the first speed of consensus processing at the first consensus node and the second speed of consensus processing at the one or more other consensus nodes, and generates the result of the comparison of the consensus processing at the first consensus node and the consensus processing at the one or more other consensus nodes.

In some embodiments, the system provides a second set of one or more rules that specify one or more conditions for which the number of shards in the group world state is to be decreased.

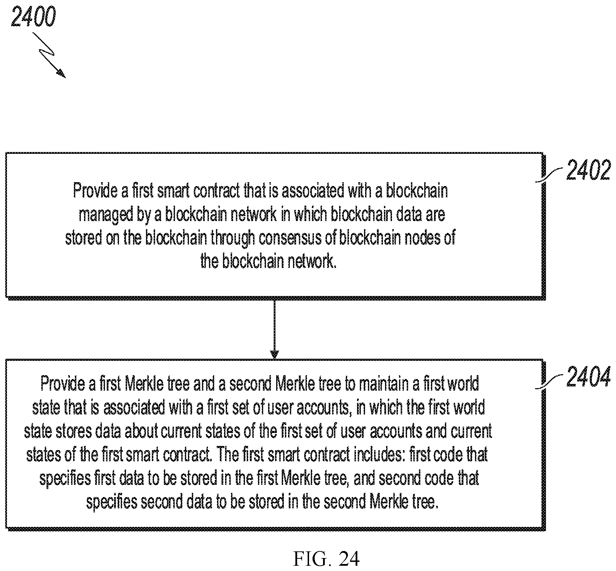

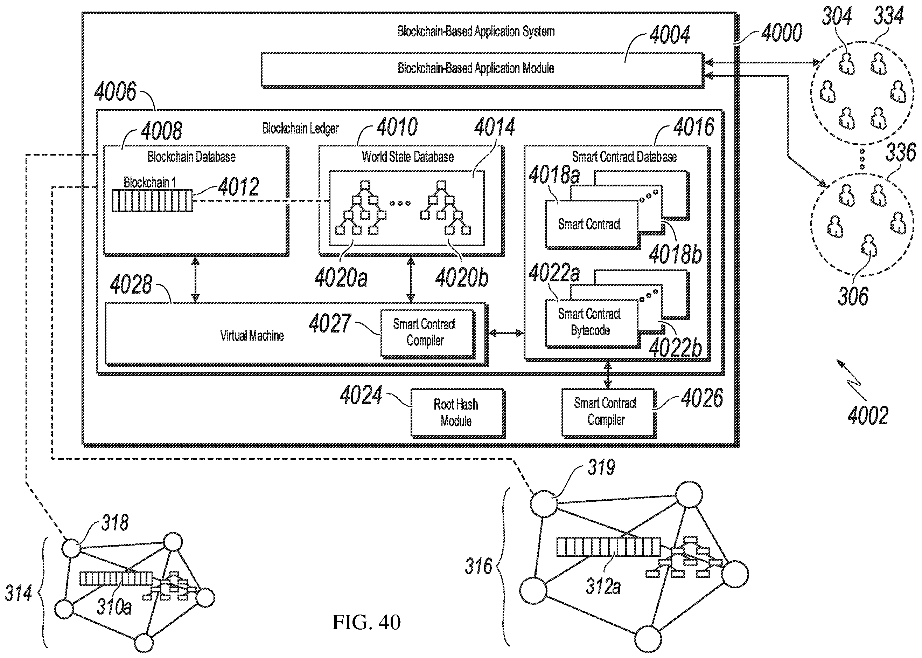

FIG. 24 is a flowchart of an example of a process 2400 for processing world state information associated with a blockchain. For convenience, the process 2400 will be described as being performed by a system of one or more computers, located in one or more locations, and programmed appropriately in accordance with this specification. For example, a computing system, e.g., the computing system 106, 108 of FIG. 1, the system 300 of FIG. 3, or the system 4000 of FIG. 40, appropriately programmed, can perform the process 2400. The process 2400 includes the following steps.

At 2402, the system provides a first smart contract that is associated with a blockchain managed by a blockchain network in which blockchain data are stored on the blockchain through consensus of blockchain nodes of the blockchain network.

At 2404, the system provides a first Merkle tree and a second Merkle tree to maintain a first world state that is associated with a first set of user accounts, in which the first world state stores data about current states of the first set of user accounts and current states of the first smart contract. The first smart contract includes: first code that specifies first data to be stored in the first Merkle tree, and second code that specifies second data to be stored in the second Merkle tree.

In some embodiments, the first code specifies that data associated with accounts of users in a first geographical region are to be stored in the first Merkle tree, and the second code specifies that data associated with accounts of users in a second geographical region are to be stored in the second Merkle tree.

In some embodiments, the system provides a third Merkle tree, in which the first Merkle tree, the second Merkle tree, and the third Merkle tree in combination maintain the world state that is associated with the plurality of user accounts. The first smart contract includes: the first code that specifies first data to be stored in the first Merkle tree, the second code that specifies second data to be stored in the second Merkle tree, and third code that specifies third data to be stored in the third Merkle tree.

In some embodiments, the first Merkle tree has a first address, the second Merkle tree has a second address, the first code specifies the first data to be stored in a Merkle tree having the first address, and the second code specifies the second data to be stored in a Merkle tree having the second address.

In some embodiments, the system provides a virtual machine configured to execute the first smart contract to cause the first data to be stored in the first Merkle tree, and the second data to be stored in the second Merkle tree.

In some embodiments, the system provides a compiler configured to compile the first smart contract into bytecodes that can be executed by the virtual machine.

In some embodiments, the first smart contract specifies that the first Merkle tree be stored at a first storage device, and the second Merkle tree be stored at a second storage device.

In some embodiments, the first smart contract specifies that both the first Merkle tree and the second Merkle tree be stored at a first storage device.

In some embodiments, the system generates an index of the data stored in the first storage device, and storing the index in the first and second Merkle trees.

In some embodiments, the system provides a second smart contract that is also associated with the blockchain, in which the second smart contract includes third code that specifies third data to be stored in the first Merkle tree.

In some embodiments, first Merkle tree stores state information of user accounts based in a first geographical region, and the second Merkle tree stores state information of user accounts based in a second geographical region.

In some embodiments, the system provides a second smart contract that is associated with the blockchain, provides a third Merkle tree to maintain a second world state that stores data about current states of the second smart contract, and determines a world state root hash value based on a first root hash value of the first Merkle tree and a second root hash value of the second Merkle tree.

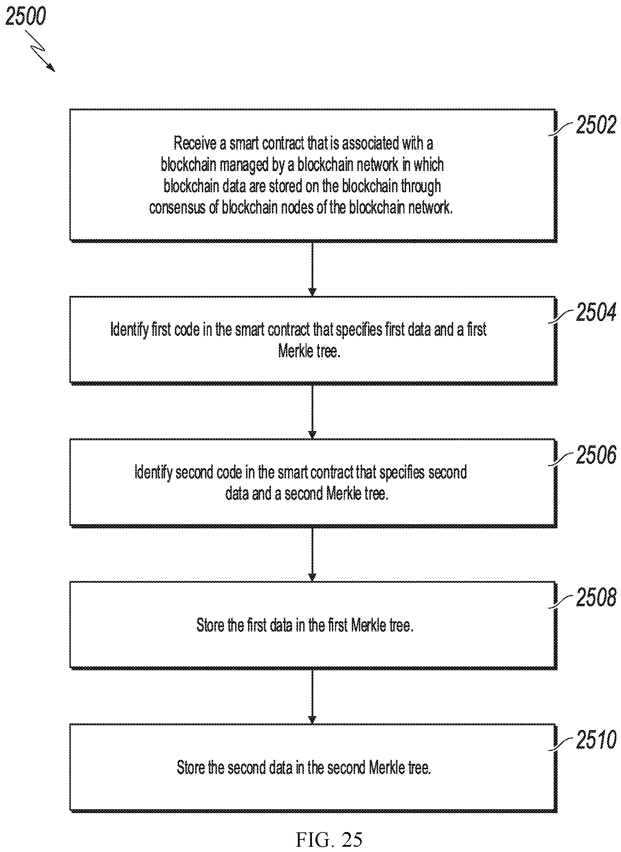

FIG. 25 is a flowchart of an example of a process 2500 for processing world state information associated with a blockchain. For convenience, the process 2500 will be described as being performed by a system of one or more computers, located in one or more locations, and programmed appropriately in accordance with this specification. For example, a computing system, e.g., the computing system 106, 108 of FIG. 1, the system 300 of FIG. 3, or the system 4000 of FIG. 40, appropriately programmed, can perform the process 2500. The process 2500 includes the following steps.

At 2502, the system receives a smart contract that is associated with a blockchain managed by a blockchain network in which blockchain data are stored on the blockchain through consensus of blockchain nodes of the blockchain network.

At 2504, the system identifies first code in the smart contract that specifies first data and a first Merkle tree.

At 2506, the system identifies second code in the smart contract that specifies second data and a second Merkle tree.

In some embodiments, the first code specifies that data associated with accounts of users in a first geographical region are to be stored in the first Merkle tree, and the second code specifies that data associated with accounts of users in a second geographical region are to be stored in the second Merkle tree.

At 2508, the system stores the first data in the first Merkle tree.

At 2510, the system stores the second data in the second Merkle tree.

In some embodiments, the system executes a virtual machine to execute the first smart contract to cause the first data to be stored in the first Merkle tree, and the second data to be stored in the second Merkle tree.

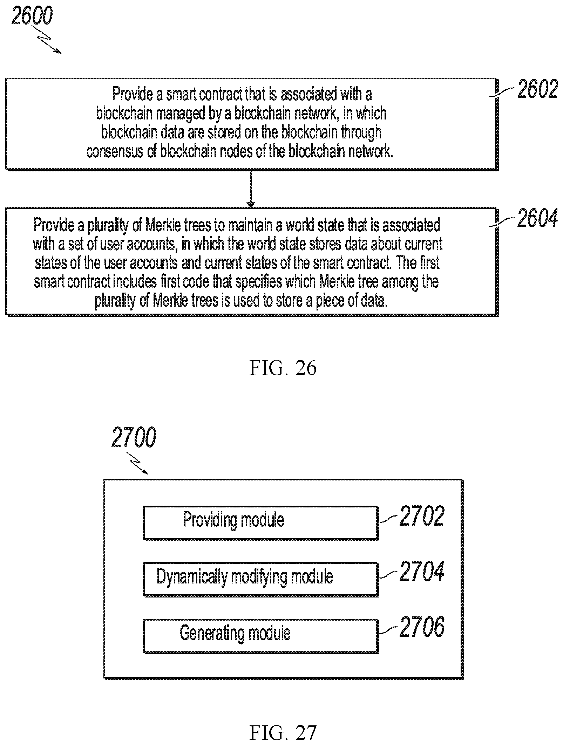

FIG. 26 is a flowchart of an example of a process 2600 for processing world state information associated with a blockchain. For convenience, the process 2600 will be described as being performed by a system of one or more computers, located in one or more locations, and programmed appropriately in accordance with this specification. For example, a computing system, e.g., the computing system 106, 108 of FIG. 1, the system 300 of FIG. 3, or the system 4000 of FIG. 40, appropriately programmed, can perform the process 2600. The process 2600 includes the following steps.

At 2602, the system provides a smart contract that is associated with a blockchain managed by a blockchain network, in which blockchain data are stored on the blockchain through consensus of blockchain nodes of the blockchain network.

At 2604, the system provides a plurality of Merkle trees to maintain a world state that is associated with a set of user accounts, in which the world state stores data about current states of the user accounts and current states of the smart contract. The first smart contract includes first code that specifies which Merkle tree among the plurality of Merkle trees is used to store a piece of data.

In some embodiments, the first code includes a modifier that includes an identifier of a Merkle tree that is used to store the piece of data.

In some embodiments, the identifier of the Merkle tree includes an address of the Merkle tree.

In some embodiments, the identifier of the Merkle tree includes a variable.

In some embodiments, the identifier is determined based on a mathematical function.

In some embodiments, the identifier is determined based on one or more rules.

In some embodiments, the system provides a compiler configured to recognize the modifier and compile the smart contract into bytecode that can be executed by a virtual machine associated with the blockchain.

FIG. 27 is a diagram of an example of modules of an apparatus 2700 in accordance with embodiments of this specification. The apparatus 2700 can be an example of an embodiment of a system that is configured to process world state information associated with one or more blockchains. The apparatus 2700 can correspond to the embodiments described above, and the apparatus 2700 includes the following:
- a providing module 2702 that provides a group world state that includes a plurality of shards, in which each shard includes one or more world states, each world state stores information about states of user accounts associated with the world state, and each shard is associated with a blockchain that includes one or more blocks that store transaction data associated with the user accounts associated with the blockchain;
- a dynamically modifying module 2704 that dynamically modifies a number of shards in the group world state based on one or more criteria, including at least one of (i) partitioning one of the shards into two or more shards, (ii) merging two or more shards into one shard, (iii) adding one or more new shards to the group world state, or (iv) removing one or more shards from the group world state; and
- a generating module 2706 that generates a root hash value of the group world state, in which the root hash value represents a digital fingerprint of the states of the user accounts associated with the world states in the shards in the group world state.

In an optional embodiment, the dynamically modifying module can include a partitioning submodule that partitions a first shard into a second shard and a third shard, the second shard includes a second subset of world states of the first shard, and the third shard includes a third subset of world states of the first shard.

In an optional embodiment, the dynamically modifying module can include a merging sub-module that mergers a second shard and a third shard to generate a first shard, in which the first shard includes one or more world states of the second shard and one or more world states of the third shard.

In an optional embodiment, the dynamically modifying module can include an adding module that adds one or more new shards to the group world state, in which the one or more new shards include one or more world states that were previously not included in the group world state.

In an optional embodiment, the dynamically modifying module can include a removing sub-module that removes one or more shards from the group world state, including removing one or more world states in the removed one or more shards from the group world state.

In an optional embodiment, the apparatus 2700 can further include an evaluating module that evaluates the one or more criteria, and a partitioning module that partitions one of the shards into two or more shards upon determining that the one or more criteria are met.

In an optional embodiment, the apparatus 2700 can further include an evaluating module that evaluates the one or more criteria, and a merging module that merges two or more shards into one shard upon determining that the one or more criteria are met.

In an optional embodiment, the apparatus 2700 can further include a second dynamically modifying module that dynamically modifies resources allocated to the group world state based on the number of shards in the group world state.

In an optional embodiment, the apparatus 2700 can further include an allocating module that allocates more resources to the group worlds state in response to an increase in the number of shards in the group world state.

In an optional embodiment, the apparatus 2700 can further include an allocating module that allocates fewer resources to the group world state in response to a decrease in the number of shards in the group world state.

In an optional embodiment, the resources can include at least one of computation power, memory, data storage capacity, or data bandwidth.

In an optional embodiment, the one or more criteria can include at least one of quality of service measure, computation power requirement, memory requirement, data storage requirement, or data bandwidth requirement.

In an optional embodiment, the apparatus 2700 can further include a determining module that determines at least one of (i) the quality of service measure is below a threshold, (ii) the computation power requirement is not met, (iii) the memory capacity requirement is not met, (iv) the data storage capacity requirement is not met, or (v) the data bandwidth requirement is not met. The apparatus 2600 can further include a partitioning module that, in response to the determination, partitions one of the shards into two or more shards. The apparatus 2600 can further include an allocating module that allocates more resources to a combination of the two or more shards, as compared to the resources allocated to the one of the shards, in which the resources include at least one of computation power, memory capacity, data storage capacity, or data bandwidth.

In an optional embodiment, the apparatus 2700 can further include a determining module that determines at least one of (i) the quality of service measure is above a threshold, (ii) idle or excess computation power is above a threshold, (iii) available memory capacity is above a threshold, (iv) available data storage capacity is above a threshold, or (v) available data bandwidth is above a threshold. The apparatus 2700 can further include a merging module that, in response to the determination, merges two or more shards into a single shard. The apparatus 2700 can further include an allocating module that allocates fewer resources to the single shard after the merging, as compared to the resources allocated to the two or more shards before the merging, in which the resources include at least one of computation power, memory capacity, data storage capacity, or data bandwidth.

In an optional embodiment, each world state can be maintained using at least one of a Merkle tree, a Patricia tree, a Merkle Patricia tree, a modified Merkle Patricia tree, or a Bucket tree.

In an optional embodiment, partitioning one of the shards into two or more shards can include partitioning a first shard into a second shard and a third shard, in which the first shard includes a first world state database that includes a first set of world states. The partitioning module can include a generating sub-module that generates a first snapshot of the first shard, in which the first snapshot includes a snapshot of a first world state database. The partitioning module can include a trimming sub-module that trims the first shard to generate the second shard, including removing one or more world states in the first world state database to generate a second world state database that includes a second subset of one or more world states in the first shard. The partitioning module can include a trimming sub-module that trims the first snapshot of the first shard to generate the third shard, including removing one or more world states in the first world state database to generate a third world state database that includes a third subset of one or more world states in the first shard, in which the third subset of one or more world states is different from the second subset of one or more world states.

In an optional embodiment, partitioning one of the shards into two or more shards can include partitioning one of the shards into three or more shards.

In an optional embodiment, merging two or more shards into one shard can include merging a second shard and a third shard into a first shard. The second shard can include a second world state database that includes a second set of world states that store state information associated with a second set of user accounts. The third shard can include a third world state database that includes a third set of world states that store state information associated with a third set of user accounts. The first shard can include a first world state database that includes a first set of world states that includes the second set of world states and the third set of world states, the first set of world states stores state information associated with a first set of user accounts that includes the second set of user accounts and the third set of user accounts.

In an optional embodiment, partitioning one of the shards into two or more shards can include partitioning a first shard into a second shard and a third shard, the first shard is associated with a first set of user accounts, the second shard is associated with a second set of user accounts, the third shard is associated with a third set of user accounts, the second set of user accounts is a second subset of the first set of user accounts, the third set of user accounts is a third subset of the first set of user accounts, and the third subset of user accounts is different from the second subset of user accounts.

In an optional embodiment, the apparatus 2700 can further include an associating module that associates user accounts with the world states based on a characteristic of the user accounts, in which each user account is associated with only one of the world states.

In an optional embodiment, the user accounts can be associated with the world states based on characteristics of user account identifiers.

In an optional embodiment, the user accounts can be associated with the world states based on predetermined bytes or byte words of the user account identifiers.

In an optional embodiment, the group world state can support a maximum of 2ⁿ world states, and a user account whose user account identifier has the predetermined bytes or byte words equal to m is associated with the m-th world state, 1 ≤ m ≤ 2ⁿ.

In an optional embodiment, the group world state can support a maximum of 2¹⁶ = 65,536 world states, and a user account whose user account identifier has the first two byte words equal to m is associated with the m-th world state, 1 ≤ m ≤ 65,536.

In an optional embodiment, the user accounts can be associated with the world states based on priority levels of user accounts.

In an optional embodiment, the apparatus 2700 can further include a providing module that provides a first set of one or more rules that specify one or more conditions for which a number of shards in the group world state is to be increased.

In an optional embodiment, the apparatus 2700 can further include a providing module that provides a second set of one or more rules that specify one or more conditions for which a number of shards in the group world state is to be decreased.

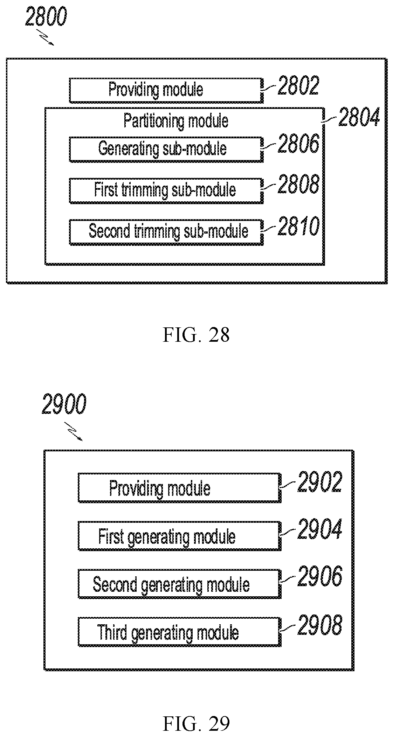

FIG. 28 is a diagram of an example of modules of an apparatus 2800 in accordance with embodiments of this specification. The apparatus 2800 can be an example of an embodiment of a system that is configured to process world state information associated with one or more blockchains. The apparatus 2800 can correspond to the embodiments described above, and the apparatus 2800 includes the following:
- a providing module 2802 that provides a first shard that is associated with a first set of user accounts, in which the first shard includes a first blockchain database and a first world state database, the first blockchain database includes a first blockchain managed by a first blockchain network in which blockchain data are stored on the first blockchain through consensus of blockchain nodes of the first blockchain network, the first world state database includes a plurality of world states, each world state is associated with a plurality of user accounts, and each world state stores current states of the user accounts associated with the world state; and
- a partitioning module 2804 that partitions the first shard into a second shard and a third shard. The partitioning module includes a generating sub-module 2806 that generates a first snapshot of the first shard, in which the first snapshot includes a snapshot of the first blockchain database and a snapshot of the first world state database. The partitioning module includes a first trimming sub-module 2808 that trims the first shard to generate the second shard, including removing one or more world states in the first world state database of the first shard to generate a second world state database that includes a second subset of one or more world states in the first shard. The partitioning module further includes a second trimming sub-module 2810 that trims the first snapshot of the first shard to generate the third shard, including removing one or more world states in the first world state database in the first snapshot to generate a third world state database that includes a third subset of one or more world states in the first shard, in which the third subset of one or more world states is different from the second subset of one or more world states.

In an optional embodiment, the apparatus 2800 can further include an allocating module that allocates more resources to a combination of the second shard and the third shard as compared to the resources allocated to the first shard after the partitioning of the first shard into the second shard and the third shard.

In an optional embodiment, the first world state database can be associated with a first set of user accounts, the second world state database can be associated with a second set of user accounts, the third world state database can be associated with a third set of user accounts, and the first set of user accounts can include a sum of the second set of user accounts and the third set of user accounts.

In an optional embodiment, the first world state database can be associated with a first set of user accounts, the second world state database can be associated with a second set of user accounts, the third world state database can be associated with a third set of user accounts, and the second set of user accounts does not overlap the third set of user accounts.

In an optional embodiment, allocating more resources can include allocating more of at least one of computation power, memory, data storage capacity, or data bandwidth.

In an optional embodiment, generating the snapshot of the first shard can include using a virtual machine associated with the first shard to generate the snapshot of the first shard.

In an optional embodiment, the first blockchain network can include a consensus blockchain network that includes validating peer nodes that participate in a consensus process for determining whether to write data on the blockchain and non-validating peer nodes that do not participate in the consensus process. Generating the snapshot of the first shard can include using the non-validating peer nodes to generate the snapshot.

In an optional embodiment, the consensus blockchain network can include validating peer nodes that participate in a consensus process for determining whether to write data on the blockchain and non-validating peer nodes that do not participate in the consensus process. Generating the snapshot of the first shard can include increasing a number of validating peer nodes, and using the validating peer nodes to generate the snapshot.

In an optional embodiment, each world state in the plurality of world states of the first world state database can include a root node. The first blockchain of the first blockchain database can include a first block, the first block includes a block header and a block body, the block header stores a first hash value derived from a hash of hash values of the root nodes of the plurality of world states of the first world state database, and the first hash value represents a digital fingerprint of the current states of the user accounts associated with the plurality of world states of the first world state database.

In an optional embodiment, each world state in the plurality of world states of the first world state database can include a root node, the first blockchain of the first blockchain database can include a first block, the first block can include a block header and a block body, and the block header stores hash values of the root nodes of the world states in the first world state database.

In an optional embodiment, the second shard can include a second blockchain database that includes a second blockchain that stores transaction data associated with user accounts that are associated with the second shard. The second blockchain can include a first block, and the first block can include a block body that stores information about transactions. The first trimming sub-module can include a first removing sub-module that removes information about transactions associated with user accounts that are not associated with the second subset of the one or more world states in the second world state database.

In an optional embodiment, the third shard can include a third blockchain database that includes a third blockchain that stores transaction data associated with user accounts that are associated with the third shard. The third blockchain can include a first block, and the first block can include a block body that stores information about transactions. The second trimming sub-module can include a second removing sub-module that removes information about transactions associated with user accounts that are not associated with the third subset of one or more world states in the third world state database.

In an optional embodiment, the third shard can include a third blockchain database that includes a third blockchain that stores transaction data associated with user accounts that are associated with the third shard. The apparatus 2800 can further include a partitioning module that partitions the third shard into a fourth shard and a fifth shard. The partitioning module can include a generating sub-module that generates a second snapshot of the third shard, in which the second snapshot includes a snapshot of the third blockchain database and a snapshot of the third world state database. The partitioning module can include a first trimming sub-module that trims the third shard to generate the fourth shard, including removing one or more world states in the third world state database of the third shard to generate a fourth world state database that includes a fourth subset of one or more world states in the third shard. The partitioning module can include a second trimming module that trims the second snapshot of the third shard to generate the fifth shard, including removing one or more world states in the third world state database in the second snapshot to generate a fifth world state database that includes a fifth subset of one or more world states in the third shard, in which the fifth subset of the one or more world states is different from the fourth subset of the one or more world states.

In an optional embodiment, the apparatus 2800 can further include an allocating module that allocates more resources to a combination of the fourth shard and the fifth shard as compared to the resources allocated to the third shard.

In an optional embodiment, each world state can be maintained using a digital tree including at least one of a Merkle tree, a Patricia tree, a Merkle Patricia tree, a modified Merkle Patricia tree, or a Bucket tree.

In an optional embodiment, the apparatus 2800 can further include a generating module that generates a group world state hash value representing the world states of the first and second shards based on hash values of root nodes of the digital trees maintaining the world states of the first and second shards.

In an optional embodiment, the apparatus 2800 can further include a generating module that generates a simplified payment verification proof of a transaction associated with a user account by generating a first proof based on a path from a root node of a group world state to a root node of a sharding world state, generating a second proof based on a path from the root node of the sharding world state to a root node of a world state associated with the user account, and generating a third proof based on a path from the root node of the world state to a node representing the user account.

FIG. 29 is a diagram of an example of modules of an apparatus 2900 in accordance with embodiments of this specification. The apparatus 2900 can be an example of an embodiment of a system that is configured to process world state information associated with one or more blockchains. The apparatus 2900 can correspond to the embodiments described above, and the apparatus 2900 includes the following:
- a providing module 2902 that provides a first shard of a blockchain ledger in which the first shard includes a first blockchain database and a first world state database, the first world state database includes a plurality of world states, and each world state stores current states of the user accounts associated with the world state;
- a first generating module 2904 that generates a first copy of the first shard including a copy of the first blockchain database and a copy of the first world state database;
- a second generating module 2906 that generates a second shard by removing one or more world states in the first world state database of the first shard, in which a second subset of one or more world states in the first shard remains in the second shard; and
- a third generating module 2908 that generates a third shard by removing one or more world states in the first world state database in the first copy of the first shard, in which a third subset of one or more world states in the first shard remains in the third shard, and the third subset of one or more world states is different from the second subset of one or more world states.

In an optional embodiment, the apparatus 2900 can further include an allocating module that allocates more resources to a combination of the second shard and the third shard as compared to the resources allocated to the first shard.

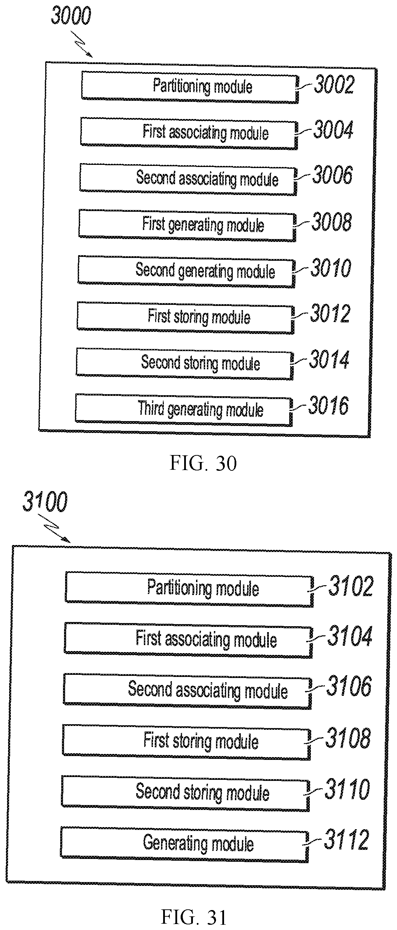

FIG. 30 is a diagram of an example of modules of an apparatus 3000 in accordance with embodiments of this specification. The apparatus 3000 can be an example of an embodiment of a system that is configured to process world state information associated with one or more blockchains. The apparatus 3000 can correspond to the embodiments described above, and the apparatus 3000 includes the following:
- a partitioning module 3002 that partitions a plurality of user accounts into at least a first set of user accounts and a second set of user accounts;
- a first associating module 3004 that associates a first blockchain database and a first world state database with the first set of user accounts, in which the first blockchain database includes a first blockchain managed by a first blockchain network in which blockchain data are stored on the first blockchain through consensus of blockchain nodes of the first blockchain network, the first world state database includes a plurality of world states, each world state is associated with a subset of the first set of user accounts, and each world state stores current states of the user accounts associated with the world state;
- a second associating module 3006 that associates a second blockchain database and a second world state database with the second set of user accounts, in which the second blockchain database includes a second blockchain managed by a second blockchain network in which blockchain data are stored on the second blockchain through consensus of blockchain nodes of the second blockchain network, the second world state database includes a plurality of world states, each world state is associated with a subset of the second set of user accounts, and each world state stores current states of the user accounts associated with the world state;

- a first generating module 3008 that generates a first hash value representing a digital fingerprint of the world states of the first world state database, in which the first hash value is generated based on the root hash values of each world state in the first world state database;
- a second generating module 3010 that generates a second hash value representing a digital fingerprint of the world states of the second world state database, in which the second hash value is generated based on the root hash values of each world state in the second world state database;
- a first storing module 3012 that stores the first hash value at a block header of a first block of the first blockchain;
- a second storing module 3014 that stores the second hash value at a block header of a first block of the second blockchain; and
- a third generating module 3016 that generates a group world state root hash value representing a digital fingerprint of the world states of the first and second world state databases, in which the group world state root hash value is generated based on the first hash value and the second hash value.

FIG. 31 is a diagram of an example of modules of an apparatus 3100 in accordance with embodiments of this specification. The apparatus 3100 can be an example of an embodiment of a system that is configured to process world state information associated with one or more blockchains. The apparatus 3100 can correspond to the embodiments described above, and the apparatus 3100 includes the following:
- a partitioning module 3102 that partitions a plurality of user accounts into at least a first set of user accounts and a second set of user accounts;
- a first associating module 3104 that associates the first set of user accounts with a first blockchain database and a first world state database, in which the first blockchain database stores transaction data associated with the first set of user accounts, the first world state database includes a plurality of world states, and each world state is associated with a subset of the first set of user accounts;
- a second associating module 3106 that associates a second set of user accounts with a second blockchain database and a second world state database, in which the second blockchain database stores transaction data associated with the second set of user accounts, the second world state database includes a plurality of world states, and each world state is associated with a subset of the second set of user accounts;
- a first storing module 3108 that, at a block header of a first block of the first blockchain, stores a first hash value that represents a digital fingerprint of the world states in the first world state database;
- a second storing module 3110 that, at a block header of a first block of the second blockchain, stores a second hash value that represents a digital fingerprint of the world states in the second world state database; and
- a generating module 3112 that generates a group world state root hash value that represents a digital fingerprint of the world states in the first and second world state databases based on the first hash value and the second hash value.

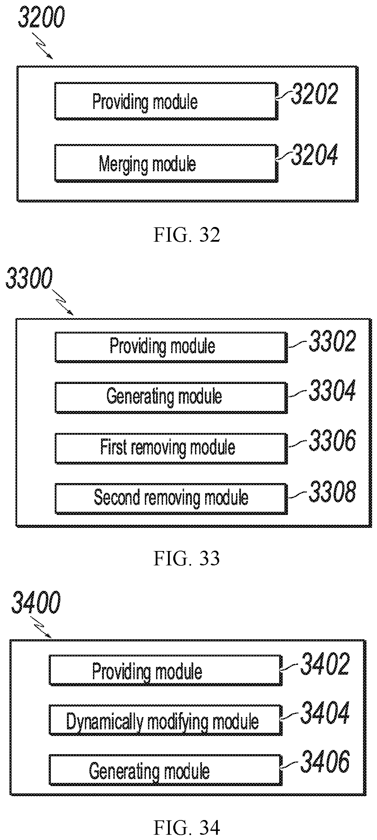

FIG. 32 is a diagram of an example of modules of an apparatus 3200 in accordance with embodiments of this specification. The apparatus 3200 can be an example of an embodiment of a system that is configured to process world state information associated with one or more blockchains. The apparatus 3200 can correspond to the embodiments described above, and the apparatus 3200 includes the following:
- a providing module 3202 that provides a group world state that includes a plurality of shards, in which each shard includes a world state database, the world state database includes a plurality of world states, each world state stores information about states of user accounts associated with the world state, each shard is associated with a blockchain database that includes a blockchain that includes one or more blocks that store transaction data associated with the user accounts associated with the blockchain; wherein a first shard of the plurality of shards includes a first world state database that includes a first set of world states that store state information about a first set of user accounts, a second shard of the plurality of shards includes a second world state database that includes a second set of world states that store state information about a second set of user accounts; and
- a merging module 3204 that merges the first shard and the second shard to generate a third shard, including merging the first world state database and the second world state database to generate a third world state database that includes a third set of world states that includes the first set of world states and the second set of world states, in which the third set of world states store state information about the first set of user accounts and the second set of user accounts.

In an optional embodiment, each world state can be maintained using a digital tree, the first set of world states can be maintained using a first set of digital trees, the second set of world states can be maintained using a second set of digital trees, and the third set of world states can be maintained using a third set of digital trees that includes the first set of digital trees and the second set of digital trees.

In an optional embodiment, each digital tree can include at least one of a Merkle tree, a Patricia tree, a Merkle Patricia tree, a modified Merkle Patricia tree, or a Bucket tree.

In an optional embodiment, the apparatus 3200 can further include a determining module that determines that the first shard was generated by a partition process that includes generating a snapshot of a fourth shard, a trimming module that trims the fourth shard or the snapshot of the fourth shard to generate the first shard, and a waiting module that waits for the trimming of the fourth shard or the snapshot of the fourth shard to be completed before merging the first shard and the second shard.

In an optional embodiment, the apparatus 3200 can further include an allocating module that allocates fewer resources to the third shard as compared to the resources allocated to a combination of the first shard and the second shard.

In an optional embodiment, the resources can include at least one of computation power, memory, data storage capacity, or data bandwidth.

In an optional embodiment, the first shard can be associated with a first blockchain database that includes a first blockchain that stores transaction data associated with the first set of user accounts, the second shard is associated with a second blockchain database that includes a second blockchain that stores transaction data associated with the second set of user accounts. The apparatus 3200 can further include a merging module that merges the first blockchain database and the second blockchain database to generate a third blockchain database that includes a third blockchain that stores transaction data associated with the first set of user accounts and the second set of user accounts.

In an optional embodiment, the third blockchain can include a first block that stores information indicating that the third blockchain is generated by merging at least two blockchains.

In an optional embodiment, the first blockchain database can include a first data structure to facilitate searching of data in the first blockchain, the second blockchain database can include a second data structure to facilitate searching of data in the second blockchain, and the third blockchain database can include the first data structure and the second data structure to facilitate searching of data in the third blockchain database.

In an optional embodiment, the first blockchain database can store a first root hash value for the first set of world states, the second blockchain database can store a second root hash value for the second set of world states, and the third blockchain database can store a third root hash for the third set of world states.

FIG. 33 is a diagram of an example of modules of an apparatus 3300 in accordance with embodiments of this specification. The apparatus 3300 can be an example of an embodiment of a system that is configured to process world state information associated with one or more blockchains. The apparatus 3300 can correspond to the embodiments described above, and the apparatus 3300 includes the following:
- a providing module 3302 that provides a group world state that includes a plurality of shards, in which each shard includes a world state database, the world state database includes a plurality of world states, each world state stores information about states of user accounts associated with the world state, and each shard is associated with a blockchain database that includes a blockchain that includes one or more blocks that store transaction data associated with the user accounts associated with the blockchain; wherein a first shard of the plurality of shards of the group world state includes a first world state database;
- a generating module 3304 that generates an intermediate shard by generating a snapshot of the first shard;
- a first removing module 3306 that removes one or more world states in the first shard to generate a second shard that includes a second subset of one or more world states in the first shard; and
- a second removing module 3308 that removes one or more world states in the intermediate shard to generate a third shard that includes a third subset of one or more world states in the first shard, in which the third subset of one or more world states is different from the second subset of one or more world states.

In an optional embodiment, the apparatus 3300 can further include an allocating module that allocates more resources to a combination of the second shard and the third shard as compared to the resources allocated to the first shard.

FIG. 34 is a diagram of an example of modules of an apparatus 3400 in accordance with embodiments of this specification. The apparatus 3400 can be an example of an embodiment of a system that is configured to process world state information associated with one or more blockchains. The apparatus 3400 can correspond to the embodiments described above, and the apparatus 3400 includes the following:
- a providing module 3402 that provides a group world state that includes a plurality of shards, in which each shard includes one or more world states, each world state stores information about states of user accounts associated with the world state, and each shard is associated with a blockchain that includes one or more blocks that store transaction data associated with the user accounts associated with the blockchain;
- a dynamically modifying module 3404 that dynamically modifies a number of shards in the group world state based on a result of a comparison of consensus processing at a first consensus node and consensus processing at one or more other consensus nodes; and
- a generating module 3406 that generates a root hash value of the group world state, in which the root hash value represents a digital fingerprint of the states of the user accounts associated with the world states in the shards in the group world state.

In an optional embodiment, dynamically modifying a number of shards in the group world state can include at least one of (i) partitioning one of the shards into two or more shards, (ii) merging two or more shards into one shard, (iii) adding one or more new shards to the group world state, or (iv) removing one or more shards from the group world state.

In an optional embodiment, dynamically modifying a number of shards in the group world state can include increasing the number of shards in the group world state if the consensus processing at the first consensus node is slower than the consensus processing at one or more other consensus nodes by a first threshold.

In an optional embodiment, dynamically modifying a number of shards in the group world state can include decreasing the number of shards in the group world state if the consensus processing at the first consensus node is faster than the consensus processing at one or more other consensus nodes by a second threshold.

In an optional embodiment, the apparatus 3400 can further include a providing module that provides a first set of one or more rules that specify one or more conditions for which the number of shards in the group world state is to be increased.

In an optional embodiment, the apparatus 3400 can further include a providing module that provides a second set of one or more rules that specify one or more conditions for which the number of shards in the group world state is to be decreased.

In an optional embodiment, the apparatus 3400 can further include a first determining module that determines a first speed of consensus processing at the first consensus node; a second determining module that determines a second speed of consensus processing at one or more other consensus nodes; a comparing module that compares the first speed of consensus processing at the first consensus node and the second speed of consensus processing at the one or more other consensus nodes; and a generating module that generates the result of the comparison of the consensus processing at the first consensus node and the consensus processing at the one or more other consensus nodes.

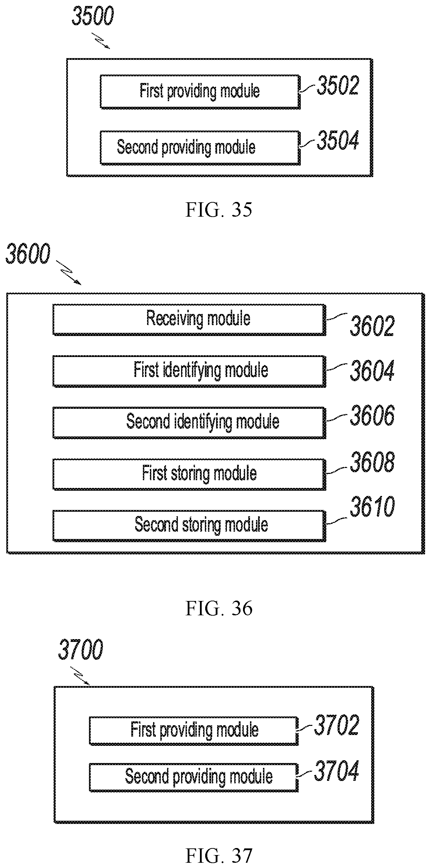

FIG. 35 is a diagram of an example of modules of an apparatus 3500 in accordance with embodiments of this specification. The apparatus 3500 can be an example of an embodiment of a system that is configured to process world state information associated with a blockchain. The apparatus 3500 can correspond to the embodiments described above, and the apparatus 3500 includes the following:
- a first providing module 3502 that provides a first smart contract that is associated with a blockchain managed by a blockchain network in which blockchain data are stored on the blockchain through consensus of blockchain nodes of the blockchain network; and
- a second providing module 3504 that provides a first Merkle tree and a second Merkle tree to maintain a first world state that is associated with a first set of user accounts, in which the first world state stores data about current states of the first set of user accounts and current states of the first smart contract; and wherein the first smart contract includes: first code that specifies first data to be stored in the first Merkle tree, and second code that specifies second data to be stored in the second Merkle tree.

In an optional embodiment, the first code can specify that data associated with accounts of users in a first geographical region are to be stored in the first Merkle tree, and the second code can specify that data associated with accounts of users in a second geographical region are to be stored in the second Merkle tree.

In an optional embodiment, the apparatus 3500 can further include a third providing module that provides a third Merkle tree, in which the first Merkle tree, the second Merkle tree, and the third Merkle tree in combination maintain the world state that is associated with the plurality of user accounts. The first smart contract can include: the first code that specifies first data to be stored in the first Merkle tree, the second code that specifies second data to be stored in the second Merkle tree, and third code that specifies third data to be stored in the third Merkle tree.

In an optional embodiment, the first Merkle tree can have a first address, the second Merkle tree can have a second address, the first code can specify that the first data are to be stored in a Merkle tree having the first address, and the second code can specify that the second data are to be stored in a Merkle tree having the second address.

In an optional embodiment, the apparatus 3500 can further include a fourth providing module that provides a virtual machine configured to execute the first smart contract to cause the first data to be stored in the first Merkle tree, and the second data to be stored in the second Merkle tree.

In an optional embodiment, the apparatus 3500 can further include a fifth providing module that provides a compiler configured to compile the first smart contract into bytecodes that can be executed by the virtual machine.

In an optional embodiment, the first smart contract can specify that the first Merkle tree be stored at a first storage device, and the second Merkle tree be stored at a second storage device.

In an optional embodiment, the first smart contract can specify that both the first Merkle tree and the second Merkle tree be stored at a first storage device.

In an optional embodiment, the apparatus 3500 can further include a generating module that generates an index of the data stored in the first storage device, and storing the index in the first and second Merkle trees.

In an optional embodiment, the apparatus 3500 can further include a sixth providing module that provides a second smart contract that is also associated with the blockchain, in which the second smart contract includes third code that specifies third data to be stored in the first Merkle tree.

In an optional embodiment, the first Merkle tree can store state information of user accounts based in a first geographical region, and the second Merkle tree can store state information of user accounts based in a second geographical region.

In an optional embodiment, the apparatus 3500 can further include a seventh providing module that provides a second smart contract that is associated with the blockchain; an eighth providing module that provides a third Merkle tree to maintain a second world state that stores data about current states of the second smart contract; and a determining module that determines a world state root hash value based on a first root hash value of the first Merkle tree and a second root hash value of the second Merkle tree.

FIG. 36 is a diagram of an example of modules of an apparatus 3600 in accordance with embodiments of this specification. The apparatus 3600 can be an example of an embodiment of a system that is configured to process world state information associated with a blockchain. The apparatus 3600 can correspond to the embodiments described above, and the apparatus 3600 includes the following:
- a receiving module 3602 that receives a smart contract that is associated with a blockchain managed by a blockchain network in which blockchain data are stored on the blockchain through consensus of blockchain nodes of the blockchain network;
- a first identifying module 3604 that identifies first code in the smart contract that specifies first data and a first Merkle tree;
- a second identifying module 3606 that identifies second code in the smart contract that specifies second data and a second Merkle tree;
- a first storing module 3608 that stores the first data in the first Merkle tree; and
- a second storing module 3610 that stores the second data in the second Merkle tree.

In an optional embodiment, the first code can specify that data associated with accounts of users in a first geographical region are to be stored in the first Merkle tree, and the second code can specify that data associated with accounts of users in a second geographical region are to be stored in the second Merkle tree.

In an optional embodiment, the apparatus 3600 can further include an executing module that executes a virtual machine to execute the first smart contract to cause the first data to be stored in the first Merkle tree, and the second data to be stored in the second Merkle tree.

FIG. 37 is a diagram of an example of modules of an apparatus 3700 in accordance with embodiments of this specification. The apparatus 3700 can be an example of an embodiment of a system that is configured to process world state information associated with a blockchain. The apparatus 3700 can correspond to the embodiments described above, and the apparatus 3700 includes the following:
- a first providing module 3702 that provides a smart contract that is associated with a blockchain managed by a blockchain network, in which blockchain data are stored on the blockchain through consensus of blockchain nodes of the blockchain network; and
- a second providing module that provides a plurality of Merkle trees to maintain a world state that is associated with a set of user accounts, in which the world state stores data about current states of the user accounts and current states of the smart contract; wherein the first smart contract includes first code that specifies which Merkle tree among the plurality of Merkle trees is used to store a piece of data.

In an optional embodiment, the first code can include a modifier that includes an identifier of a Merkle tree that is used to store the piece of data.

In an optional embodiment, the identifier of the Merkle tree can include an address of the Merkle tree.

In an optional embodiment, the identifier of the Merkle tree can include a variable.

In an optional embodiment, the identifier can be determined based on a mathematical function.

In an optional embodiment, the identifier can be determined based on one or more rules.

In an optional embodiment, the apparatus 3700 can further include a third providing module that provides a compiler configured to recognize the modifier and compile the smart contract into bytecode that can be executed by a virtual machine associated with the blockchain.

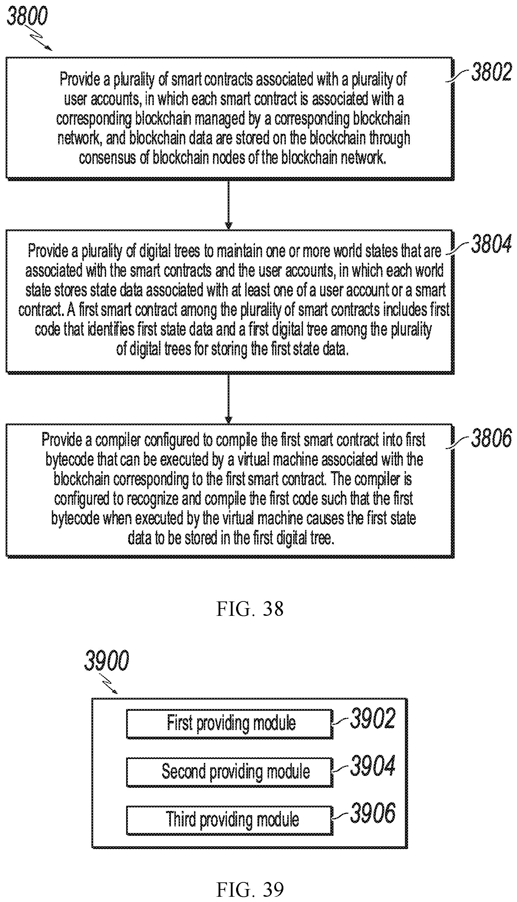

FIG. 38 is a flowchart of an example of a process 3800 for processing world state information associated with a blockchain. For convenience, the process 3800 will be described as being performed by a system of one or more computers, located in one or more locations, and programmed appropriately in accordance with this specification. For example, a computing system, e.g., the computing system 106, 108 of FIG. 1, the system 300 of FIG. 3, or the system 4000 of FIG. 40, appropriately programmed, can perform the process 3800. The process 3800 includes the following steps.

At 3802, the system provides a plurality of smart contracts associated with a plurality of user accounts, in which each smart contract is associated with a corresponding blockchain managed by a corresponding blockchain network, and blockchain data are stored on the blockchain through consensus of blockchain nodes of the blockchain network.

In some embodiments, the smart contracts include code written in a high-level language or a blockchain programming language, e.g., Solidity, Serpent, or low-level Lisp-like language (LLL).

At 3804, the system provides a plurality of digital trees to maintain one or more world states that are associated with the smart contracts and the user accounts, in which each world state stores state data associated with at least one of a user account or a smart contract. A first smart contract among the plurality of smart contracts includes first code that identifies first state data and a first digital tree among the plurality of digital trees for storing the first state data.

In some embodiments, the state data identified by the first code include at least one of (i) data about a state of a user account associated with the first smart contract, or (ii) data about a state of the first smart contract.

In some embodiments, the first smart contract includes second code that identifies second state data and a second digital tree among the plurality of digital trees for storing the second state data. The compiler is configured to recognize and compile the first code and the second code such that the first bytecode when executed by the virtual machine causes the first state data to be stored in the first digital tree and the second state data to be stored in the second digital tree.

In some embodiments, the first and second digital trees in combination maintain a world state that is associated with user accounts associated with the first smart contract.

In some embodiments, the first code specifies that state data associated with accounts of users in a first geographical region are to be stored in the first digital tree, and the second code specifies that state data associated with accounts of users in a second geographical region are to be stored in the second digital tree.

In some embodiments, the first smart contract includes third code that identifies third state data and a third digital tree among the plurality of digital trees for storing the third state data. The first, second, and third digital trees in combination maintain the world state that is associated with user accounts associated with the first smart contract. The compiler is configured to recognize and compile the first code, the second code, and the third code such that the first bytecode when executed by the virtual machine causes the first state data to be stored in the first digital tree, the second state data to be stored in the second digital tree, and the third state data to be stored in the third digital tree.

In some embodiments, the first, second, and third digital trees in combination maintain a world state that is associated with user accounts associated with the first smart contract.

In some embodiments, the first code specifies that state data associated with accounts of users in a first geographical region are to be stored in the first digital tree, the second code specifies that state data associated with accounts of users in a second geographical region are to be stored in the second digital tree, and the third code specifies that state data associated with accounts of users in a third geographical region are to be stored in the third digital tree.

In some embodiments, the first code includes a first address of the first digital tree, and the compiler is configured to compile the first smart contract into the first bytecode such that the first bytecode when executed by the virtual machine causes the first state data to be stored in the first digital tree having the first address.

In some embodiments, the first address is represented by a constant value.

In some embodiments, the first address is determined by at least one of a Boolean function or a mathematical function.

In some embodiments, the first address is determined by a rule set comprising one or more rules.

In some embodiments, the first address is determined at a first time period when the first smart contract is compiled, or at a second time period when the first bytecode is executed.

At 3806, the system provides a compiler configured to compile the first smart contract into first bytecode that can be executed by a virtual machine associated with the blockchain corresponding to the first smart contract. The compiler is configured to recognize and compile the first code such that the first bytecode when executed by the virtual machine causes the first state data to be stored in the first digital tree.

In some embodiments, a second smart contract among the plurality of smart contracts includes fourth code that identifies fourth state data and a fourth digital tree among the plurality of digital trees for storing the fourth state data. The first and second smart contracts are associated with a same blockchain, and the first and fourth digital trees in combination maintain a world state that stores state data of user accounts associated with the first and second smart contracts. The compiler is configured to compile the second smart contract into second bytecode. The compiler is configured to recognize and compile the fourth code such that the second bytecode when executed by the virtual machine causes the fourth state data to be stored in the fourth digital tree.

In some embodiments, second code includes a second address of the second digital tree, and the compiler is configured to compile the first smart contract into the first bytecode such that the first bytecode when executed by the virtual machine causes the second state data to be stored in the second digital tree having the second address.

In some embodiments, the second address is represented by a constant value.

In some embodiments, the second address is determined by a Boolean function.

In some embodiments, the second address is determined by a mathematical function.

In some embodiments, the second address is determined by a rule set comprising one or more rules.

In some embodiments, the second address is determined at a first time period when the second smart contract is compiled.

In some embodiments, the second address is determined at a second time period when the second bytecode is executed.

In some embodiments, the third code includes a third address of the third digital tree, and the compiler is configured to compile the first smart contract into the first bytecode such that the first bytecode when executed by the virtual machine causes the third state data to be stored in the third digital tree having the third address.

In some embodiments, the fourth code includes a fourth address of the fourth digital tree, and the compiler is configured to compile the second smart contract into the second bytecode such that the second bytecode when executed by the virtual machine causes the fourth state data to be stored in the fourth digital tree having the fourth address.

In some embodiments, the system further executes the compiler to generate at least one of the first bytecode or the second bytecode.

In some embodiments, the system further provides the virtual machine.

In some embodiments, the system further executes the virtual machine and performs at least one of storing the first state data in the first digital tree, storing the second state data in the second digital tree, storing the third state data in the third digital tree, or storing the fourth state data in the fourth digital tree.

In some embodiments, the system further determines a first root hash value of the first digital tree, determines a second root hash value of the second digital tree, and determines a world state root hash value based on the first root hash value and the second root hash value.

In some embodiments, the system further determines a third root hash value of the third digital tree, and determines the world state root hash value based on the first root hash value, the second root hash value, and the third root hash value.

In some embodiments, the world state root hash value represents a digital fingerprint of the state or states of the user accounts, smart contract, or smart contracts associated with the world state.

In some embodiments, the first smart contract specifies that the first digital tree be stored at a first storage device, and the second digital tree be stored at a second storage device.

In some embodiments, the first smart contract specifies that both the first digital tree and the second digital tree be stored at a first storage device.

In some embodiments, the system further generates an index of the data stored in the first storage device, and storing the index in the first and second digital trees.

In some embodiments, each digital tree can include, e.g., a Merkle tree, a Patricia tree, a Merkle Patricia tree, a modified Merkle Patricia tree, or a Bucket tree.

FIG. 39 is a diagram of an example of modules of an apparatus 3900 in accordance with embodiments of this specification. The apparatus 3900 can be an example of an embodiment of a system that is configured to process world state information associated with a blockchain. The apparatus 3900 can correspond to the embodiments described above, and the apparatus 3900 includes the following:
- a first providing module 3902 that provides a plurality of smart contracts associated with a plurality of user accounts, in which each smart contract is associated with a corresponding blockchain managed by a corresponding blockchain network, and blockchain data are stored on the blockchain through consensus of blockchain nodes of the blockchain network;
- a second providing module 3904 that provides a plurality of digital trees to maintain one or more world states that are associated with the smart contracts and the user accounts, in which each world state stores state data associated with at least one of a user account or a smart contract, in which a first smart contract among the plurality of smart contracts includes first code that identifies first state data and a first digital tree among the plurality of digital trees for storing the first state data; and
- a third providing module 3906 that provides a compiler configured to compile the first smart contract into first bytecode that can be executed by a virtual machine associated with the blockchain corresponding to the first smart contract, in which the compiler is configured to recognize and compile the first code such that the first bytecode when executed by the virtual machine causes the first state data to be stored in the first digital tree.

In an optional embodiment, the state data identified by the first code can include at least one of (i) data about a state of a user account associated with the first smart contract, or (ii) data about a state of the first smart contract.

In an optional embodiment, the first smart contract can include second code that identifies second state data and a second digital tree among the plurality of digital trees for storing the second state data. The compiler can be configured to recognize and compile the first code and the second code such that the first bytecode when executed by the virtual machine causes the first state data to be stored in the first digital tree and the second state data to be stored in the second digital tree.

In an optional embodiment, the first and second digital trees in combination can maintain a world state that is associated with user accounts associated with the first smart contract.

In an optional embodiment, the first code can specify that state data associated with accounts of users in a first geographical region are to be stored in the first digital tree, and the second code can specify that state data associated with accounts of users in a second geographical region are to be stored in the second digital tree.

In an optional embodiment, the first smart contract can include third code that identifies third state data and a third digital tree among the plurality of digital trees for storing the third state data. The first, second, and third digital trees in combination can maintain the world state that is associated with user accounts associated with the first smart contract. The compiler can be configured to recognize and compile the first code, the second code, and the third code such that the first bytecode when executed by the virtual machine causes the first state data to be stored in the first digital tree, the second state data to be stored in the second digital tree, and the third state data to be stored in the third digital tree.

In an optional embodiment, the first, second, and third digital trees in combination can maintain a world state that is associated with user accounts associated with the first smart contract.

In an optional embodiment, the first code can specify that state data associated with accounts of users in a first geographical region are to be stored in the first digital tree, the second code can specify that state data associated with accounts of users in a second geographical region are to be stored in the second digital tree, and the third code can specify that state data associated with accounts of users in a third geographical region are to be stored in the third digital tree.

In an optional embodiment, a second smart contract among the plurality of smart contracts can include fourth code that identifies fourth state data and a fourth digital tree among the plurality of digital trees for storing the fourth state data. The first and second smart contracts can be associated with a same blockchain, and the first and fourth digital trees in combination can maintain a world state that stores state data of user accounts associated with the first and second smart contracts. The compiler can be configured to compile the second smart contract into second bytecode. The compiler can be configured to recognize and compile the fourth code such that the second bytecode when executed by the virtual machine causes the fourth state data to be stored in the fourth digital tree.

In an optional embodiment, the first code can include a first address of the first digital tree, and the compiler can be configured to compile the first smart contract into the first bytecode such that the first bytecode when executed by the virtual machine causes the first state data to be stored in the first digital tree having the first address.

In an optional embodiment, the first address can be represented by a constant value.

In an optional embodiment, the first address can be determined by at least one of a Boolean function or a mathematical function.

In an optional embodiment, the first address can be determined by a rule set that includes one or more rules.

In an optional embodiment, the first address can be determined at a first time period when the first smart contract is compiled.

In an optional embodiment, the first address can be determined at a second time period when the first bytecode is executed.

In an optional embodiment, the second code can include a second address of the second digital tree, and the compiler can be configured to compile the first smart contract into the first bytecode such that the first bytecode when executed by the virtual machine causes the second state data to be stored in the second digital tree having the second address.

In an optional embodiment, the second address can be represented by a constant value.

In an optional embodiment, the second address can be determined by a Boolean function.

In an optional embodiment, the second address can be determined by a mathematical function.

In an optional embodiment, the second address can be determined by a rule set comprising one or more rules.

In an optional embodiment, the second address can be determined at a first time period when the second smart contract is compiled.

In an optional embodiment, the second address can be determined at a second time period when the second bytecode is executed.

In an optional embodiment, the third code can include a third address of the third digital tree, and the compiler can be configured to compile the first smart contract into the first bytecode such that the first bytecode when executed by the virtual machine causes the third state data to be stored in the third digital tree having the third address.

In an optional embodiment, the fourth code can include a fourth address of the fourth digital tree, and the compiler can be configured to compile the second smart contract into the second bytecode such that the second bytecode when executed by the virtual machine causes the fourth state data to be stored in the fourth digital tree having the fourth address.

In an optional embodiment, the apparatus 3900 can further include an executing module that executes the compiler to generate at least one of the first bytecode or the second bytecode.

In an optional embodiment, the apparatus 3900 can further include a fourth providing module that provides the virtual machine.

In an optional embodiment, the apparatus 3900 can further include an executing module that executes the virtual machine, and a storing module that performs at least one of storing the first state data in the first digital tree, storing the second state data in the second digital tree, storing the third state data in the third digital tree, or storing the fourth state data in the fourth digital tree.

In an optional embodiment, the apparatus 3900 can further include a determining module that determines a first root hash value of the first digital tree, determines a second root hash value of the second digital tree, and determines a world state root hash value based on the first root hash value and the second root hash value.

In an optional embodiment, the apparatus 3900 can further include a determining module that determines a third root hash value of the third digital tree, and determines the world state root hash value based on the first root hash value, the second root hash value, and the third root hash value.

In an optional embodiment, the world state root hash value can represent a digital fingerprint of the state or states of the user accounts, smart contract, or smart contracts associated with the world state.

In an optional embodiment, the first smart contract can specify that the first digital tree be stored at a first storage device, and the second digital tree be stored at a second storage device.

In an optional embodiment, the first smart contract can specify that both the first digital tree and the second digital tree be stored at a first storage device.

In an optional embodiment, the apparatus 3900 can further include a generating module that generates an index of the data stored in the first storage device, and storing the index in the first and second digital trees.

In an optical embodiment, each digital tree can include, e.g., a Merkle tree, a Patricia tree, a Merkle Patricia tree, a modified Merkle Patricia tree, or a Bucket tree.

FIG. 40 shows an example of an environment 4002 in which users (e.g., 304 and 306) access services provided by the system 4000 through a blockchain-based application module 4004. The application module 4004 can provide services similar to the application module 308 of FIG. 3. The system 4000 stores transaction records and user account state information in a distributed blockchain ledger. In general, the blockchain ledger includes three parts. The first part includes the world state, which stores the latest user account state information in the ledger in, e.g., key-value pairs. The second part includes a blockchain record of all the transactions. The blockchain ledger is maintained by a blockchain network, which can be, e.g., a consensus blockchain network described above. The consensus nodes of the blockchain network receive state updates in the form of new blocks, use the blocks and the world state to confirm (or commit) transactions, and upon reaching consensus update the world state and add the log of transactions on the blockchain. The third part includes a smart contract database, which stores smart contracts that facilitate the transactions associated with the services provided by the application module 4004.

In some implementations, the blockchain ledger is maintained by one or more blockchain networks, e.g., 314, 316, similar to those in FIG. 3. The system 4000 includes a local copy of a blockchain ledger 4006 that includes a blockchain database 4008, and a world state database 4010, and a smart contract database 4016. The blockchain database 4008 includes a blockchain 4012. The world state database 4010 includes a world state 4014, which is maintained by tree-like data structures, or digital trees, e.g., 4020a, 4020b, collectively referenced as 4020. Each digital tree can be, e.g., a Merkle tree, a Patricia tree, a Merkle Patricia tree, a modified Merkle Patricia tree, or a Bucket tree. In the examples below, Merkle trees are used as examples of the digital trees 4020, but other types of digital trees can also be used. For example, the blockchain database 4008 stores a local copy of the blockchain maintained by the blockchain networks. The world state database 4010 stores a local copy of the world state maintained by the blockchain networks.

In the example of FIG. 40, the blockchain ledger 4006 includes a blockchain database 4008 that include a blockchain 4012, and a world state database 4010 includes a world state 4014. It some implementations, the blockchain ledger 4006 can include multiple blockchain databases that include multiple blockchains, or multiple partitions or shards of blockchains, similar to the example shown in FIG. 3. Similarly, the blockchain ledger 4006 can include multiple world state databases that include multiple world states, or multiple partitions or shards of world states, similar to the example shown in FIG. 3.

The blockchain ledger 4006 includes a smart contract database 4016 that includes one or more smart contracts, e.g., 4018a, 4018b, collectively referenced as 4018. The smart contract database 4016 stores a local copy of the smart contracts and corresponding smart contract bytecodes maintained by the blockchain networks. The smart contracts 4018 are associated with the blockchain 4012 and the world state 4014. The state data of the smart contracts and the state data of user accounts associated with the smart contracts are stored in the world state 4014.

In general, as the users (e.g., 304 and 306) use the services provided by the blockchain-based application system 4000 to conduct transactions, the system 4000 generates data, e.g., transaction records and user account state information, that are stored in the distributed blockchain ledger 4006. For example, one or more smart contracts 4018 can be executed to update state data associated with the user accounts, in which the state data are written to corresponding Merkle trees. For purpose of illustration, in FIG. 40, the blockchain ledger 4006 is shown as having separate blockchain database 4008 and world state database 4010. In some implementations, the blockchain 4012 and the world state 4014 can belong to the same database. The blockchain 4012 is associated with the world state 4014, and the blockchain networks that maintain the blockchain ledger update both the blockchain and the corresponding world state.

For a given application (e.g., an online payment application or an online shopping application), the transaction data can be stored in the blockchain 4012, and state information can be stored in the world state 4014. This specification describes novel techniques for associating a particular piece of data in a smart contract 4018 with a particular Merkle tree 4020, so that different pieces of data processed by the smart contract 4018 can be stored in different Merkle trees to improve the efficiency of data processing related to the Merkle trees 4020, such as calculating the root hash values of the Merkle trees. The root hash value of the world state 4014 provides a fingerprint of the most current state values of all the user accounts associated with the world state 4014.

The system 4000 includes computation resources, such as computation power (e.g., processor cores, processing threads, CPU run time), memory, non-volatile storage, and/or data bandwidth that support the blockchain-based application module, similar to those described in the example of FIG. 3. When additional Merkle trees 4020 are used to maintain the world state 4014, more computation resources can be allocated to support the world state 4014, so data processing related to the world state 4014 or the Merkle trees 4020 can be made faster.

The blockchain 4012 and the world state 4014 are maintained by blockchain networks (e.g., 314, 316). The system 4000 functions as a node (e.g., 318, 320) among the nodes of the blockchain networks and maintains local copies of the blockchain and the world state, which are stored in the blockchain database 4008 and the world state database 4010. The blockchain networks 314, 316 can be similar to the blockchain network 212 of FIG. 2. Some of the nodes of the blockchain network 314 may overlap the nodes of the blockchain network 316.

For example, the world state 4014 is associated with the blockchain 4012 and stores state information of user accounts associated with the blockchain 4012. The system 4000 includes a root hash module 4024 that is configured to calculate the root hash of the world state 4014 that represents a fingerprint of the of the most current state values of all the user accounts associated with the system 4000. In some implementations, the root hash module 4024 first calculates, for each Merkle tree 4020, the root hash of the Merkle tree 4020, then calculates the root hash of the world state based on the root hash values of the Merkle trees 4020.

The system 4000 includes a smart contract compiler 4026 that compiles the smart contracts 4018 into corresponding bytecodes 4022 (e.g., 4022a, 4022b, collectively referenced as 4022). For example, a smart contract 4018 can be written using a high level programming language, or a blockchain programming language, e.g., Solidity, Serpent, or low-level Lisp-like language (LLL). The compiler 4026 compiles the smart contract into corresponding bytecode 4022 that can be deployed on the blockchain and executed by a virtual machine 4028. In some implementations, the virtual machine 4028 includes a compiler 4027 that performs a function similar to the compiler 4026. For example, the compiler 4027 can be used instead of the compiler 4026. To execute a smart contract 4018, the virtual machine 4028 reads relevant state information from the world state 4014, executes the corresponding bytecode 4022, updates the state information, and writes the updated state information back to the world state 4014. Executing smart contracts may involve the use of other supporting modules and data structures, such as a contract application binary interface (ABI), which is used to interact with the smart contract from outside the blockchain and for interactiosn with other smart contracts.

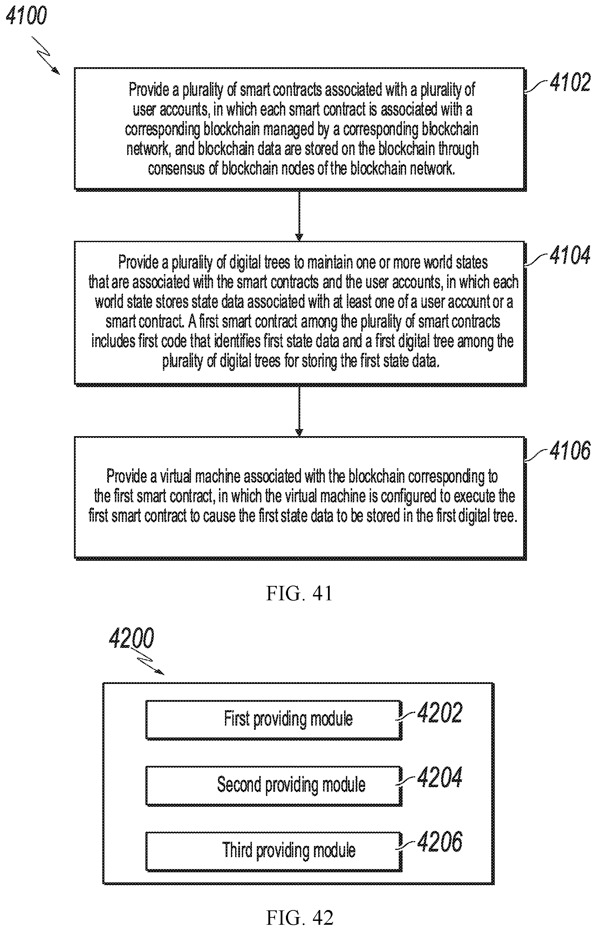

FIG. 41 is a flowchart of an example of a process 4100 for processing world state information associated with a blockchain. For convenience, the process 4100 will be described as being performed by a system of one or more computers, located in one or more locations, and programmed appropriately in accordance with this specification. For example, a computing system, e.g., the computing system 106, 108 of FIG. 1, the system 300 of FIG. 3, or the system 4000 of FIG. 40, appropriately programmed, can perform the process 4100. The process 4100 includes the following steps.

At 4102, the system provides a plurality of smart contracts associated with a plurality of user accounts, in which each smart contract is associated with a corresponding blockchain managed by a corresponding blockchain network, and blockchain data are stored on the blockchain through consensus of blockchain nodes of the blockchain network.

At 4104, the system provides a plurality of digital trees to maintain one or more world states that are associated with the smart contracts and the user accounts, in which each world state stores state data associated with at least one of a user account or a smart contract. A first smart contract among the plurality of smart contracts includes first code that identifies first state data and a first digital tree among the plurality of digital trees for storing the first state data.

At 4106, the system provides a virtual machine associated with the blockchain corresponding to the first smart contract, in which the virtual machine is configured to execute the first smart contract to cause the first state data to be stored in the first digital tree.

In some embodiments, the virtual machine includes a smart contract compiler configured to compile the first smart contract into first bytecode that can be executed by the virtual machine, in which the compiler is configured to recognize and compile the first code such that the first bytecode when executed by the virtual machine causes the first state data to be stored in the first digital tree.

In some embodiments, the system provides a smart contract compiler configured to compile the first smart contract into first bytecode that can be executed by the virtual machine, in which the compiler is configured to recognize and compile the first code such that the first bytecode when executed by the virtual machine causes the first state data to be stored in the first digital tree.

In some embodiments, the state data identified by the first code include at least one of (i) data about a state of a user account associated with the first smart contract, or (ii) data about a state of the first smart contract.

In some embodiments, the first smart contract includes second code that identifies second state data and a second digital tree among the plurality of digital trees for storing the second state data. The compiler is configured to recognize and compile the first code and the second code such that the first bytecode when executed by the virtual machine causes the first state data to be stored in the first digital tree and the second state data to be stored in the second digital tree.

In some embodiments, the first and second digital trees in combination maintain a world state that is associated with user accounts associated with the first smart contract.

In some embodiments, the first code specifies that state data associated with accounts of users in a first geographical region are to be stored in the first digital tree, and the second code specifies that state data associated with accounts of users in a second geographical region are to be stored in the second digital tree.

In some embodiments, the first smart contract comprises third code that identifies third state data and a third digital tree among the plurality of digital trees for storing the third state data. The first, second, and third digital trees in combination maintain the world state that is associated with user accounts associated with the first smart contract. The compiler is configured to recognize and compile the first code, the second code, and the third code such that the first bytecode when executed by the virtual machine causes the first state data to be stored in the first digital tree, the second state data to be stored in the second digital tree, and the third state data to be stored in the third digital tree.

In some embodiments, the first, second, and third digital trees in combination maintain a world state that is associated with user accounts associated with the first smart contract.

In some embodiments, the first code specifies that state data associated with accounts of users in a first geographical region are to be stored in the first digital tree, the second code specifies that state data associated with accounts of users in a second geographical region are to be stored in the second digital tree, and the third code specifies that state data associated with accounts of users in a third geographical region are to be stored in the third digital tree.

In some embodiments, a second smart contract among the plurality of smart contracts includes fourth code that identifies fourth state data and a fourth digital tree among the plurality of digital trees for storing the fourth state data. The first and second smart contracts are associated with a same blockchain, and the first and fourth digital trees in combination maintain a world state that stores state data of user accounts associated with the first and second smart contracts. The compiler is configured to compile the second smart contract into second bytecode. The compiler is configured to recognize and compile the fourth code such that the second bytecode when executed by the virtual machine causes the fourth state data to be stored in the fourth digital tree.

In some embodiments, the first code includes a first address of the first digital tree, and the compiler is configured to compile the first smart contract into the first bytecode such that the first bytecode when executed by the virtual machine causes the first state data to be stored in the first digital tree having the first address.

In some embodiments, the first address is represented by a constant value.

In some embodiments, the first address is determined by at least one of a Boolean function or a mathematical function.

In some embodiments, the first address is determined by a rule set comprising one or more rules.

In some embodiments, the first address is determined at a first time period when the first smart contract is compiled, or at a second time period when the first bytecode is executed.

In some embodiments, the second code includes a second address of the second digital tree, and the compiler is configured to compile the first smart contract into the first bytecode such that the first bytecode when executed by the virtual machine causes the second state data to be stored in the second digital tree having the second address.

In some embodiments, the second address is represented by a constant value.

In some embodiments, the second address is determined by a Boolean function.

In some embodiments, the second address is determined by a mathematical function.

In some embodiments, the second address is determined by a rule set including one or more rules.

In some embodiments, the second address is determined at a first time period when the second smart contract is compiled.

In some embodiments, the second address is determined at a second time period when the second bytecode is executed.

In some embodiments, the third code includes a third address of the third digital tree, and the compiler is configured to compile the first smart contract into the first bytecode such that the first bytecode when executed by the virtual machine causes the third state data to be stored in the third digital tree having the third address.

In some embodiments, the fourth code includes a fourth address of the fourth digital tree, and the compiler is configured to compile the second smart contract into the second bytecode such that the second bytecode when executed by the virtual machine causes the fourth state data to be stored in the fourth digital tree having the fourth address.

In some embodiments, the compiler generates at least one of the first bytecode or the second bytecode.

In some embodiments, the virtual machine performs at least one of storing the first state data in the first digital tree, storing the second state data in the second digital tree, storing the third state data in the third digital tree, or storing the fourth state data in the fourth digital tree.

In some embodiments, the system determines a first root hash value of the first digital tree; determines a second root hash value of the second digital tree; and determines a world state root hash value based on the first root hash value and the second root hash value.

In some embodiments, the system determines a third root hash value of the third digital tree; and determines the world state root hash value based on the first root hash value, the second root hash value, and the third root hash value.

In some embodiments, the world state root hash value represents a digital fingerprint of the state or states of the user accounts, smart contract, or smart contracts associated with the world state.

In some embodiments, the first smart contract specifies that the first digital tree be stored at a first storage device, and the second digital tree be stored at a second storage device.

In some embodiments, the first smart contract specifies that both the first digital tree and the second digital tree be stored at a first storage device.

In some embodiments, the system generates an index of the data stored in the first storage device, and storing the index in the first and second digital trees.

In some embodiments, each digital tree includes at least one of a Merkle tree, a Patricia tree, a Merkle Patricia tree, a modified Merkle Patricia tree, or a Bucket tree.

FIG. 42 is a diagram of an example of modules of an apparatus 4200 in accordance with embodiments of this specification. The apparatus 4200 can be an example of an embodiment of a system that is configured to process world state information associated with one or more blockchains. The apparatus 4200 can correspond to the embodiments described above, and the apparatus 4200 includes the following:
- a first providing module 4202 that provides a plurality of smart contracts associated with a plurality of user accounts, in which each smart contract is associated with a corresponding blockchain managed by a corresponding blockchain network, and blockchain data are stored on the blockchain through consensus of blockchain nodes of the blockchain network;
- a second providing module 4204 that provides a plurality of digital trees to maintain one or more world states that are associated with the smart contracts and the user accounts, in which each world state stores state data associated with at least one of a user account or a smart contract; wherein a first smart contract among the plurality of smart contracts includes: first code that identifies first state data and a first digital tree among the plurality of digital trees for storing the first state data; and
- a third providing module 4206 that provides a virtual machine associated with the blockchain corresponding to the first smart contract, in which the virtual machine is configured to execute the first smart contract to cause the first state data to be stored in the first digital tree.

In an optional embodiment, the virtual machine can include a smart contract compiler configured to compile the first smart contract into first bytecode that can be executed by the virtual machine, in which the compiler is configured to recognize and compile the first code such that the first bytecode when executed by the virtual machine causes the first state data to be stored in the first digital tree.

In an optional embodiment, the apparatus 4200 can further include a providing module that provides a smart contract compiler configured to compile the first smart contract into first bytecode that can be executed by the virtual machine, in which the compiler can be configured to recognize and compile the first code such that the first bytecode when executed by the virtual machine causes the first state data to be stored in the first digital tree.

In an optional embodiment, the state data identified by the first code can include at least one of (i) data about a state of a user account associated with the first smart contract, or (ii) data about a state of the first smart contract.

In an optional embodiment, the first smart contract can include second code that identifies second state data and a second digital tree among the plurality of digital trees for storing the second state data, in which the compiler can be configured to recognize and compile the first code and the second code such that the first bytecode when executed by the virtual machine causes the first state data to be stored in the first digital tree and the second state data to be stored in the second digital tree.

In an optional embodiment, the first and second digital trees in combination can maintain a world state that is associated with user accounts associated with the first smart contract.

In an optional embodiment, the first code can specify that state data associated with accounts of users in a first geographical region are to be stored in the first digital tree, and the second code can specify that state data associated with accounts of users in a second geographical region are to be stored in the second digital tree.

In an optional embodiment, the first smart contract can include third code that identifies third state data and a third digital tree among the plurality of digital trees for storing the third state data, in which the first, second, and third digital trees in combination can maintain the world state that is associated with user accounts associated with the first smart contract; wherein the compiler can be configured to recognize and compile the first code, the second code, and the third code such that the first bytecode when executed by the virtual machine causes the first state data to be stored in the first digital tree, the second state data to be stored in the second digital tree, and the third state data to be stored in the third digital tree.

In an optional embodiment, the first, second, and third digital trees in combination can maintain a world state that is associated with user accounts associated with the first smart contract.

In an optional embodiment, the first code can specify that state data associated with accounts of users in a first geographical region are to be stored in the first digital tree, the second code can specify that state data associated with accounts of users in a second geographical region are to be stored in the second digital tree, and the third code can specify that state data associated with accounts of users in a third geographical region are to be stored in the third digital tree.

In an optional embodiment, a second smart contract among the plurality of smart contracts can include fourth code that identifies fourth state data and a fourth digital tree among the plurality of digital trees for storing the fourth state data, in which the first and second smart contracts can be associated with a same blockchain, and the first and fourth digital trees in combination can maintain a world state that stores state data of user accounts associated with the first and second smart contracts. The compiler can be configured to compile the second smart contract into second bytecode, in which the compiler is configured to recognize and compile the fourth code such that the second bytecode when executed by the virtual machine causes the fourth state data to be stored in the fourth digital tree.

In an optional embodiment, the first code can include a first address of the first digital tree, and the compiler can be configured to compile the first smart contract into the first bytecode such that the first bytecode when executed by the virtual machine causes the first state data to be stored in the first digital tree having the first address.

In an optional embodiment, the first address can be represented by a constant value.

In an optional embodiment, the first address can be determined by at least one of a Boolean function or a mathematical function.

In an optional embodiment, the first address can be determined by a rule set comprising one or more rules.

In an optional embodiment, the first address can be determined at a first time period when the first smart contract is compiled, or at a second time period when the first bytecode is executed.

In an optional embodiment, the second code can include a second address of the second digital tree, and the compiler can be configured to compile the first smart contract into the first bytecode such that the first bytecode when executed by the virtual machine causes the second state data to be stored in the second digital tree having the second address.

In an optional embodiment, the second address can be represented by a constant value.

In an optional embodiment, the second address can be determined by a Boolean function.

In an optional embodiment, the second address can be determined by a mathematical function.

In an optional embodiment, the second address can be determined by a rule set comprising one or more rules.

In an optional embodiment, the second address can be determined at a first time period when the second smart contract is compiled.

In an optional embodiment, the second address can be determined at a second time period when the second bytecode is executed.

In an optional embodiment, the third code can include a third address of the third digital tree, and the compiler can be configured to compile the first smart contract into the first bytecode such that the first bytecode when executed by the virtual machine causes the third state data to be stored in the third digital tree having the third address.

In an optional embodiment, the fourth code can include a fourth address of the fourth digital tree, and the compiler can be configured to compile the second smart contract into the second bytecode such that the second bytecode when executed by the virtual machine causes the fourth state data to be stored in the fourth digital tree having the fourth address.

In an optional embodiment, the apparatus 4200 can further include an executing module that executes the compiler to generate at least one of the first bytecode or the second bytecode.

In an optional embodiment, the apparatus 4200 can further include an executing module that executes the virtual machine and performs at least one of storing the first state data in the first digital tree, storing the second state data in the second digital tree, storing the third state data in the third digital tree, or storing the fourth state data in the fourth digital tree.

In an optional embodiment, the apparatus 4200 can further include a determining module that determines a first root hash value of the first digital tree; a determining module that determines a second root hash value of the second digital tree; and a determining module that determines a world state root hash value based on the first root hash value and the second root hash value.

In an optional embodiment, the apparatus 4200 can further include a determining module that determines a third root hash value of the third digital tree; and a determining module that determines the world state root hash value based on the first root hash value, the second root hash value, and the third root hash value.

In an optional embodiment, the world state root hash value can represent a digital fingerprint of the state or states of the user accounts, smart contract, or smart contracts associated with the world state.

In an optional embodiment, the first smart contract can specify that the first digital tree be stored at a first storage device, and the second digital tree be stored at a second storage device.

In an optional embodiment, the first smart contract can specify that both the first digital tree and the second digital tree be stored at a first storage device.

In an optional embodiment, the apparatus 4200 can further include a generating module that generates an index of the data stored in the first storage device, and stores the index in the first and second digital trees.

In an optional embodiment, each digital tree can include at least one of a Merkle tree, a Patricia tree, a Merkle Patricia tree, a modified Merkle Patricia tree, or a Bucket tree.

As discussed above, the adjustments to the shards or partitions of the group world state can be implemented with a short downtime so as to reduce the interruption of the services provided to the users. For example, in the case of partitioning a first shard into a second shard and a third shard, in which a quick snapshot of the content of the first shard is generated, and the structure of the group world state is redefined using the process shown in FIG. 5, depending on the implementations of the system, the short downtime can be, e.g., less than a second, since the snapshot can include a pointer to the first shard that allows the system to identify the contents of the copy of the first shard without actually making a full copy of the first shard. Of course, the faster the components of the system operates, the quicker the snapshot can be generated, the shorter the downtime of the system, and the shorter the interruption of the services provided to the users.

As discussed above, the group world state can be used for any blockchain system or application in which the number of users and the number of transactions among the users are large. For example, the number of users can be in the range of hundreds of thousands, or millions, or tens of millions, or hundreds of millions, or billions. The number of transactions can be in the range of hundreds of thousands, or millions, or tens of millions, or hundreds of millions, or billions, or tens of billions, or hundreds of billions, or trillions. For example, the group world state can be used for any blockchain system or application in which the number of transactions per second is greater than hundreds, or thousands, or tens of thousands, or hundreds of thousands, or millions, or tens of millions, or hundreds of millions.

The term "user" can include a human being or a machine. For example, transactions can be performed among machines that have artificial intelligence, and such machines can perform transactions at a much faster rate than humans, resulting in a large number of transactions per unit of time and a large number of total transactions over a period of time. In order to hold the machines accountable, recording the machine-to-machine transactions in blockchains allows such transactions to be audited by human operators. The techniques described in this specification is advantageous for handling such machine-to-machine transactions.

The system, apparatus, module, or unit illustrated in the previous embodiments can be implemented by using a computer chip or an entity, or can be implemented by using a product having a certain function. A typical embodiment device is a computer, and the computer can be a personal computer, a laptop computer, a cellular phone, a camera phone, a smartphone, a personal digital assistant, a media player, a navigation device, an email receiving and sending device, a game console, a tablet computer, a wearable device, or any combination of these devices.

For an embodiment process of functions and roles of each module in the apparatus, references can be made to an embodiment process of corresponding steps in the previous method. Details are omitted here for simplicity.

Because an apparatus embodiment basically corresponds to a method embodiment, for related parts, references can be made to related descriptions in the method embodiment. The previously described apparatus embodiment is merely an example. The modules described as separate parts may or may not be physically separate, and parts displayed as modules may or may not be physical modules, may be located in one position, or may be distributed on a number of network modules. Some or all of the modules can be selected based on actual demands to achieve the objectives of the solutions of the specification. A person of ordinary skill in the art can understand and implement the embodiments of the present application without creative efforts.

Referring again to FIGS. 27 to 37, 39, and 42, it can be interpreted as illustrating an internal functional module and a structure of a blockchain node. An execution body in essence can be an electronic device, and the electronic device includes the following: one or more processors; and one or more computer-readable memories configured to store an executable instruction of the one or more processors. In some embodiments, the one or more computer-readable memories are coupled to the one or more processors and have programming instructions stored thereon that are executable by the one or more processors to perform algorithms, methods, functions, processes, flows, and procedures, as described in this specification. This specification also provides one or more non-transitory computer-readable storage media coupled to one or more processors and having instructions stored thereon which, when executed by the one or more processors, cause the one or more processors to perform operations in accordance with embodiments of the methods provided herein.

This specification further provides a system for implementing the methods provided herein. The system includes one or more processors, and a computer-readable storage medium coupled to the one or more processors having instructions stored thereon which, when executed by the one or more processors, cause the one or more processors to perform operations in accordance with embodiments of the methods provided herein.

Embodiments of the subject matter and the actions and operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, e.g., one or more modules of computer program instructions, encoded on a computer program carrier, for execution by, or to control the operation of, data processing apparatus. For example, a computer program carrier can include one or more computer-readable storage media that have instructions encoded or stored thereon. The carrier may be a tangible non-transitory computer-readable medium, such as a magnetic, magneto optical, or optical disk, a solid state drive, a random access memory (RAM), a read-only memory (ROM), or other types of media. Alternatively, or in addition, the carrier may be an artificially generated propagated signal, e.g., a machine-generated electrical, optical, or electromagnetic signal that is generated to encode information for transmission to suitable receiver apparatus for execution by a data processing apparatus. The computer storage medium can be or be part of a machine-readable storage device, a machine-readable storage substrate, a random or serial access memory device, or a combination of one or more of them. A computer storage medium is not a propagated signal.

A computer program, which may also be referred to or described as a program, software, a software application, an app, a module, a software module, an engine, a script, or code, can be written in any form of programming language, including compiled or interpreted languages, or declarative or procedural languages; and it can be deployed in any form, including as a stand-alone program or as a module, component, engine, subroutine, or other unit suitable for executing in a computing environment, which environment may include one or more computers interconnected by a data communication network in one or more locations.

A computer program may, but need not, correspond to a file in a file system. A computer program can be stored in a portion of a file that holds other programs or data, e.g., one or more scripts stored in a markup language document, in a single file dedicated to the program in question, or in multiple coordinated files, e.g., files that store one or more modules, sub programs, or portions of code.

Processors for execution of a computer program include, by way of example, both general- and special-purpose microprocessors, and any one or more processors of any kind of digital computer. Generally, a processor will receive the instructions of the computer program for execution as well as data from a non-transitory computer-readable medium coupled to the processor.

The term "data processing apparatus" encompasses all kinds of apparatuses, devices, and machines for processing data, including by way of example a programmable processor, a computer, or multiple processors or computers. Data processing apparatus can include special-purpose logic circuitry, e.g., an FPGA (field programmable gate array), an ASIC (application specific integrated circuit), or a GPU (graphics processing unit). The apparatus can also include, in addition to hardware, code that creates an execution environment for computer programs, e.g., code that constitutes processor firmware, a protocol stack, a database management system, an operating system, or a combination of one or more of them.

The processes and logic flows described in this specification can be performed by one or more computers or processors executing one or more computer programs to perform operations by operating on input data and generating output. The processes and logic flows can also be performed by special-purpose logic circuitry, e.g., an FPGA, an ASIC, or a GPU, or by a combination of special-purpose logic circuitry and one or more programmed computers.

Computers suitable for the execution of a computer program can be based on general or special-purpose microprocessors or both, or any other kind of central processing unit. Generally, a central processing unit will receive instructions and data from a read only memory or a random access memory or both. Elements of a computer can include a central processing unit for executing instructions and one or more memory devices for storing instructions and data. The central processing unit and the memory can be supplemented by, or incorporated in, special-purpose logic circuitry.

Generally, a computer will also include, or be operatively coupled to receive data from or transfer data to one or more storage devices. The storage devices can be, for example, magnetic, magneto optical, or optical disks, solid state drives, or any other type of non-transitory, computer-readable media. However, a computer need not have such devices. Thus, a computer may be coupled to one or more storage devices, such as, one or more memories, that are local and/or remote. For example, a computer can include one or more local memories that are integral components of the computer, or the computer can be coupled to one or more remote memories that are in a cloud network. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Components can be "coupled to" each other by being commutatively such as electrically or optically connected to one another, either directly or via one or more intermediate components. Components can also be "coupled to" each other if one of the components is integrated into the other. For example, a storage component that is integrated into a processor (e.g., an L2 cache component) is "coupled to" the processor.

To provide for interaction with a user, embodiments of the subject matter described in this specification can be implemented on, or configured to communicate with, a computer having a display device, e.g., a LCD (liquid crystal display) monitor, for displaying information to the user, and an input device by which the user can provide input to the computer, e.g., a keyboard and a pointing device, e.g., a mouse, a trackball or touchpad. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser, or by interacting with an app running on a user device, e.g., a smartphone or electronic tablet. Also, a computer can interact with a user by sending text messages or other forms of message to a personal device, e.g., a smartphone that is running a messaging application, and receiving responsive messages from the user in return.

This specification uses the term "configured to" in connection with systems, apparatus, and computer program components. For a system of one or more computers to be configured to perform particular operations or actions means that the system has installed on its software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions. For special-purpose logic circuitry to be configured to perform particular operations or actions means that the circuitry has electronic logic that performs the operations or actions.

While this specification contains many specific embodiment details, these should not be construed as limitations on the scope of what is being claimed, which is defined by the claims themselves, but rather as descriptions of features that may be specific to particular embodiments. Certain features that are described in this specification in the context of separate embodiments can also be realized in combination in a single embodiment. Conversely, various features that are described in the context of a single embodiments can also be realized in multiple embodiments separately or in any suitable subcombination. Moreover, although features may be described above as acting in certain combinations and even initially be claimed as such, one or more features from a claimed combination can in some cases be excised from the combination, and the claim may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A system (300) for processing world state information associated with a blockchain, the system comprising:
a blockchain database (322) configured to store a blockchain (216) that is managed by a blockchain network (102, 212, 314, 316), in which blockchain data are stored on the blockchain through consensus of blockchain nodes (214) of the blockchain network, and the blockchain includes one or more blocks that store transaction data associated with user accounts associated with the blockchain;
a world state database (324) configured to store a world state data structure comprising a plurality of digital trees, in which the world state (310a, 312a, 310b, 312b, 310c, 312c) stores information about states of the user accounts;
a smart contract database storing a plurality of smart contracts associated with the blockchain, in which a first smart contract among the plurality of smart contracts comprises first code that identifies first state data and a first digital tree among the plurality of digital trees for storing the first state data, and in which the first smart contract comprises second code that identifies second state data and a second digital tree among the plurality of digital trees for storing the second state data; and
a virtual machine associated with the blockchain corresponding to the first smart contract, in which the virtual machine is configured to execute the first smart contract to cause the first state data to be stored in the first digital tree and the second state data to be stored in the second digital tree, wherein the system or the virtual machine includes a smart contract compiler configured to compile the first smart contract into first bytecode that is executed by the virtual machine, and wherein the compiler is configured to recognize and compile the first code and the second code such that the first bytecode when executed by the virtual machine causes the first state data to be stored in the first digital tree and the second state data to be stored in the second digital tree, wherein the first digital tree is different from the second digital tree.

2. The system (300) of claim 1 in which the state data identified by the first code comprise at least one of (i) data about a state of a user account associated with the first smart contract, or (ii) data about a state of the first smart contract.

3. The system (300) of any one of claims 1 or 2 in which the first and second digital trees in combination maintain a world state that is associated with user accounts associated with the first smart contract; and/or
in which the first code specifies that state data associated with accounts of users in a first geographical region are to be stored in the first digital tree, and the second code specifies that state data associated with accounts of users in a second geographical region are to be stored in the second digital tree.

4. The system (300) of any one of claims 1 or 2 in which the first smart contract comprises third code that identifies third state data and a third digital tree among the plurality of digital trees for storing the third state data;
wherein the first, second, and third digital trees in combination maintain the world state that is associated with user accounts associated with the first smart contract;
wherein the compiler is configured to recognize and compile the first code, the second code, and the third code such that the first bytecode when executed by the virtual machine causes the first state data to be stored in the first digital tree, the second state data to be stored in the second digital tree, and the third state data to be stored in the third digital tree.

5. The system (300) of claim 4 in which the first, second, and third digital trees in combination maintain a world state that is associated with user accounts associated with the first smart contract; and/or
in which the first code specifies that state data associated with accounts of users in a first geographical region are to be stored in the first digital tree, the second code specifies that state data associated with accounts of users in a second geographical region are to be stored in the second digital tree, and the third code specifies that state data associated with accounts of users in a third geographical region are to be stored in the third digital tree.

6. The system (300) of any one of claims 1 to 5 in which a second smart contract among the plurality of smart contracts comprises:
fourth code that identifies fourth state data and a fourth digital tree among the plurality of digital trees for storing the fourth state data;
wherein the first and second smart contracts are associated with a same blockchain, and the first and fourth digital trees in combination maintain a world state that stores state data of user accounts associated with the first and second smart contracts;
wherein the compiler is configured to compile the second smart contract into second bytecode; and
wherein the compiler is configured to recognize and compile the fourth code such that the second bytecode when executed by the virtual machine causes the fourth state data to be stored in the fourth digital tree.

7. The system (300) of any one of claims 1 to 6 in which the first code comprises a first address of the first digital tree, and the compiler is configured to compile the first smart contract into the first bytecode such that the first bytecode when executed by the virtual machine causes the first state data to be stored in the first digital tree having the first address.

8. The system (300) of claim 7 in which the first address is represented by a constant value; or in which the first address is determined by at least one of a Boolean function or a mathematical function; or in which the first address is determined by a rule set comprising one or more rules; or in which the first address is determined at a first time period when the first smart contract is compiled, or at a second time period when the first bytecode is executed.

9. The system (300) of any one of claims 1 to 8 in which the second code comprises a second address of the second digital tree, and the compiler is configured to compile the first smart contract into the first bytecode such that the first bytecode when executed by the virtual machine causes the second state data to be stored in the second digital tree having the second address; optionally in which at least one of:
(i) the second address is represented by a constant value;
(ii) the second address is determined by a Boolean function;
(iii) the second address is determined by a mathematical function;
(iv) the second address is determined by a rule set comprising one or more rules;
(v) the second address is determined at a first time period when the second smart contract is compiled; or
(vi) the second address is determined at a second time period when the second bytecode is executed.

10. The system (300) of any one of claims 4 to 9 in which the third code comprises a third address of the third digital tree, and the compiler is configured to compile the first smart contract into the first bytecode such that the first bytecode when executed by the virtual machine causes the third state data to be stored in the third digital tree having the third address.

11. The system (300) of any one of claims 6 to 10 in which the fourth code comprises a fourth address of the fourth digital tree, and the compiler is configured to compile the second smart contract into the second bytecode such that the second bytecode when executed by the virtual machine causes the fourth state data to be stored in the fourth digital tree having the fourth address.

12. The system (300) of any one of claims 1 to 11, comprising one or more computers in one or more locations and configured to:
determine a first root hash value of the first digital tree;
determine a second root hash value of the second digital tree; and
determine a world state root hash value based on the first root hash value and the second root hash value; optionally in which the one or more computers are configured to:
determine a third root hash value of the third digital tree; and
determine the world state root hash value based on the first root hash value, the second root hash value, and the third root hash value; and/or in which the world state root hash value represents a digital fingerprint of the state or states of the user accounts, smart contract, or smart contracts associated with the world state.

13. The system (300) of any one of claims 1 to 12 in which the first smart contract specifies that the first digital tree be stored at a first storage device, and the second digital tree be stored at a second storage device.

14. The system (300) of any one of claims 1 to 13 in which the first smart contract specifies that both the first digital tree and the second digital tree be stored at a first storage device.

15. The system (300) of any one of claims 1 to 14, in which the system comprises one or more computers in one or more locations and configured to generate an index of the data stored in the first storage device, and store the index in the first and second digital trees; and/or in which each digital tree comprises at least one of a Merkle tree, a Patricia tree, a Merkle Patricia tree, a modified Merkle Patricia tree, or a Bucket tree.

## Patentansprüche

1. System (300) zum Verarbeiten von Weltzustandsinformationen, die einer Blockchain zugeordnet sind, wobei das System Folgendes umfasst:
eine Blockchain-Datenbank (322), die ausgelegt ist, eine Blockchain (216) zu speichern, die durch ein Blockchain-Netz (102, 212, 314, 316) gemanagt wird, wobei Blockchain-Daten durch einen Konsens von Blockchain-Knoten (214) des Blockchain-Netzes in der Blockchain gespeichert werden und die Blockchain einen oder mehrere Blöcke enthält, die Transaktionsdaten speichern, die Anwenderkonten zugeordnet sind, die der Blockchain zugeordnet sind;
eine Weltzustandsdatenbank (324), die ausgelegt ist, eine Weltzustandsdatenstruktur zu speichern, die mehrere digitale Bäume umfasst, in denen der Weltzustand (310a, 312a, 310b, 312b, 310c, 312c) Informationen über Zustände der Anwenderkonten speichert;
eine Datenbank intelligenter Verträge, die mehrere intelligente Verträge speichert, die der Blockchain zugeordnet sind, wobei ein erster intelligenter Vertrag unter den mehreren intelligenten Verträgen einen ersten Code umfasst, der erste Zustandsdaten und einen ersten digitalen Baum unter den mehreren digitalen Bäumen zum Speichern der ersten Zustandsdaten identifiziert, und der erste intelligente Vertrag einen zweiten Code umfasst, der zweite Zustandsdaten und einen zweiten digitalen Baum unter den mehreren digitalen Bäumen zum Speichern der zweiten Zustandsdaten identifiziert; und
eine virtuelle Maschine, die der Blockchain zugeordnet ist, die dem ersten intelligenten Vertrag entspricht, wobei die virtuelle Maschine ausgelegt ist, den ersten intelligenten Vertrag auszuführen, um zu verursachen, dass die ersten Zustandsdaten im ersten digitalen Baum gespeichert werden und die zweiten Zustandsdaten im zweiten digitalen Baum gespeichert werden, und das System oder die virtuelle Maschine einen Kompilierer für intelligente Verträge enthält, der ausgelegt ist, den ersten intelligenten Vertrag in ersten Bytecode zu kompilieren, der durch die virtuelle Maschine ausgeführt wird, wobei der Kompilierer ausgelegt ist, den ersten Code und den zweiten Code zu erkennen und zu kompilieren, derart, dass der erste Bytecode, wenn er durch die virtuelle Maschine ausgeführt wird, verursacht, dass die ersten Zustandsdaten im ersten digitalen Baum gespeichert werden und die zweiten Zustandsdaten im zweiten digitalen Baum gespeichert werden, wobei der erste digitale Baum vom zweiten digitalen Baum verschieden ist.

2. System (300) nach Anspruch 1, wobei die Zustandsdaten, die durch den ersten Code identifiziert werden, (i) Daten über einen Zustand eines Anwenderkontos, das dem ersten intelligenten Vertrag zugeordnet ist, und/oder (ii) Daten über einen Zustand des ersten intelligenten Vertrags umfassen.

3. System (300) nach einem der Ansprüche 1 oder 2, wobei die ersten und die zweiten digitalen Bäume in Kombination einen Weltzustand führen, der Anwenderkonten zugeordnet ist, die dem ersten intelligenten Vertrag zugeordnet sind; und/oder
wobei der erste Code festlegt, dass Zustandsdaten, die Konten von Anwendern in einem ersten geographischen Bereich zugeordnet sind, im ersten digitalen Baum gespeichert werden sollen, und der zweite Code festlegt, dass Zustandsdaten, die Konten von Anwendern in einem zweiten geographischen Bereich zugeordnet sind, im zweiten digitalen Baum gespeichert werden sollen.

4. System (300) nach einem der Ansprüche 1 oder 2, wobei der erste intelligente Vertrag einen dritten Code umfasst, der dritte Zustandsdaten und einen dritten digitalen Baum unter den mehreren digitalen Bäumen zum Speichern der dritten Zustandsdaten identifiziert;
wobei der erste, der zweite und der dritte digitale Baum in Kombination den Weltzustand führen, der Anwenderkonten zugeordnet ist, die dem ersten intelligenten Vertrag zugeordnet sind;
der Kompilierer ausgelegt ist, den ersten Code, den zweiten Code und den dritten Code zu erkennen und zu kompilieren, derart, dass der erste Bytecode, wenn er durch die virtuelle Maschine ausgeführt wird, verursacht, dass die ersten Zustandsdaten im ersten digitalen Baum gespeichert werden, die zweiten Zustandsdaten im zweiten digitalen Baum gespeichert werden und die dritten Zustandsdaten im dritten digitalen Baum gespeichert werden.

5. System (300) nach Anspruch 4, wobei der erste, der zweite und der dritte digitale Baum in Kombination einen Weltzustand führen, der Anwenderkonten zugeordnet ist, die dem ersten intelligenten Vertrag zugeordnet sind; und/oder
wobei der erste Code festlegt, dass Zustandsdaten, die Konten von Anwendern in einem ersten geographischen Bereich zugeordnet sind, im ersten digitalen Baum gespeichert werden sollen, der zweite Code festlegt, dass Zustandsdaten, die Konten von Anwendern in einem zweiten geographischen Bereich zugeordnet sind, im zweiten digitalen Baum gespeichert werden sollen, und der dritte Code festlegt, dass Zustandsdaten, die Konten von Anwendern in einem dritten geographischen Bereich zugeordnet sind, im dritten digitalen Baum gespeichert werden sollen.

6. System (300) nach einem der Ansprüche 1 bis 5, wobei ein zweiter intelligenter Vertrag unter den mehreren intelligenten Verträgen Folgendes umfasst:
einen vierten Code, der vierte Zustandsdaten und einen vierten digitalen Baum unter den mehreren digitalen Bäumen zum Speichern der vierten Zustandsdaten identifiziert;
wobei der erste und der zweite intelligente Vertrag derselben Blockchain zugeordnet sind und der erste und der vierte digitale Baum in Kombination einen Weltzustand führen, der Zustandsdaten von Anwenderkonten speichert, die dem ersten und dem zweiten intelligenten Vertrag zugeordnet sind;
der Kompilierer ausgelegt ist, den zweiten intelligenten Vertrag in zweiten Bytecode zu kompilieren; und
der Kompilierer ausgelegt ist, den vierten Code zu erkennen und zu kompilieren, derart, dass der zweite Bytecode, wenn er durch die virtuelle Maschine ausgeführt wird, verursacht, dass die vierten Zustandsdaten im vierten digitalen Baum gespeichert werden.

7. System (300) nach einem der Ansprüche 1 bis 6, wobei der erste Code eine erste Adresse des ersten digitalen Baums umfasst und der Kompilierer ausgelegt ist, den ersten intelligenten Vertrag in den ersten Bytecode zu kompilieren, derart, dass der erste Bytecode, wenn er durch die virtuelle Maschine ausgeführt wird, verursacht, dass die ersten Zustandsdaten in dem ersten digitalen Baum gespeichert werden, der die erste Adresse besitzt.

8. System (300) nach Anspruch 7, wobei die erste Adresse durch einen konstanten Wert repräsentiert wird oder die erste Adresse durch eine boolesche Funktion und/oder eine mathematische Funktion bestimmt wird; oder wobei die erste Adresse durch einen Regelsatz bestimmt wird, der eine oder mehrere Regeln umfasst; oder wobei die erste Adresse in einem ersten Zeitraum, in dem der erste intelligente Vertrag kompiliert wird, oder in einem zweiten Zeitraum, in dem der erste Bytecode ausgeführt wird, bestimmt wird.

9. System (300) nach einem der Ansprüche 1 bis 8, wobei der zweite Code eine zweite Adresse des zweiten digitalen Baums umfasst und der Kompilierer ausgelegt ist, den ersten intelligenten Vertrag in den ersten Bytecode zu kompilieren, derart, dass der erste Bytecode, wenn er durch die virtuelle Maschine ausgeführt wird, verursacht, dass die zweiten Zustandsdaten im zweiten digitalen Baum gespeichert werden, der die zweite Adresse aufweist; wobei wahlweise:
(i) die zweite Adresse durch einen konstanten Wert repräsentiert wird; und/oder
(ii) die zweite Adresse durch eine boolesche Funktion bestimmt wird; und/oder
(iii) die zweite Adresse durch eine mathematische Funktion bestimmt wird; und/oder
(iv) die zweite Adresse durch einen Regelsatz bestimmt wird, der eine oder mehrere Regeln umfasst; und/oder
(v) die zweite Adresse in einem ersten Zeitraum bestimmt wird, in dem der zweite intelligente Vertrag kompiliert wird; und/oder
(vi) die zweite Adresse in einem zweiten Zeitraum bestimmt wird, in dem der zweite Bytecode ausgeführt wird.

10. System (300) nach einem der Ansprüche 4 bis 9, wobei der dritte Code eine dritte Adresse des dritten digitalen Baums umfasst und der Kompilierer ausgelegt ist, den ersten intelligenten Vertrag in den ersten Bytecode zu kompilieren, derart, dass der erste Bytecode, wenn er durch die virtuelle Maschine ausgeführt wird, verursacht, dass die dritten Zustandsdaten in dem dritten digitalen Baum gespeichert werden, der die dritte Adresse besitzt.

11. System (300) nach einem der Ansprüche 6 bis 10, wobei der vierte Code eine vierte Adresse des vierten digitalen Baums umfasst und der Kompilierer ausgelegt ist, den zweiten intelligenten Vertrag in den zweiten Bytecode zu kompilieren, derart, dass der zweite Bytecode, wenn er durch die virtuelle Maschine ausgeführt wird, verursacht, dass die vierten Zustandsdaten in dem vierten digitalen Baum gespeichert werden, der die vierte Adresse besitzt.

12. System (300) nach einem der Ansprüche 1 bis 11, das einen oder mehrere Computer bei einem oder mehreren Orten umfasst und ausgelegt ist zum:
Bestimmen eines ersten Wurzelhashwerts des ersten digitalen Baums;
Bestimmen eines zweiten Wurzelhashwerts des zweiten digitalen Baums und
Bestimmen eines Weltzustandswurzelhashwerts auf der Grundlage des ersten Wurzelhashwerts und des zweiten Wurzelhashwerts; wobei wahlweise der eine oder die mehreren Computer ausgelegt sind zum:
Bestimmen eines dritten Wurzelhashwerts des dritten digitalen Baums und
Bestimmen des Weltzustandswurzelhashwerts auf der Grundlage des ersten Wurzelhashwerts, des zweiten Wurzelhashwerts und des dritten Wurzelhashwerts; und/oder wobei der Weltzustandswurzelhashwert einen digitalen Fingerabdruck des Zustands oder der Zustände der Anwenderkonten, des intelligenten Vertrags oder der intelligenten Verträge repräsentiert, die dem Weltzustand zugeordnet sind.

13. System (300) nach einem der Ansprüche 1 bis 12, wobei der erste intelligente Vertrag festlegt, dass der erste digitale Baum in einer ersten Speichervorrichtung gespeichert wird und der zweite digitale Baum in einer zweiten Speichervorrichtung gespeichert wird.

14. System (300) nach einem der Ansprüche 1 bis 13, wobei der erste intelligente Vertrag festlegt, dass sowohl der erste digitale Baum als auch der zweite digitale Baum in einer ersten Speichervorrichtung gespeichert werden.

15. System (300) nach einem der Ansprüche 1 bis 14, wobei das System einen oder mehrere Computer bei einem oder mehreren Orten umfasst und ausgelegt ist, einen Index der Daten, die in der ersten Speichervorrichtung gespeichert sind, zu erzeugen und den Index in dem ersten und dem zweiten digitalen Baum zu speichern; und/oder jeder digitale Baum einen Merkle-Baum und/oder einen Patricia-Baum und/oder einen Merkle-Patricia-Baum und/oder einen modifizierten Merkle-Patricia-Baum und/oder einen Bucket-Baum umfasst.

## Revendications

1. Système (300) de traitement d'informations d'état associées à une chaîne de blocs, le système comprenant:
une base de données de chaîne de blocs (322) configurée pour stocker une chaîne de blocs (216) qui est gérée par un réseau de chaîne de blocs (102, 212, 314, 316), où les données de chaîne de blocs sont stockées sur la chaîne de blocs par consensus des nœuds de chaîne de blocs (214) du réseau de chaîne de blocs, et la chaîne de blocs comprend un ou plusieurs blocs qui stockent des données de transaction associées à des comptes d'utilisateurs associés à la chaîne de blocs;
une base de données d'états (324) configurée pour stocker une structure de données d'état comprenant une pluralité d'arbres numériques, dans laquelle l'état (310a, 312a, 310b, 312b, 310c, 312c) stocke des informations sur les états des comptes d'utilisateurs;
une base de données de contrats intelligents stockant une pluralité de contrats intelligents associés à la chaîne de blocs, où un premier contrat intelligent parmi la pluralité de contrats intelligents comprend un premier code qui identifie des premières données d'état et un premier arbre numérique parmi la pluralité d'arbres numériques pour stocker les premières données d'état, et où le premier contrat intelligent comprend un deuxième code qui identifie des deuxièmes données d'état et un deuxième arbre numérique parmi la pluralité d'arbres numériques pour stocker les deuxièmes données d'état; et
une machine virtuelle associée à la chaîne de blocs correspondant au premier contrat intelligent, où la machine virtuelle est configurée pour exécuter le premier contrat intelligent afin que les premières données d'état soient stockées dans le premier arbre numérique et que les deuxièmes données d'état soient stockées dans le deuxième arbre numérique, où le système ou la machine virtuelle comprend un compilateur de contrat intelligent configuré pour compiler le premier contrat intelligent en un premier bytecode qui est exécuté par la machine virtuelle, et où le compilateur est configuré pour reconnaître et compiler le premier code et le deuxième code de telle sorte que le premier bytecode, lorsqu'il est exécuté par la machine virtuelle, provoque le stockage des premières données d'état dans le premier arbre numérique et le stockage des deuxièmes données d'état dans le deuxième arbre numérique, où le premier arbre numérique est différent du deuxième arbre numérique.

2. Système (300) selon la revendication 1, dans lequel les données d'état identifiées par le premier code comprennent au moins l'un des éléments suivants: (i) des données concernant un état d'un compte utilisateur associé au premier contrat intelligent, ou (ii) des données concernant un état du premier contrat intelligent.

3. Système (300) selon l'une quelconque des revendications 1 ou 2, dans lequel les premier et deuxième arbres numériques, en combinaison, maintiennent un état qui est associé à des comptes d'utilisateurs associés au premier contrat intelligent; et/ou
dans lequel le premier code spécifie que les données d'état associées aux comptes d'utilisateurs dans une première région géographique doivent être stockées dans le premier arbre numérique, et le deuxième code spécifie que les données d'état associées aux comptes d'utilisateurs dans une deuxième région géographique doivent être stockées dans le deuxième arbre numérique.

4. Système (300) selon l'une quelconque des revendications 1 ou 2, dans lequel le premier contrat intelligent comprend un troisième code qui identifie des troisièmes données d'état et un troisième arbre numérique parmi la pluralité d'arbres numériques pour stocker les troisièmes données d'état;
dans lequel les premier, deuxième et troisième arbres numériques, en combinaison, maintiennent l'état qui est associé aux comptes d'utilisateurs associés au premier contrat intelligent;
dans lequel le compilateur est configuré pour reconnaître et compiler le premier code, le deuxième code et le troisième code de telle sorte que le premier bytecode, lorsqu'il est exécuté par la machine virtuelle, provoque le stockage des premières données d'état dans le premier arbre numérique, le stockage des deuxièmes données d'état dans le deuxième arbre numérique et le stockage des troisièmes données d'état dans le troisième arbre numérique.

5. Système (300) selon la revendication 4, dans lequel les premier, deuxième et troisième arbres numériques, en combinaison, maintiennent un état qui est associé aux comptes d'utilisateurs associés au premier contrat intelligent; et/ou
dans lequel le premier code spécifie que les données d'état associées aux comptes d'utilisateurs dans une première région géographique doivent être stockées dans le premier arbre numérique, le deuxième code spécifie que les données d'état associées aux comptes d'utilisateurs dans une deuxième région géographique doivent être stockées dans le deuxième arbre numérique, et le troisième code spécifie que les données d'état associées aux comptes d'utilisateurs dans une troisième région géographique doivent être stockées dans le troisième arbre numérique.

6. Système (300) selon l'une quelconque des revendications 1 à 5, dans lequel un deuxième contrat intelligent parmi la pluralité de contrats intelligents comprend:
un quatrième code qui identifie des quatrièmes données d'état et un quatrième arbre numérique parmi la pluralité d'arbres numériques pour stocker les quatrièmes données d'état;
dans lequel les premier et deuxième contrats intelligents sont associés à une même chaîne de blocs, et les premier et quatrième arbres numériques, en combinaison, maintiennent un état qui stocke les données d'état des comptes d'utilisateurs associés aux premier et deuxième contrats intelligents;
dans lequel le compilateur est configuré pour compiler le deuxième contrat intelligent en deuxième bytecode; et
dans lequel le compilateur est configuré pour reconnaître et compiler le quatrième code de telle sorte que le deuxième bytecode, lorsqu'il est exécuté par la machine virtuelle, provoque le stockage des quatrièmes données d'état dans le quatrième arbre numérique.

7. Système (300) selon l'une quelconque des revendications 1 à 6, dans lequel le premier code comprend une première adresse du premier arbre numérique, et le compilateur est configuré pour compiler le premier contrat intelligent en un premier bytecode de telle sorte que le premier bytecode, lorsqu'il est exécuté par la machine virtuelle, provoque le stockage des premières données d'état dans le premier arbre numérique ayant la première adresse.

8. Système (300) selon la revendication 7, dans lequel la première adresse est représentée par une valeur constante; ou dans lequel la première adresse est déterminée par au moins une fonction booléenne ou une fonction mathématique; ou dans lequel la première adresse est déterminée par un ensemble de règles comprenant une ou plusieurs règles; ou dans lequel la première adresse est déterminée à une première période de temps lorsque le premier contrat intelligent est compilé, ou à une deuxième période de temps lorsque le premier bytecode est exécuté.

9. Système (300) selon l'une quelconque des revendications 1 à 8, dans lequel le deuxième code comprend une deuxième adresse du deuxième arbre numérique, et le compilateur est configuré pour compiler le premier contrat intelligent dans le premier bytecode de telle sorte que le premier bytecode, lorsqu'il est exécuté par la machine virtuelle, provoque le stockage des deuxièmes données d'état dans le deuxième arbre numérique ayant la deuxième adresse ; éventuellement dans lequel au moins l'un des points suivants est satisfait:
(i) la deuxième adresse est représentée par une valeur constante;
(ii) la deuxième adresse est déterminée par une fonction booléenne;
(iii) la deuxième adresse est déterminée par une fonction mathématique;
(iv) la deuxième adresse est déterminée par un ensemble de règles comprenant une ou plusieurs règles;
(v) la deuxième adresse est déterminée à un premier moment où le deuxième contrat intelligent est compilé; ou
(vi) la deuxième adresse est déterminée à un deuxième moment lorsque le deuxième bytecode est exécuté.

10. Système (300) selon l'une quelconque des revendications 4 à 9, dans lequel le troisième code comprend une troisième adresse du troisième arbre numérique, et le compilateur est configuré pour compiler le premier contrat intelligent dans le premier bytecode de telle sorte que le premier bytecode, lorsqu'il est exécuté par la machine virtuelle, provoque le stockage des troisièmes données d'état dans le troisième arbre numérique ayant la troisième adresse.

11. Système (300) selon l'une quelconque des revendications 6 à 10, dans lequel le quatrième code comprend une quatrième adresse du quatrième arbre numérique, et le compilateur est configuré pour compiler le deuxième contrat intelligent dans le deuxième bytecode de telle sorte que le deuxième bytecode, lorsqu'il est exécuté par la machine virtuelle, provoque le stockage des quatrièmes données d'état dans le quatrième arbre numérique ayant la quatrième adresse.

12. Système (300) selon l'une quelconque des revendications 1 à 11, comprenant un ou plusieurs ordinateurs dans un ou plusieurs emplacements, et étant configuré pour:
déterminer une première valeur de hachage racine du premier arbre numérique;
déterminer une deuxième valeur de hachage racine du deuxième arbre numérique; et
déterminer une valeur de hachage racine d'état sur la base de la première valeur de hachage racine et de la deuxième valeur de hachage racine; éventuellement, où les un ou plusieurs ordinateurs sont configurés pour:
déterminer une troisième valeur de hachage racine du troisième arbre numérique; et
déterminer la valeur de hachage racine d'état sur la base de la première valeur de hachage racine, de la deuxième valeur de hachage racine et de la troisième valeur de hachage racine; et/ou dans lequel la valeur de hachage racine d'état représente une empreinte numérique de l'état ou des états des comptes d'utilisateurs, du contrat intelligent ou des contrats intelligents associés à l'état.

13. Système (300) selon l'une quelconque des revendications 1 à 12, dans lequel le premier contrat intelligent spécifie que le premier arbre numérique est stocké sur un premier dispositif de stockage, et que le deuxième arbre numérique est stocké sur un deuxième dispositif de stockage.

14. Système (300) selon l'une quelconque des revendications 1 à 13, dans lequel le premier contrat intelligent spécifie que le premier arbre numérique et le deuxième arbre numérique sont tous deux stockés sur un premier dispositif de stockage.

15. Système (300) selon l'une quelconque des revendications 1 à 14, dans lequel le système comprend un ou plusieurs ordinateurs dans un ou plusieurs emplacements et configurés pour générer un index des données stockées dans le premier dispositif de stockage, et stocker l'index dans les premier et deuxième arbres numériques; et/ou dans lequel chaque arbre numérique comprend au moins un arbre de Merkle, un arbre de Patricia, un arbre de Merkle Patricia, un arbre de Merkle Patricia modifié ou un arbre de Bucket.
